# EUROPEAN PATENT APPLICATION

(11) **EP 0 987 625 A2**
(43) Date of publication of application: **22.03.2000**
(21) Application number: 99202840.7
(22) Date of filing: 01.09.1999
(51) Int. Cl.: G06F 9/38, G06F 12/08

(54) **Microprocessor with a plurality of functional units and cache levels**

(30) Priority: 01.09.1998 US 98793 P
(71) Applicant: Texas Instruments Incorporated, Dallas, Texas 75251 (US)
(72) Inventor: Simar, Laurence R., Richmond, Texas 77469 (US)
(74) Representative: Holt, Michael

(57) **Abstract**

A microprocessor is provided that includes a first set of functional units capable of performing parallel data operations, a second set of functional units capable of performing parallel data operations, a data interconnection path connecting said first and second functional units, and a plurality of cache levels interconnected with said first and second functional units.

## Description

### Technical Field of the Invention

The present invention relates generally to the field of data processing devices, electronic processing and control systems and methods of their manufacture and operation.

### Background of the Invention

A microprocessor device is a central processing unit or CPU for a digital processor that is usually contained in a single semiconductor integrated circuit or "chip" fabricated by MOS/LSI technology, as shown in U.S. Patent No. 3,757,306, issued to Gary W. Boone and assigned to Texas Instruments Incorporated. The Boone patent shows a single-chip 8-bit CPU including a parallel ALU, registers for data and addresses, an instruction register and a control decoder, all interconnected using the von Neumann architecture and employing a bi-directional parallel bus for data, address and instructions. U.S. Patent No. 4,074,351, issued to Gary W. Boone and Michael J. Cochran, assigned to Texas Instruments Incorporated, shows a single-chip "microcomputer" type device that contains a 4-bit parallel ALU and its control circuitry, with on-chip ROM for program storage and on-chip RAM for data storage, constructed according to the Harvard architecture. The term microprocessor usually refers to a device employing external memory for program and data storage, while the term microcomputer refers to a device with on-chip ROM and RAM for program and data storage. In describing the instant invention, the term "microcomputer" will be used to include both types of devices, and the term "microprocessor" will be primarily used to refer to microcomputers without on-chip ROM. However, since the terms are often used interchangeably in the art it should be understood that the use of one of the other of these terms in this description should not be considered as restrictive as regards the features disclosed by the teachings of the present application.

Modern microcomputers can be grouped into two general classes, namely general-purpose microprocessors and special-purpose micro-computers/microprocessors. General-purpose microprocessors, such as the M68020 manufactured by Motorola Inc. are designed to be programmable by the user to perform any of a wide range of tasks, and are therefore often used as the central processing unit in equipment such as personal computers. Such general-purpose microprocessors, while having good performance for a wide range of arithmetic and logical functions, are of course not specifically designed for or adapted to any particular one of such functions. In contrast, special-purpose microcomputers are designed to provide performance improvement for specific predetermined arithmetic and logical functions for which the user intends to use the microcomputer. By knowing the primary function of the microcomputer, the designer can structure the microcomputer in such a manner that the performance of the specific function by the special-purpose microcomputer greatly exceeds the performance of the same function by the general-purpose microprocessor regardless of the program created by the user.

One such function, which can be performed by a special-purpose microcomputer at a greatly improved rate is digital signal processing, specifically the computations required for the implementation of digital filters and for performing Fast Fourier Transforms. Because such computations consist to a large degree of repetitive operations such as integer multiply, multiple-bit shift, and multiply-and-add, a special -purpose microcomputer can be constructed specifically adapted to these repetitive functions. Such a special-purpose microcomputer is described in U.S. Patent No. 4,577,282, assigned to Texas Instruments Incorporated and incorporated herein by reference. The specific design of a microcomputer for these computations has resulted in sufficient performance improvement over general-purpose microprocessors to allow the use of such special-purpose microcomputers in real-time applications, such as speech and image processing.

Digital signal processing applications, because of their computation intensive nature, also are rather intensive in memory access operations. Accordingly, the overall performance of the microcomputer in performing a digital signal processing function is not only determined by the number of specific computations performed per unit time, but also by the speed at which the microcomputer can retrieve data from, and store data to, system memory. Prior special-purpose microcomputers, such as the one described in said U.S. Patent No. 4,577,282, have utilized modified versions of a Harvard architecture, so that the access to data memory may be made independent from, and simultaneous with, the access of program memory. Such architecture has, of course provided for additional performance improvement.

The increasing demands of technology and the marketplace make desirable even further structural and process improvements in processing devices, application systems and methods of operation and manufacture.

The teachings of the present application disclose an improved data processing device, system and method that reduce competition for processor resources between data acquisition, or output, functions and intensive computation operations.

The teachings of the present application further disclose an improved data processing device, system and method that reduce housekeeping overhead in a processor in high sample rate digital signal processing applications.

The teachings of the present application yet further disclose an improved data processing device, system and method for streamlining interrupt handling and subroutine calls and returns.

The teachings of the present application yet further disclose an improved data processing device, system and method that increase processor bandwidth in telecommunications, control systems and other applications.

### Summary of the Invention

The present application provides an improved data processing device that includes a very long instruction word (VLIW) electronic processor with multiple cache memories.

The present application further discloses a system for signal processing that includes an analog-to-digital converter for producing a digital signal corresponding to an analog input by a conversion process. Digital processing circuitry having a memory and a processor connected to the analog-to-digital converter is responsive to the interrupt signal to enter the digital signal into memory. The processor includes registers sets, at least one multiplier, at least one arithmetic logic unit, and multiple cache memories.

### Description of the Drawings

The preferred embodiments of the invention as well as other features and advantages thereof will be best understood by reference to the detailed description which follows, read in conjunction with the accompanying drawings, wherein:

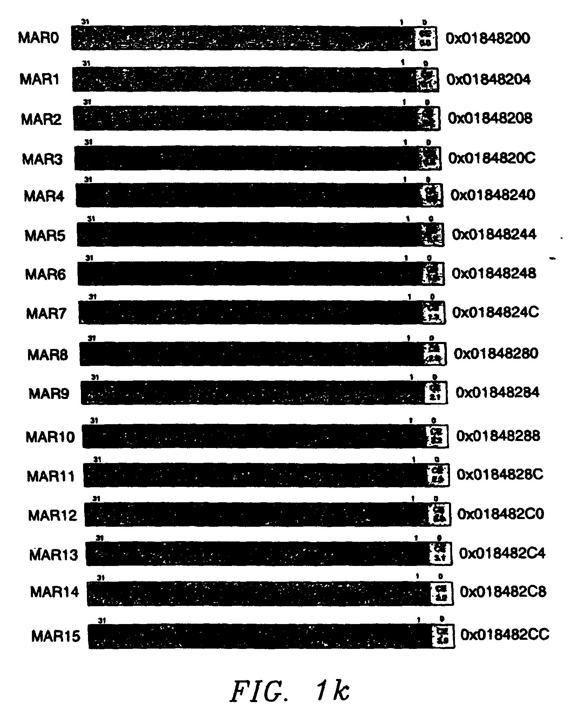

Figure 1-1 shows a DSP Architecture;

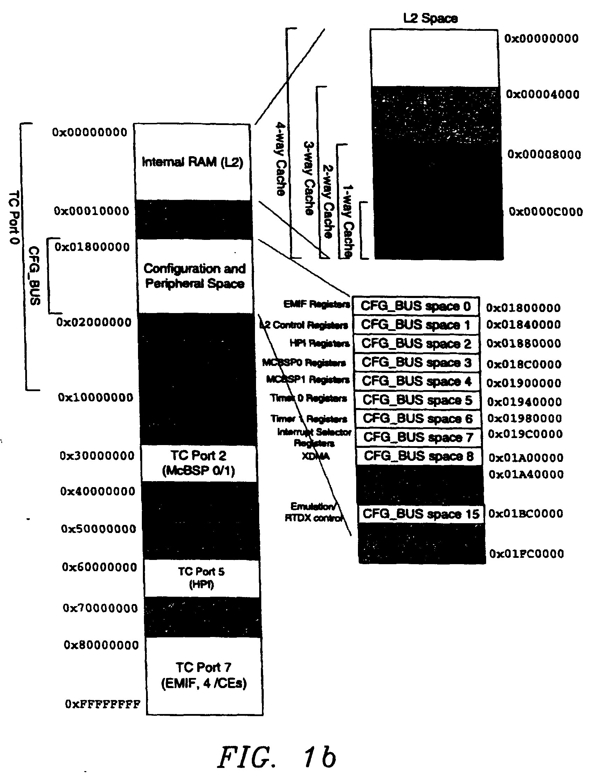

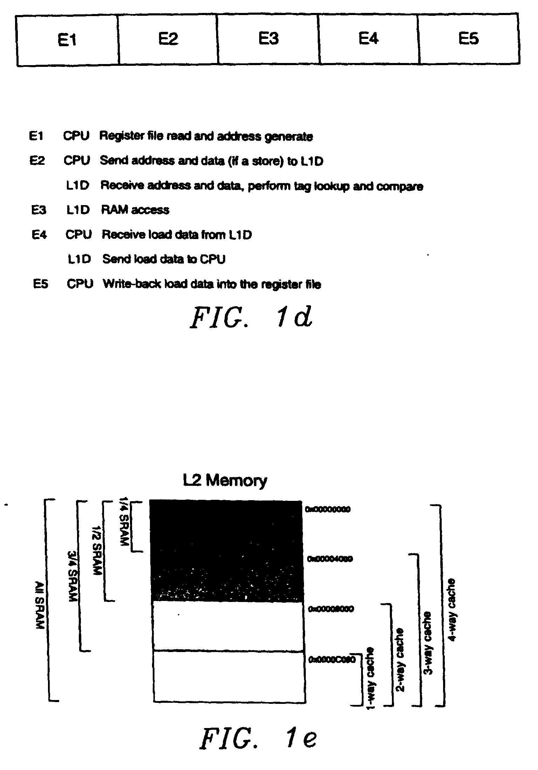

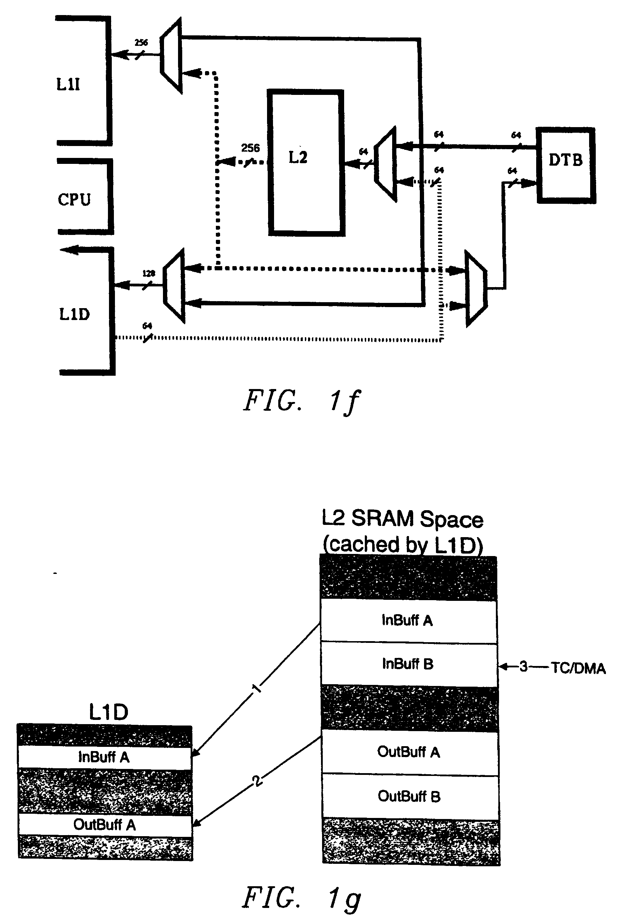

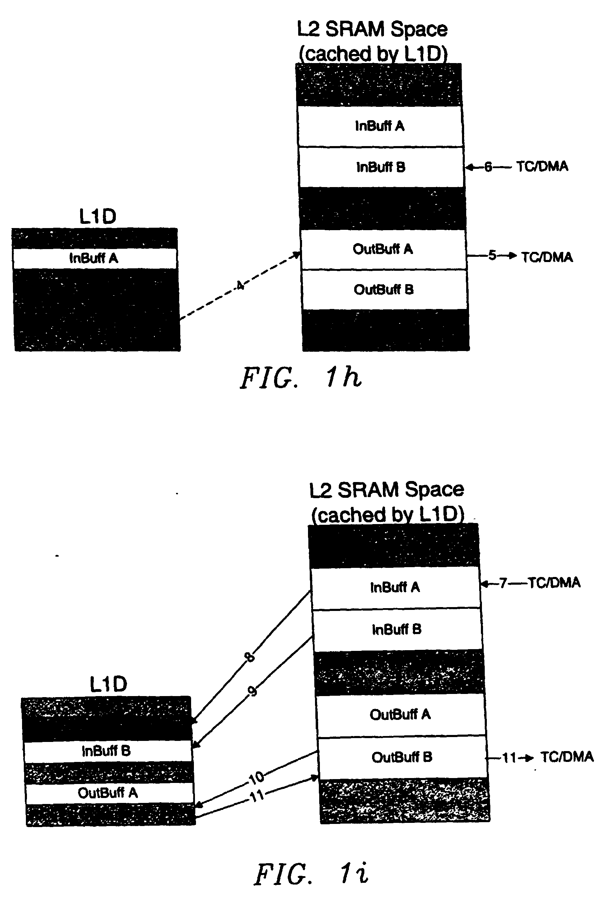

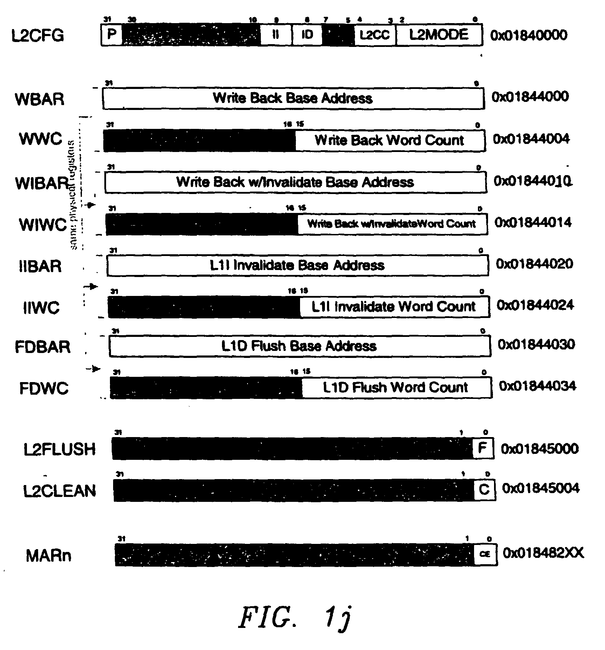

Figure 1-2 shows a Memory Map;
Figure 1-3 shows an Instruction Cache/CPU Pipeline;
Figure 1-4 shows a Data Cache/CPU Pipeline;
Figure 1-5 shows L2 Cache/SRAM Configurations;
Figure 1-6 is an L2 Block Diagram;
Figure 1-7 shows a Coherency Example (Part 1/3);
Figure 1-8 shows a Coherency Example (Part 2/3);
Figure 1-9 shows a Coherency Example (Part 3/3);
Figure 1-10 shows L2 Control Registers;
Figure 1-11 shows Memory Attribute Registers (MARs);
Figure 2-1 shows a CFG_BUS Read Cycle;
Figure 2-2 shows a CFG_BUS Write Cycle;

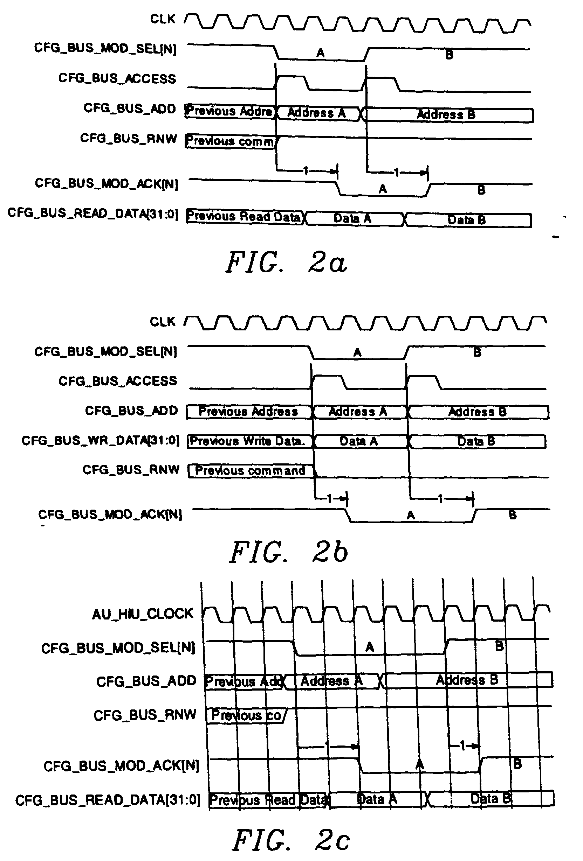

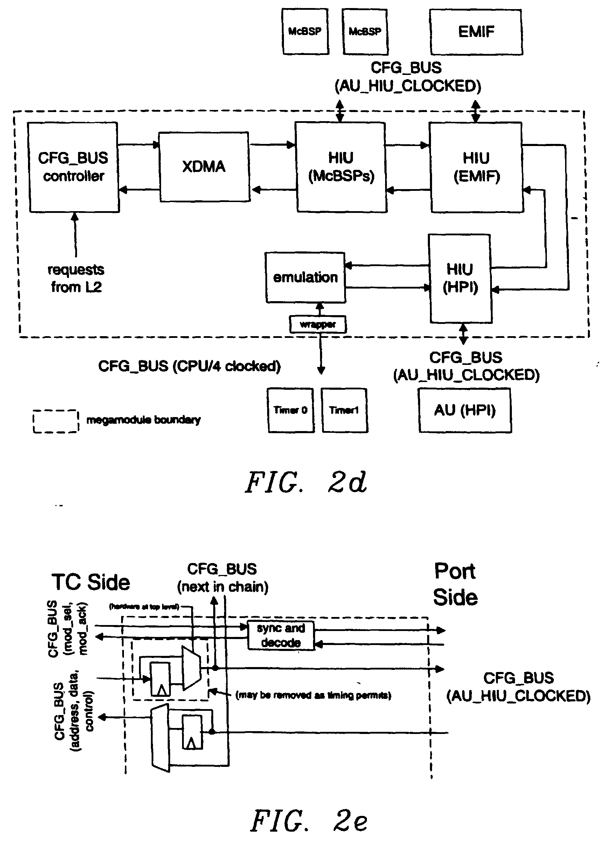

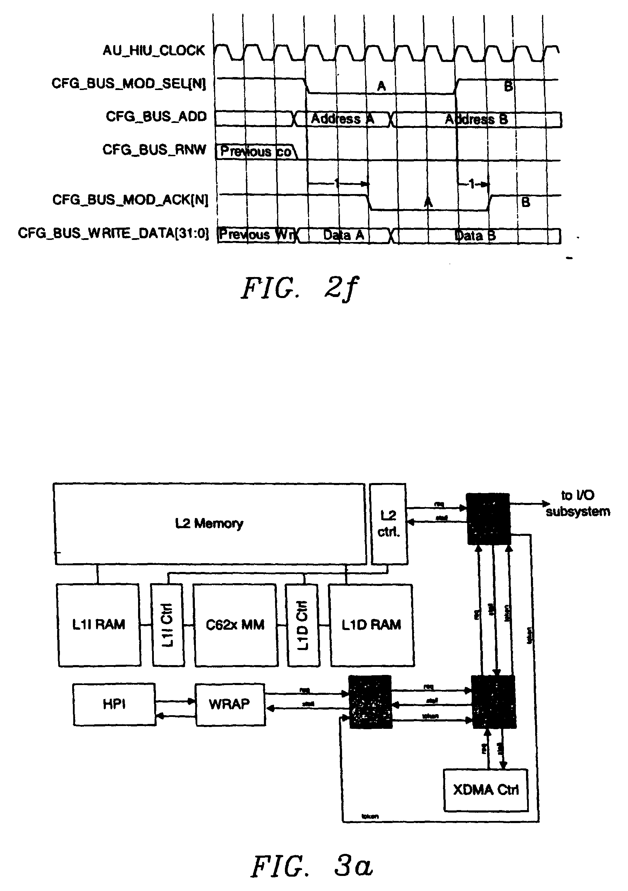

Figure 2-3 shows a CFG_BUS Flow;
Figure 2-4 shows a CFG_BUS HIU Architecture;
Figure 2-5 shows a CFG_BUS Read in AU Clock Domain;
Figure 2-6 shows a CFG_BUS Write in AU Clock Domain;
Figure 3-1 shows a TR Bus;
Figure 3-2 shows a TR Packet;
Figure 3-3 shows TR Node Timing (Local Interface);

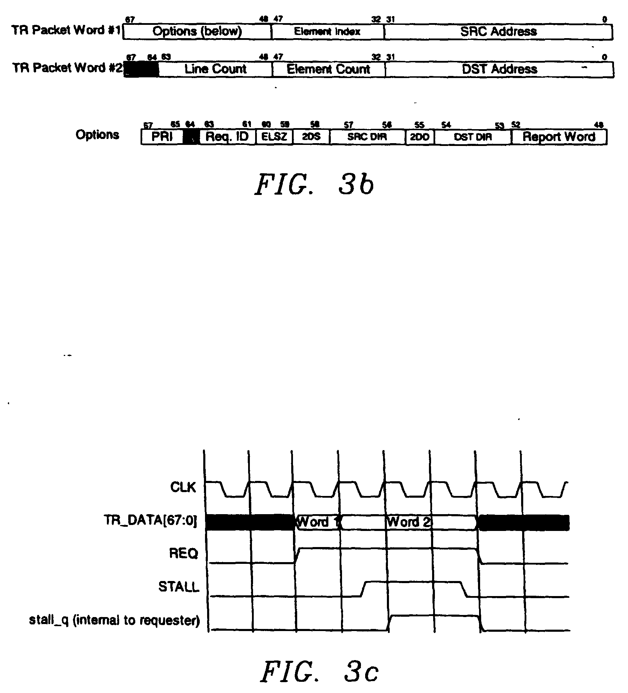

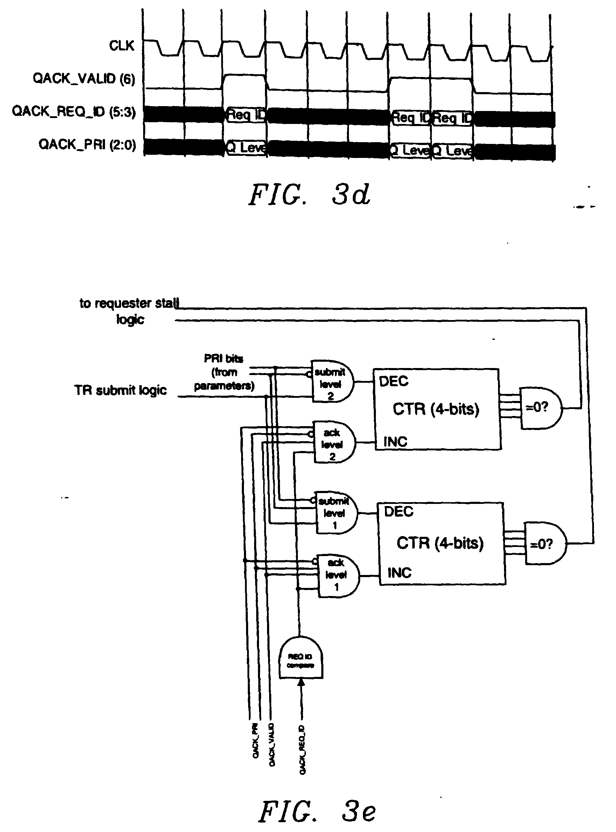

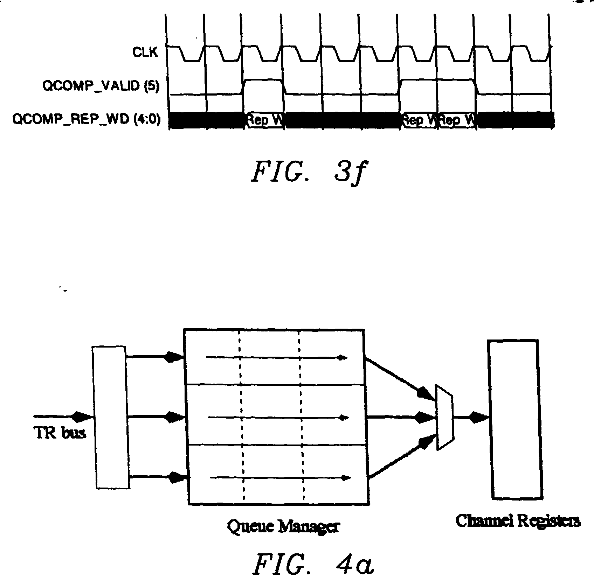

Figure 3-4 shows Queue Acknowledge (QACK) Bus Timing;
Figure 3-5 shows Allocation Counter Operation (Functional);
Figure 3-6 shows Queue Complete (QCOMP) Bus Timing;
Figure 4-1 shows a Queue Manager;
Figure 4-2 shows TC Pipelines;
Figure 4-3 shows an HIU Architecture;
Figure 4-4 shows an AU-HIU Interface;

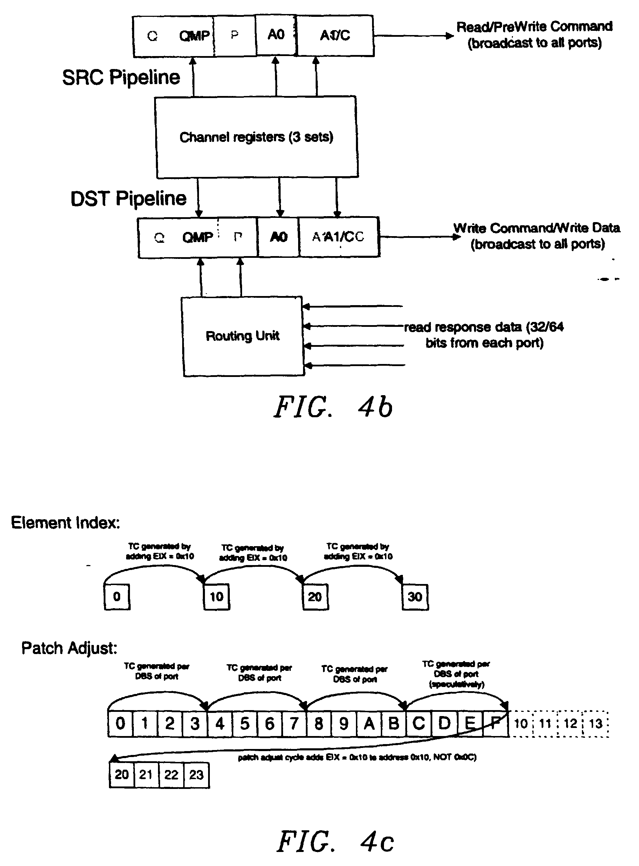

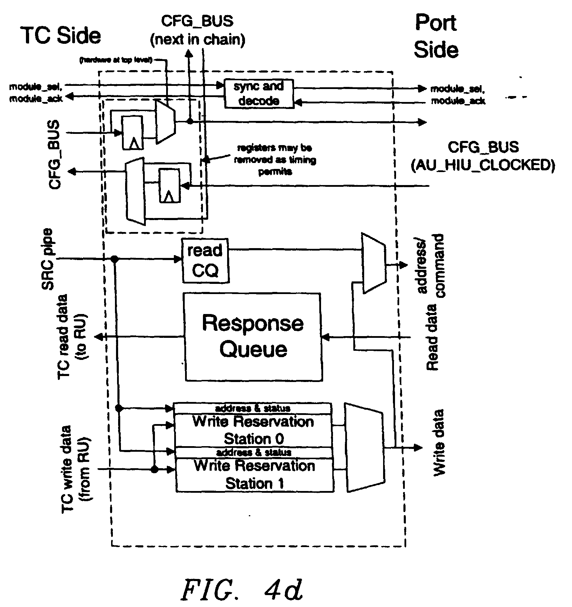

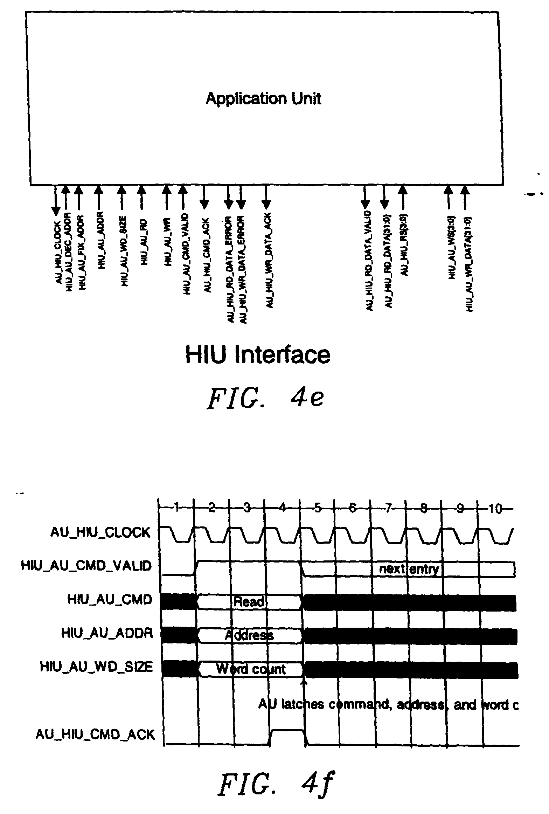

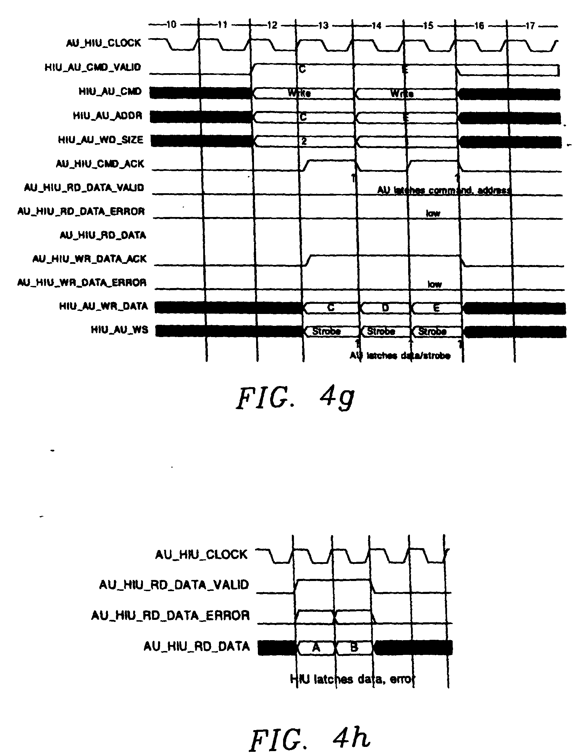

Figure 4-5 shows an AU Command Accept Cycle;
Figure 4-6 shows an AU Write Data Acknowledge;
Figure 4-7 shows an AU Read Data Valid/Error;

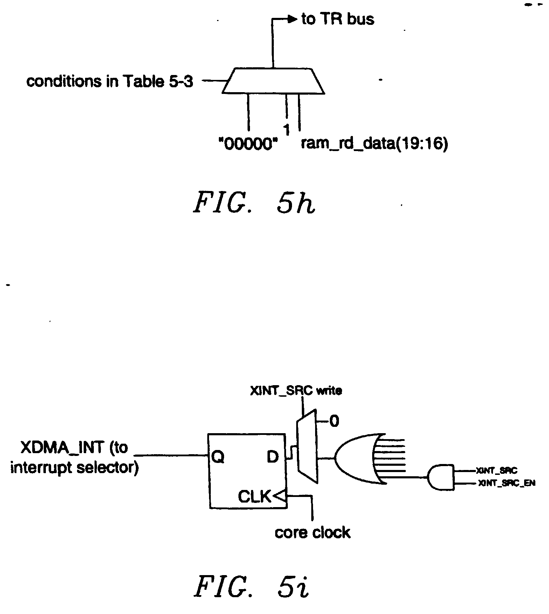

Figure 5-1 shows an XDMA Controller;
Figure 5-2 shows XDMA Registers (Functional Diagram);
Figure 5-3 shows XDMA Control Registers;
Figure 5-4 shows XDMA Parameter Storage;
Figure 5-5 shows an XDMA. Parameter RAM and Options Field;

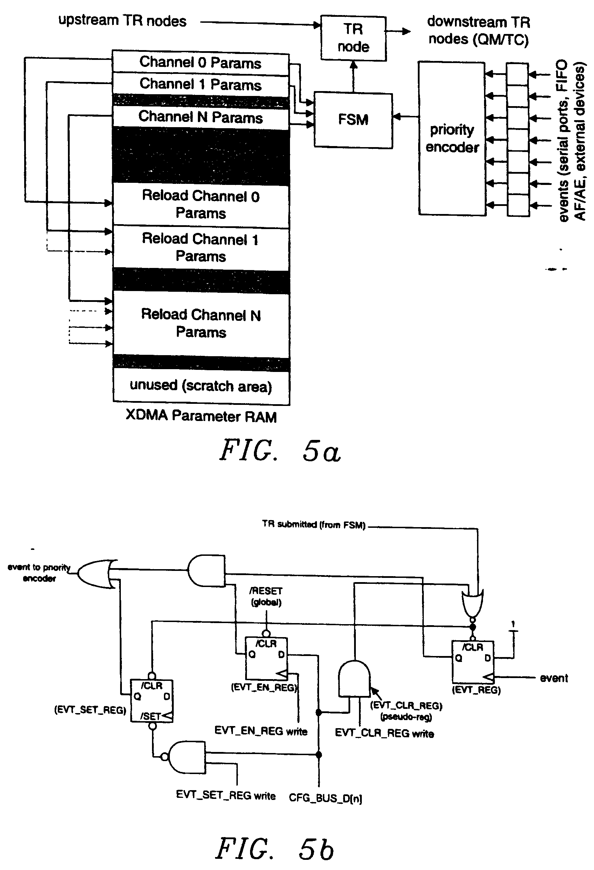

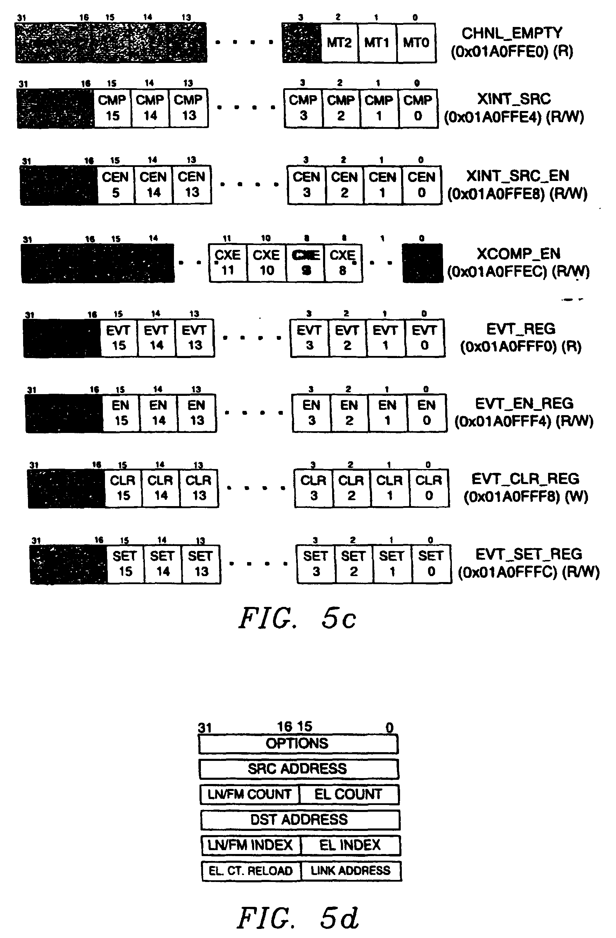

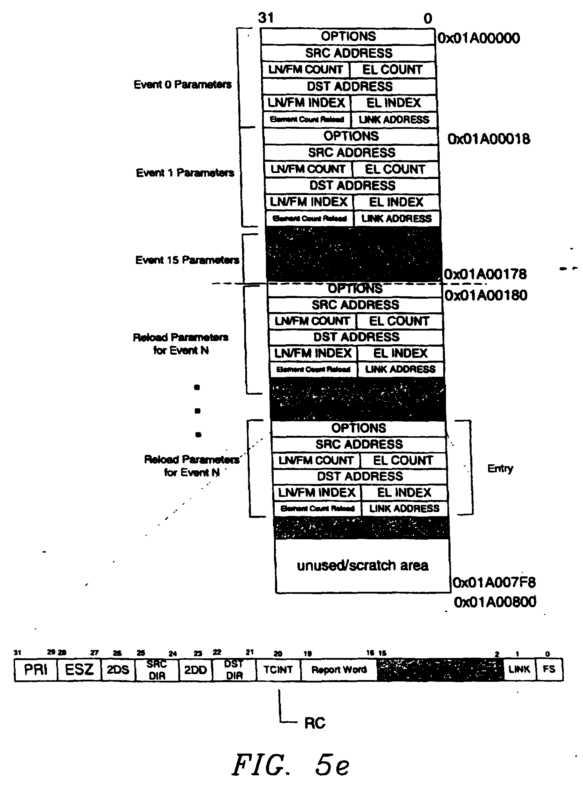

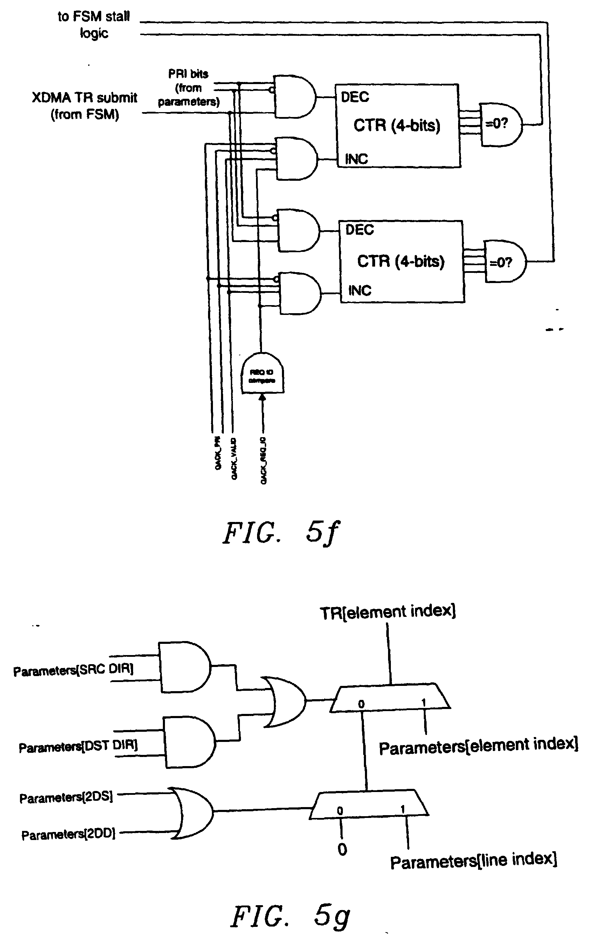

Figure 5-6 shows TR Element Index Generation;
Figure 5-7 shows TR Report Word Generation;
Figure 5-8 shows an XDMA_INT Boundary Condition;

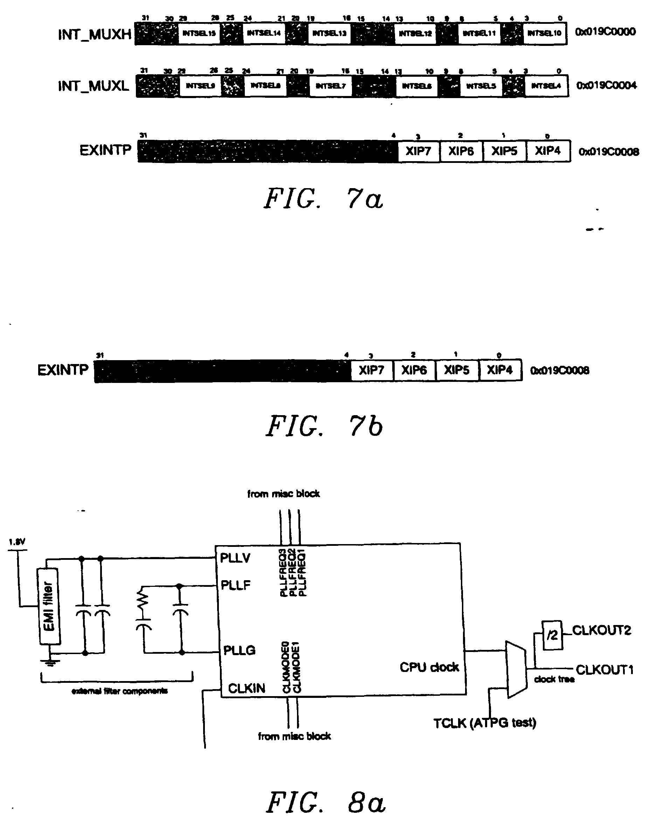

Figure 7-1 shows Interrupt MUX Control Registers;
Figure 7-2 shows an EXINTP Register;

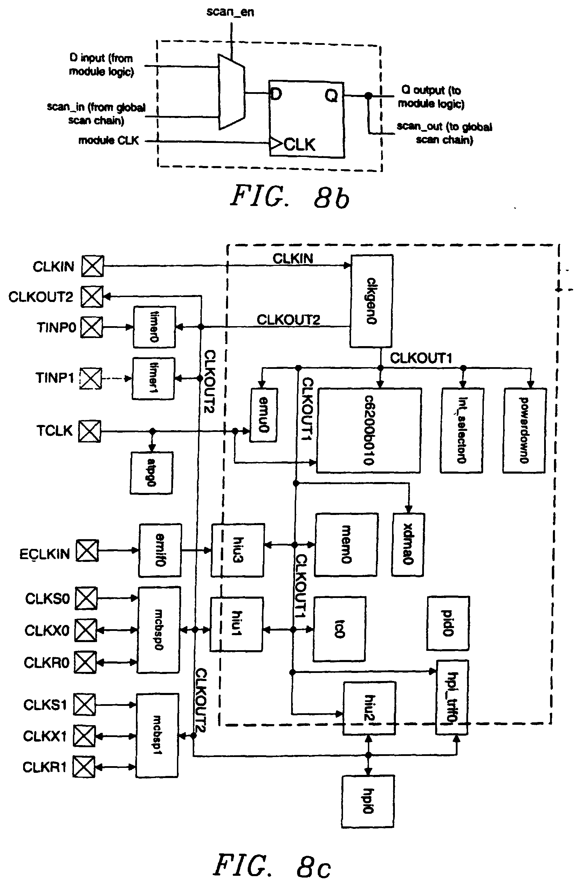

Figure 8-1 is a PLL Block Diagram;
Figure 8-2 shows a C6211 Flop Structure;
Figure 8-3 shows DSP Clock Domains;

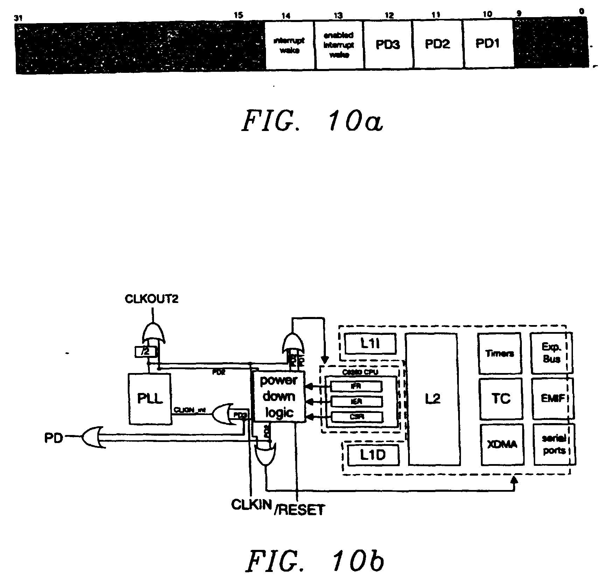

Figure 10-1 shows a CSR Power Down Field;
Figure 10-2 shows a Power Down Block (Functional);

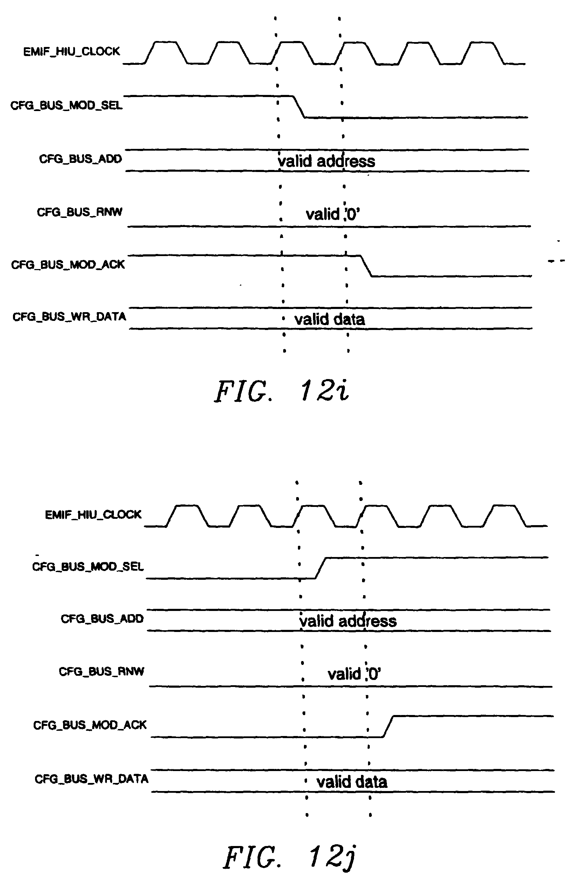

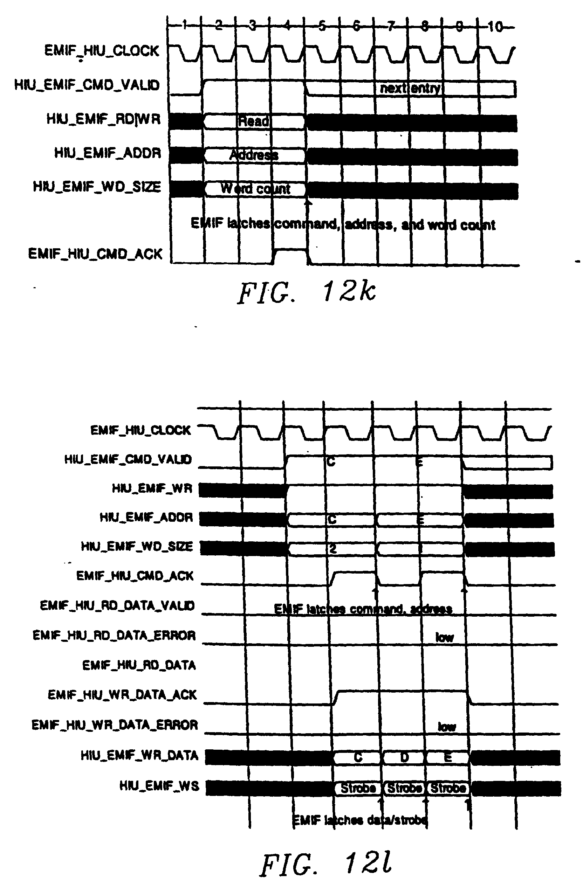

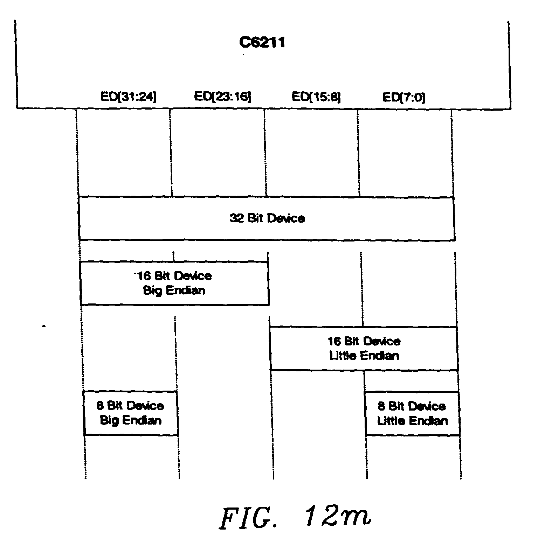

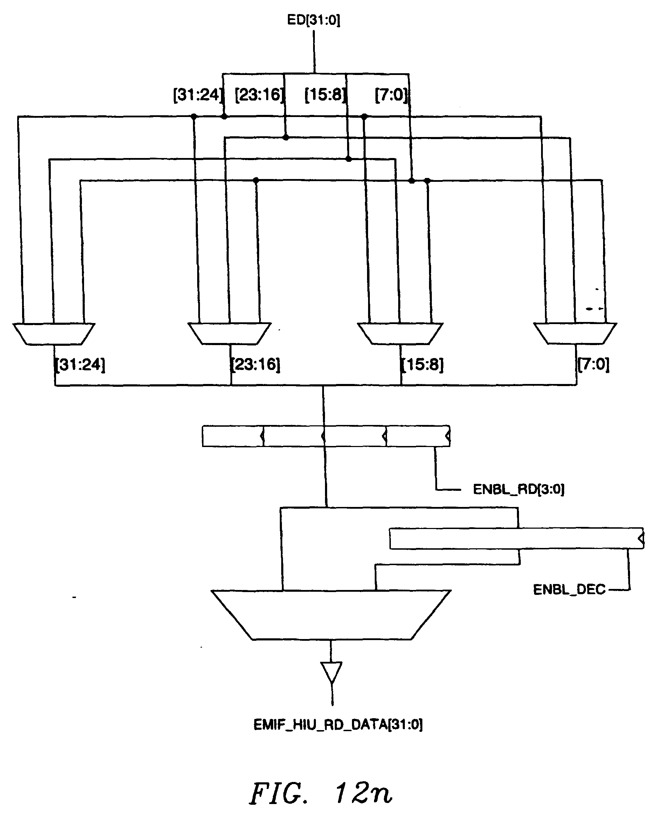

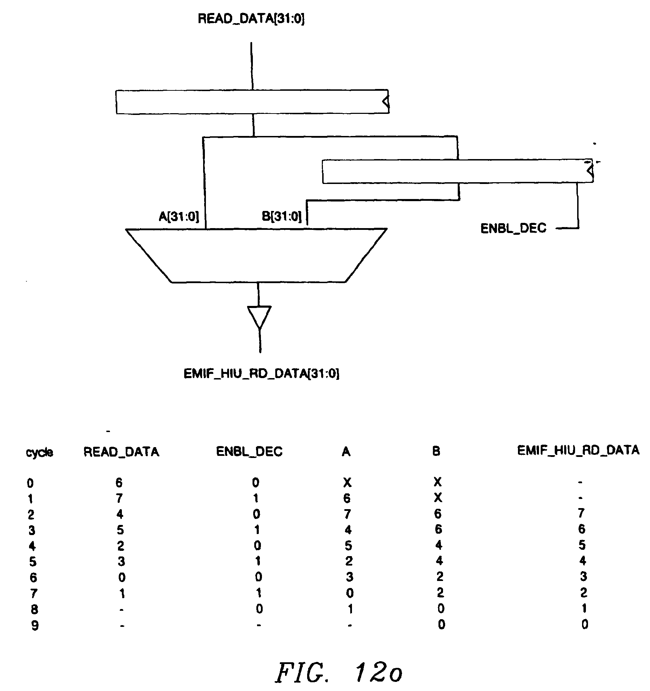

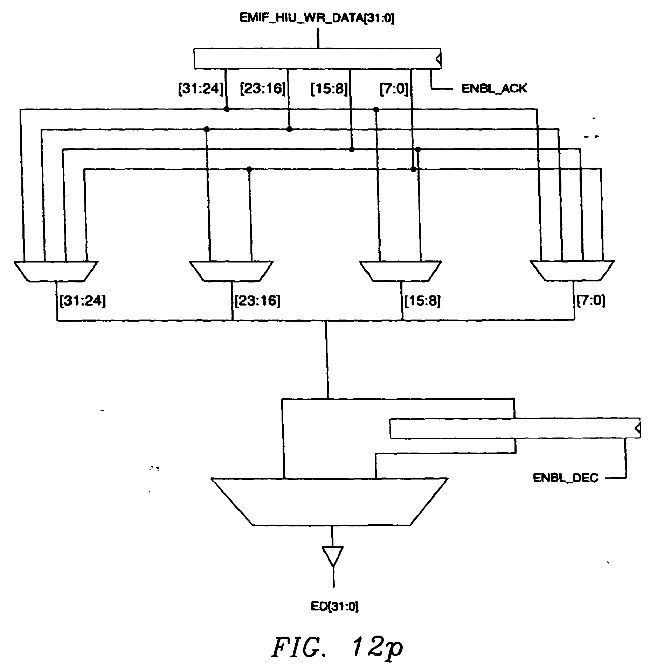

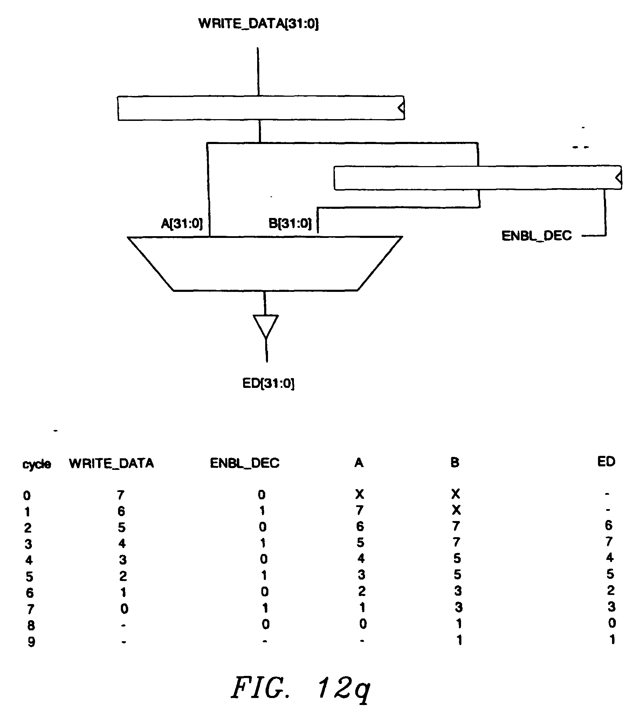

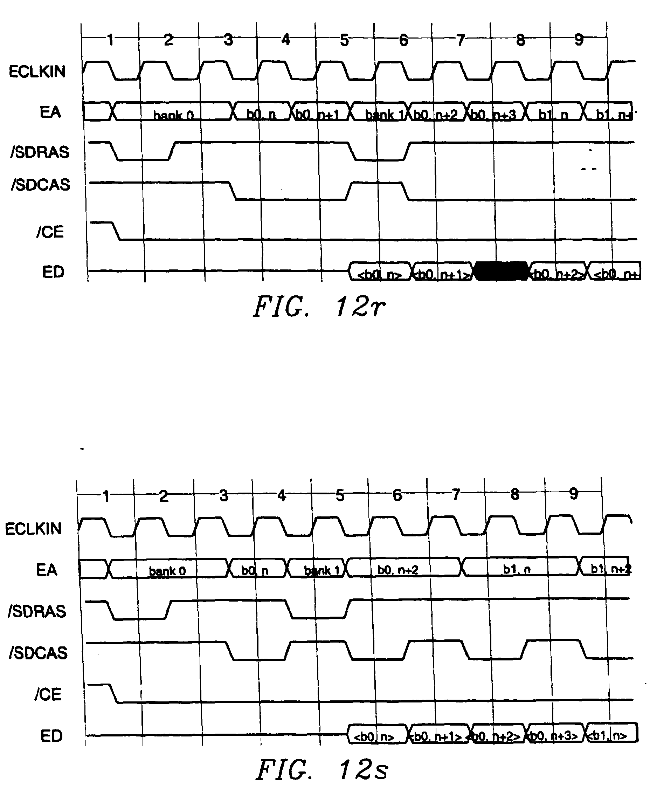

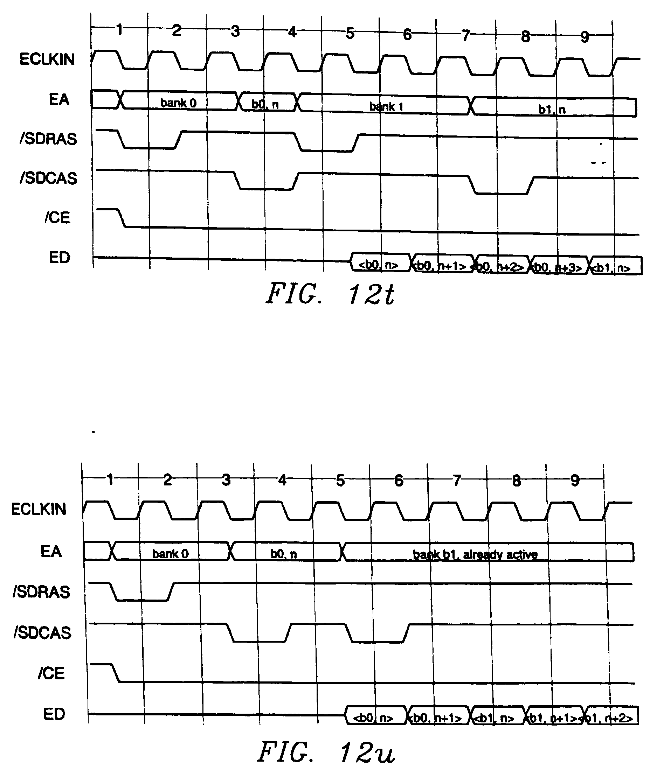

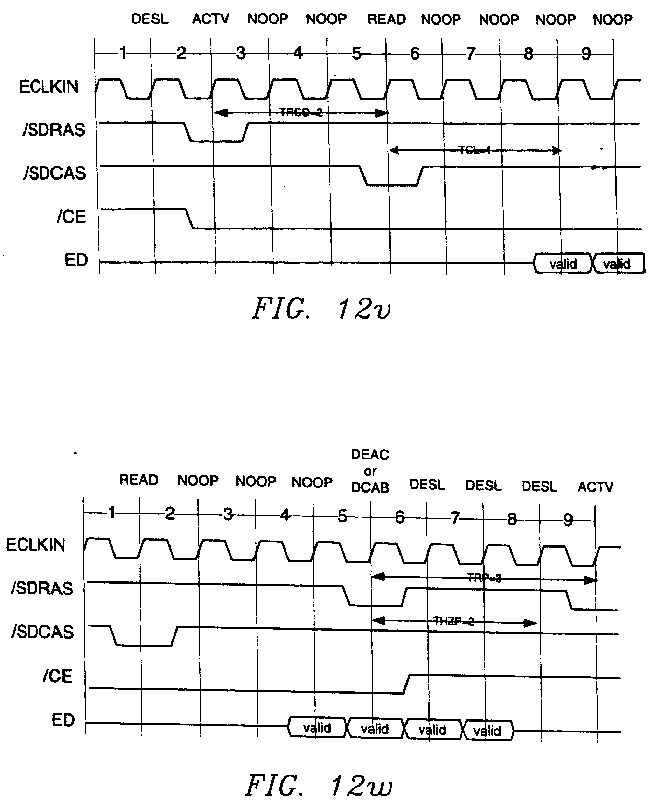

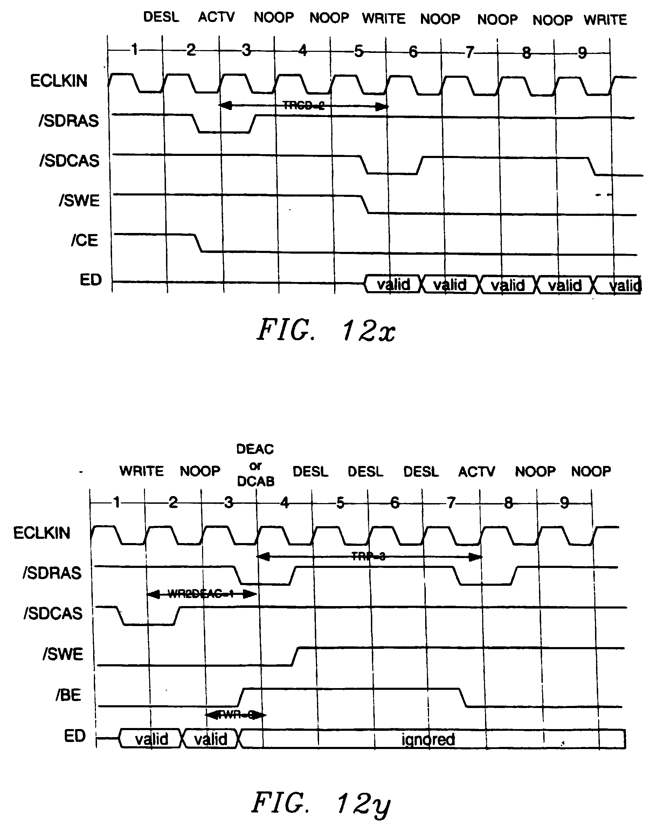

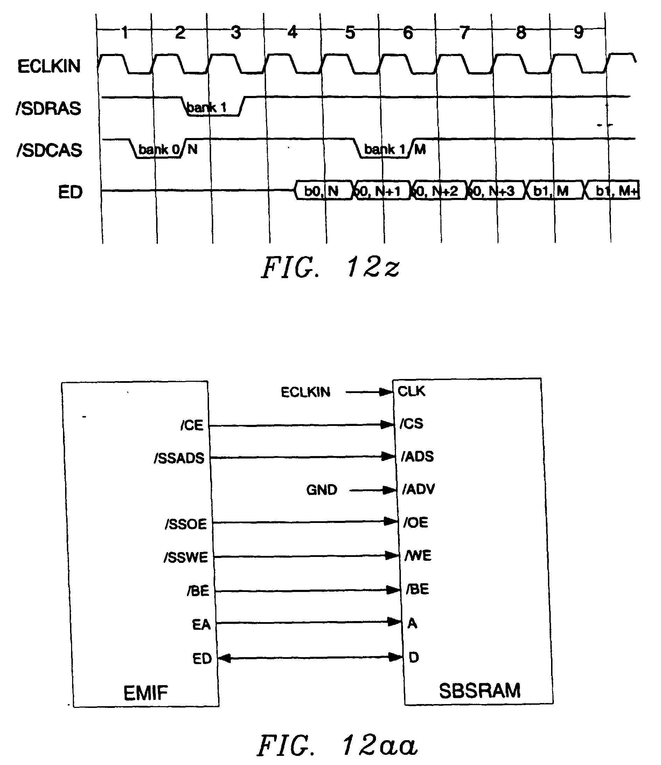

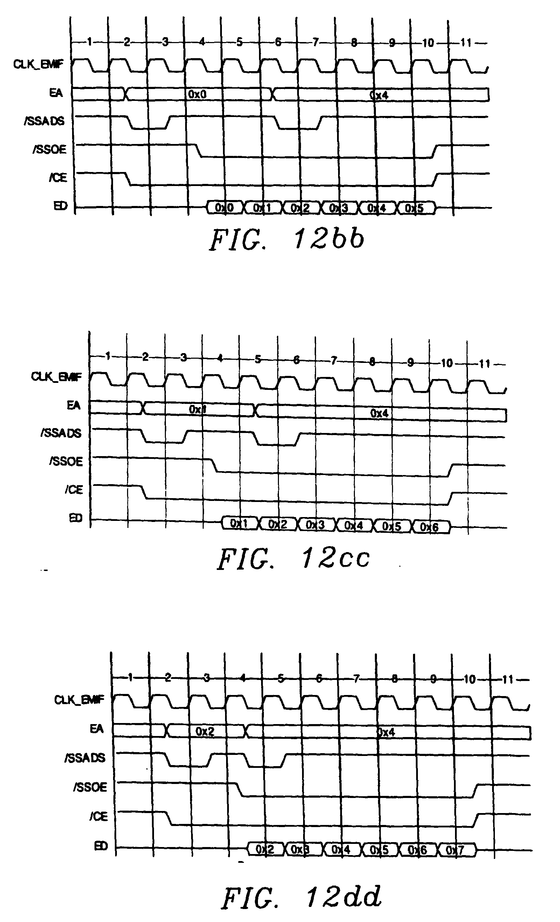

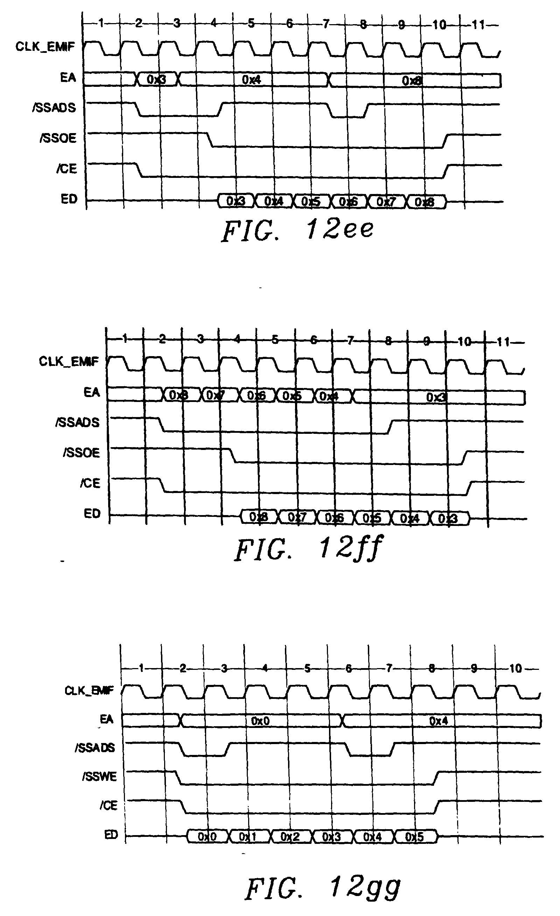

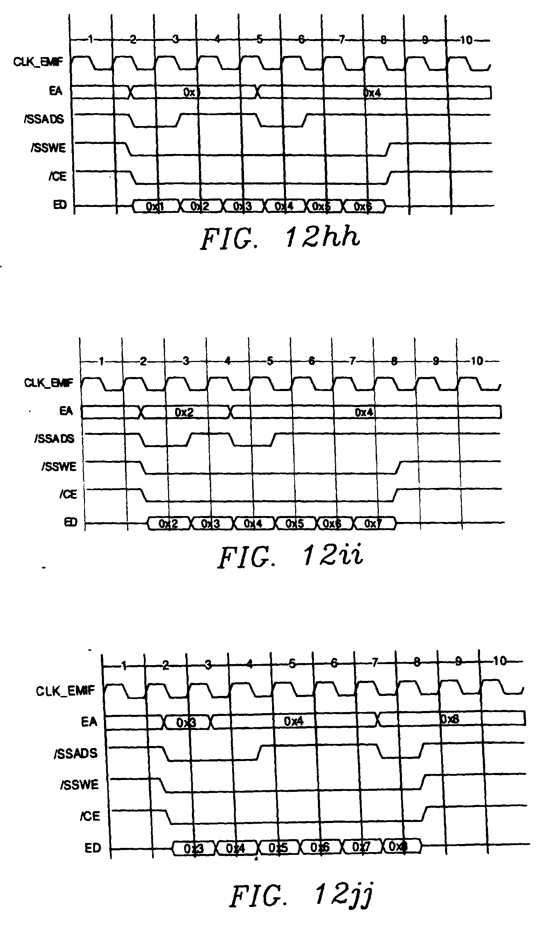

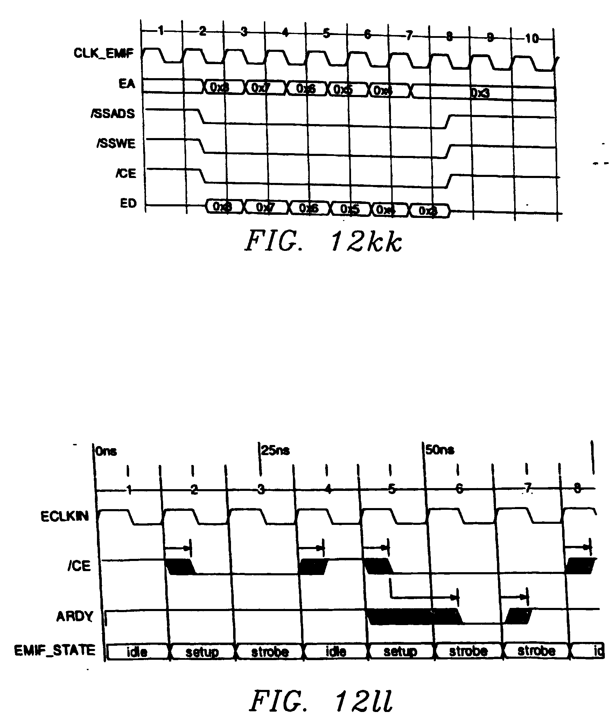

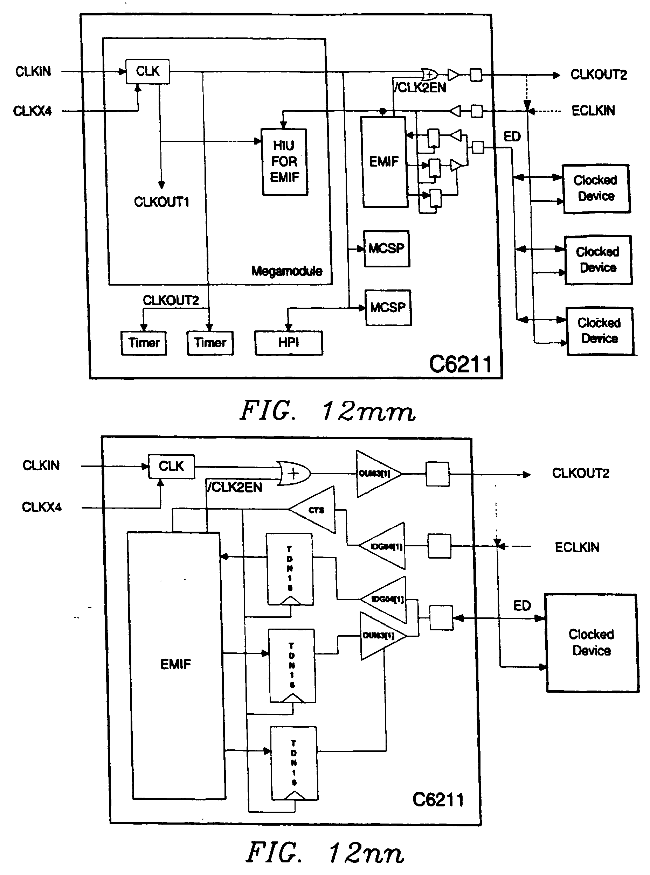

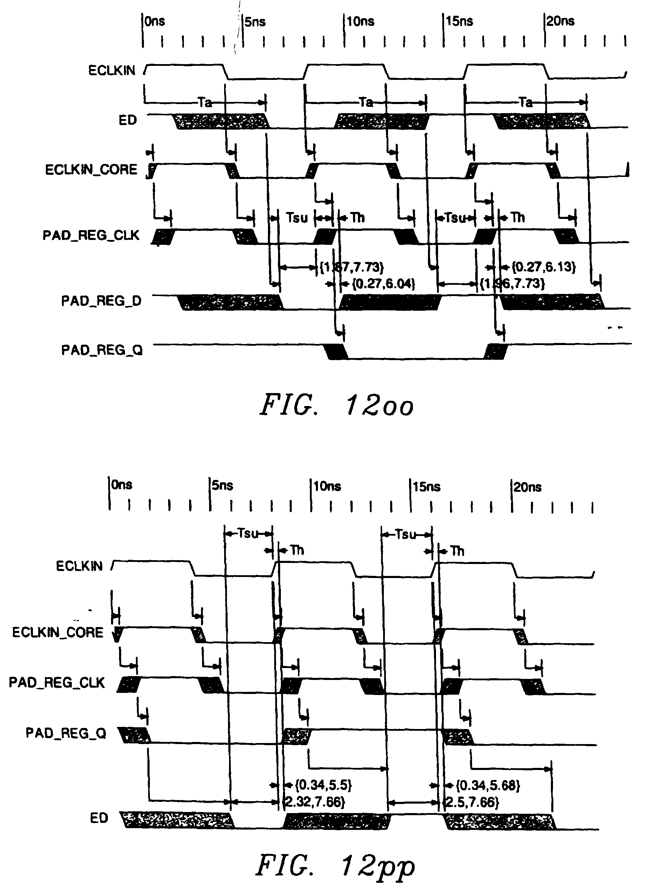

Figure 12-1 is an EMIF Block Diagram;
Figure 12-2 is an EMIF Global Control Register Diagram;
Figure 12-3 is an EMIF CE (0/1/2/3) Space Control Register Diagram;
Figure 12-4 is an EMIF SDRAM Control Register Diagram;
Figure 12-5 is an EMIF SDRAM Refresh Period Diagram;
Figure 12-6 is an EMIF SDRAM Extension Register Diagram;
Figure 12-7 shows CFG_BUS Read With Negative CFG_BUS_MOD_SEL;
Figure 12-8 shows CFG_BUS Read With Positive CFG_BUS_MOD_SEL;
Figure 12-9 shows CFG_BUS Write With Negative CFG_BUS_MOD_SEL;
Figure 12-10 shows CFG_BUS Write With Positive CFG_BUS_MOD_SEL;
Figure 12-11 shows Device Placement On The EMIF Data Bus;
Figure 12-12 shows a Read Datapath;

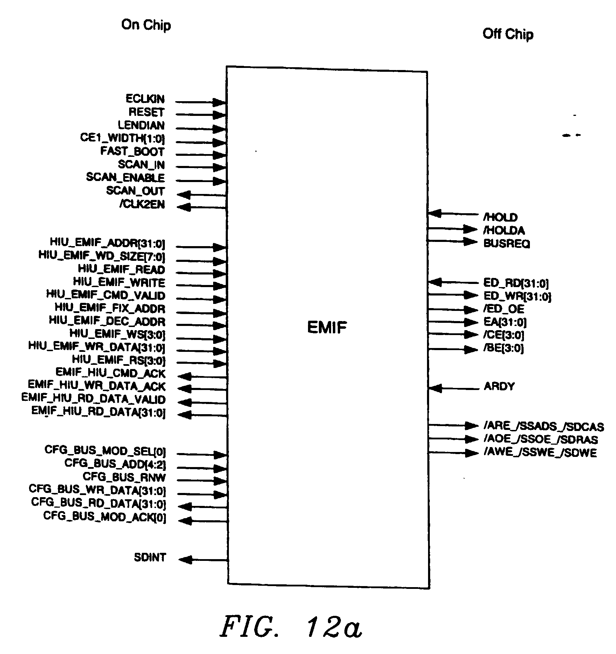

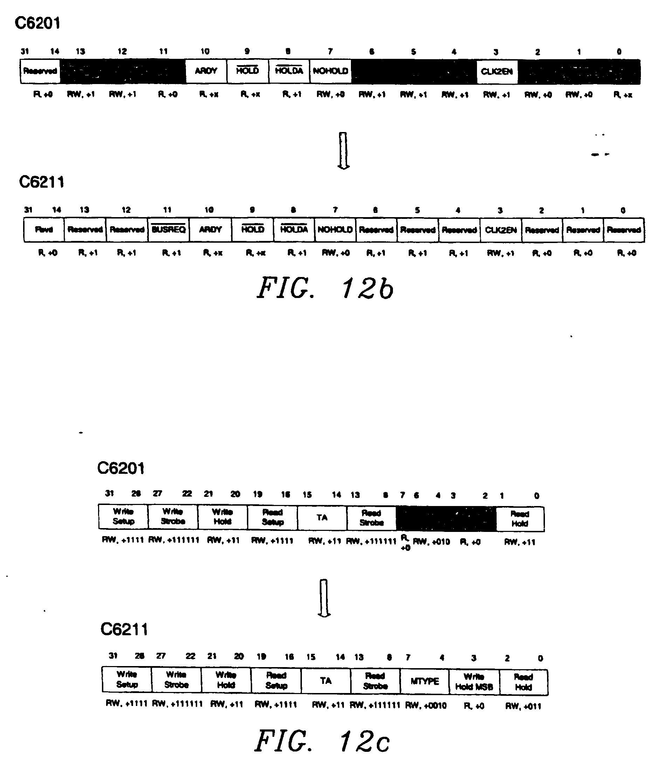

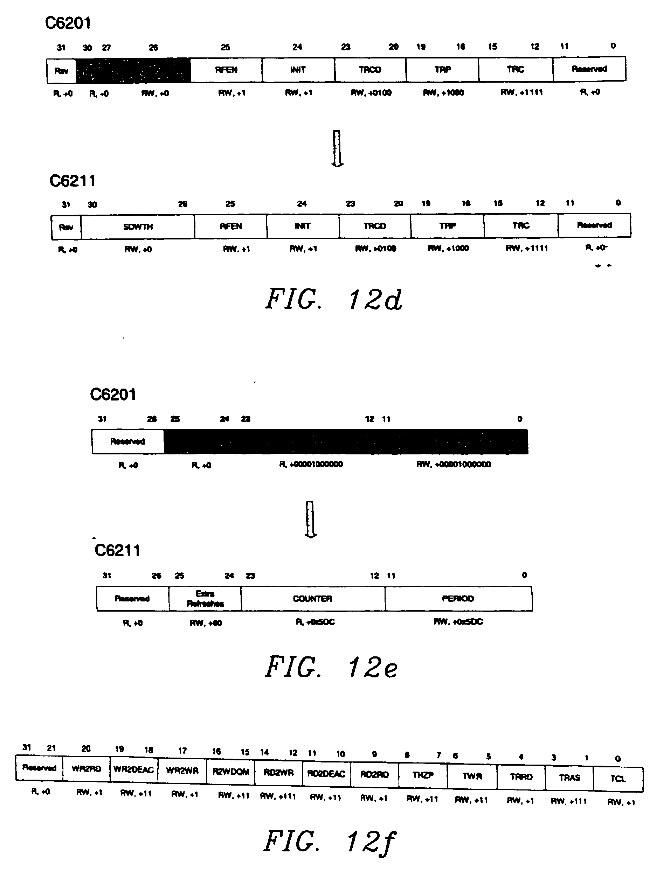

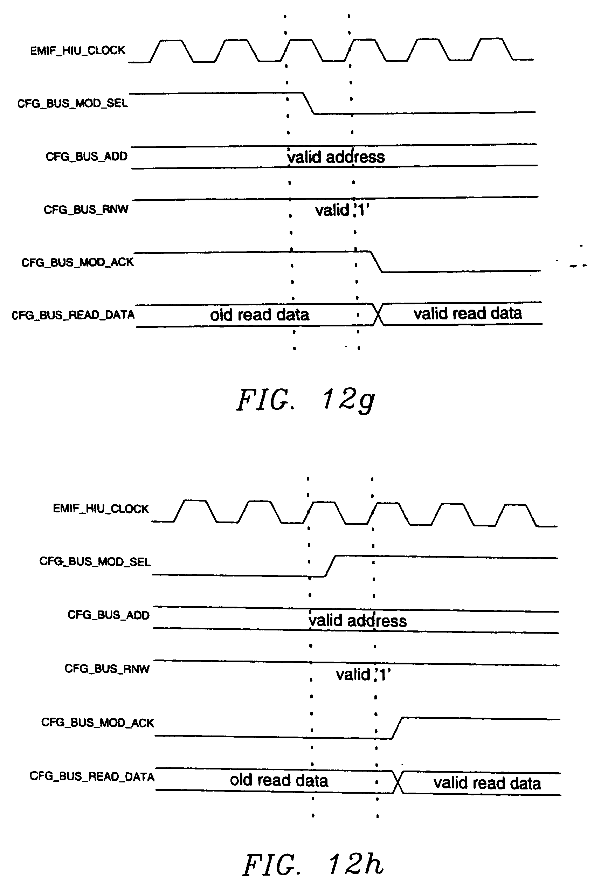

Figure 12-13 shows Decrementing Reads;
Figure 12-14 shows a Write Datapath;
Figure 12-15 shows Decrementing Writes;
Figure 12-16 Multi-bank read access with cas latency 2, burst length 1;
Figure 12-17 Multi-bank read access with cas latency 2, burst length 2;
Figure 12-18 Multi-bank read access with cas latency 2, burst length 4;
Figure 12-19 shows Two consecutive reads with cas latency 2, burst length 4;
Figure 12-20 shows a Beginning of SDRAM Read;
Figure 12-21 shows an End of SDRAM Read;
Figure 12-22 shows a Beginning of SDRAM Write;
Figure 12-23 shows an End of SDRAM Write;
Figure 12-24 shows Gapless Access While Performing Consecutive Reads;
Figure 12-25 shows an EMIF-SBSRAM Interface;
Figure 12-26 shows a Six Word SBSRAM Read, EA[3:2] = 00;
Figure 12-27 shows a Six Word SBSRAM Read, EA[3:2] = 01;
Figure 12-28 shows a Six Word SBSRAM Read, EA[3:2] = 10;
Figure 12-29 shows a Six Word SBSRAM Read, EA[3:2] = 11;
Figure 12-30 shows a Decrement Mode for SBSRAM Read;
Figure 12-31 shows a Six Word SBSRAM Write, EA[3:2] = 00;
Figure 12-32 shows a Six Word SBSRAM Write, EA[3:2] = 01;
Figure 12-33 shows a Six Word SBSRAM Write, EA[3:2] = 10;
Figure 12-34 shows a Six Word SBSRAM Write, EA[3:2] = 11;
Figure 12-35 shows a Decrement Mode for SBSRAM Write;
Figure 12-36 shows an Asynchronous read with parameters 2, 4, 1;
Figure 12-37 shows an Asynchronous read with parameters 3, 2, 2;
Figure 12-38 shows an Asynchronous read with parameters 0/1, 0/1, 0;
Figure 12-39 shows an Asynchronous write with parameters 2, 4, 1;
Figure 12-40 shows an Asynchronous write with parameters 3, 2, 2;
Figure 12-41 shows an Asynchronous write with parameters 0/1, 0/1, 0;
Figure 12-42 shows Consecutive asynchronous reads with parameters 1, 2, 1;
Figure 12-43 shows Consecutive asynchronous reads with parameters 0/1, 0/1, 0;
Figure 12-44 shows Consecutive asynchronous writes with parameters 1, 2, 1;
Figure 12-45 shows Consecutive asynchronous writes with parameters 0/1, 0/1, 0;
Figure 12-46 shows Asynchronous read unaffected by early ARDY transitions;
Figure 12-47 shows Asynchronous read extended with ARDY;
Figure 12-48 shows Asynchronous write unaffected by early ARDY transitions;
Figure 12-49 shows Asynchronous write extended with ARDY;
Figure 12-50 Using ARDY with 2 Cycle Asynchronous Interface;
Figure 12-51 is a High Level C6211 Clock Diagram;
Figure 12-52 is a C6211 ECLKIN Diagram;
Figure 12-53 shows Read from External Device to EMIF;
Figure 12-54 Write from EMIF to External Device;

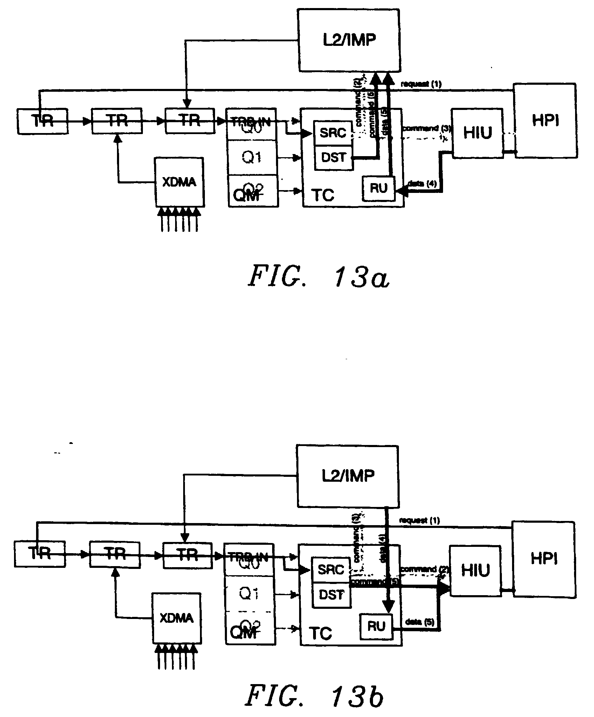

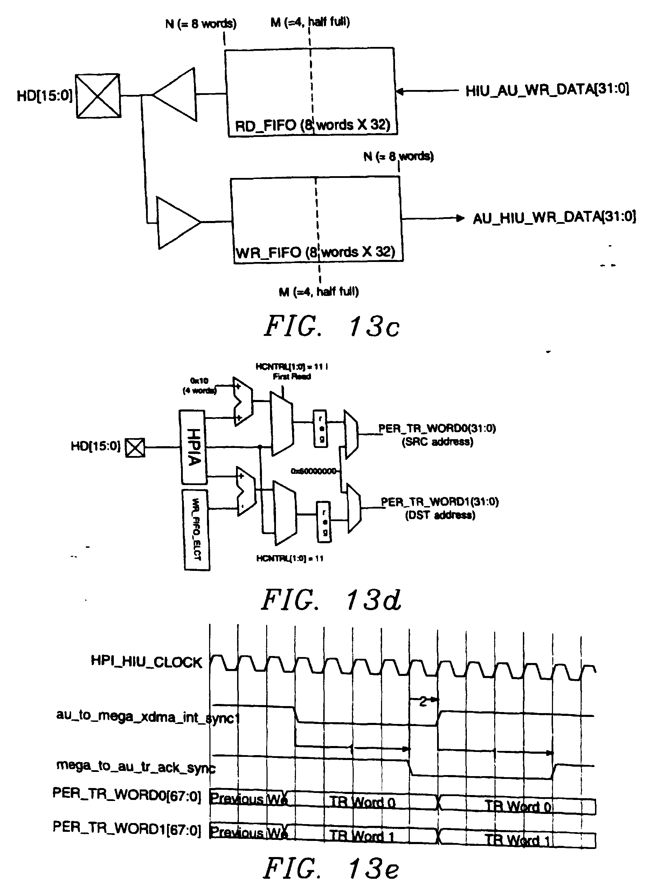

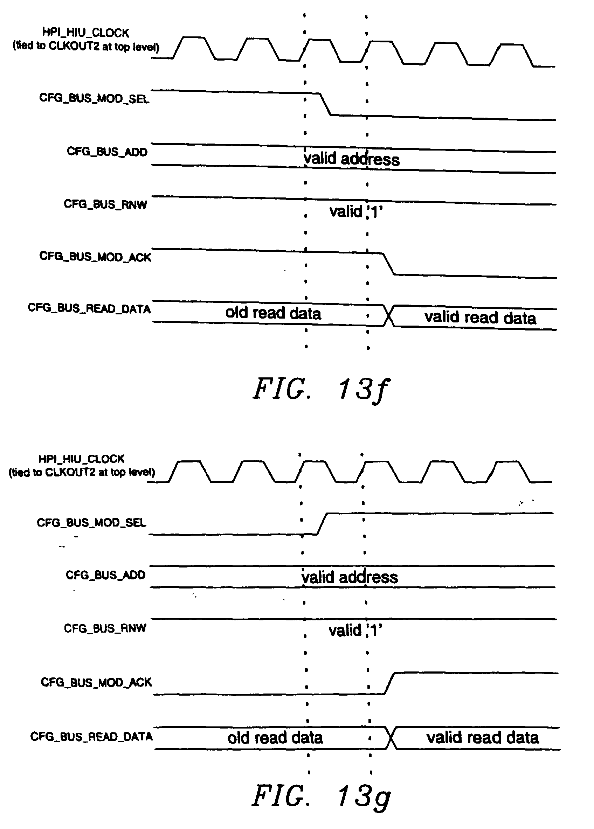

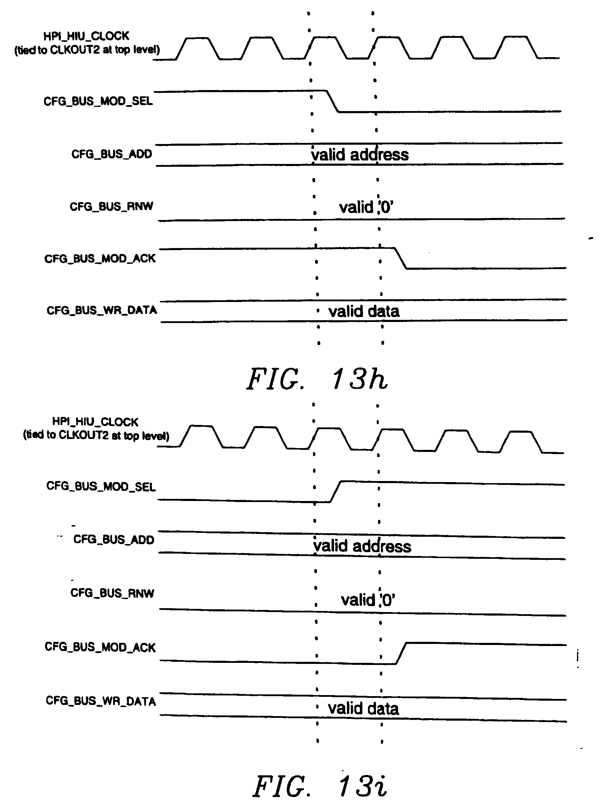

Figure 13-1 shows an HPI Write Sequence;
Figure 13-2 shows an HPI Read Sequence;
Figure 13-3 shows an HPI Datapath;
Figure 13-4 shows HPI TR Address Generation;
Figure 13-5 shows an HPI TR Request Interface;
Figure 13-6 shows CFG_BUS Read With Negative CFG_BUS_MOD_SEL;
Figure 13-7 shows CFG_BUS Read With Positive CFG_BUS_MOD_SEL;
Figure 13-8 shows CFG_BUS Write With Negative CFG_BUS_MOD_SEL;
Figure 13-9 shows CFG_BUS Write With Positive CFG_BUS_MOD_SEL;

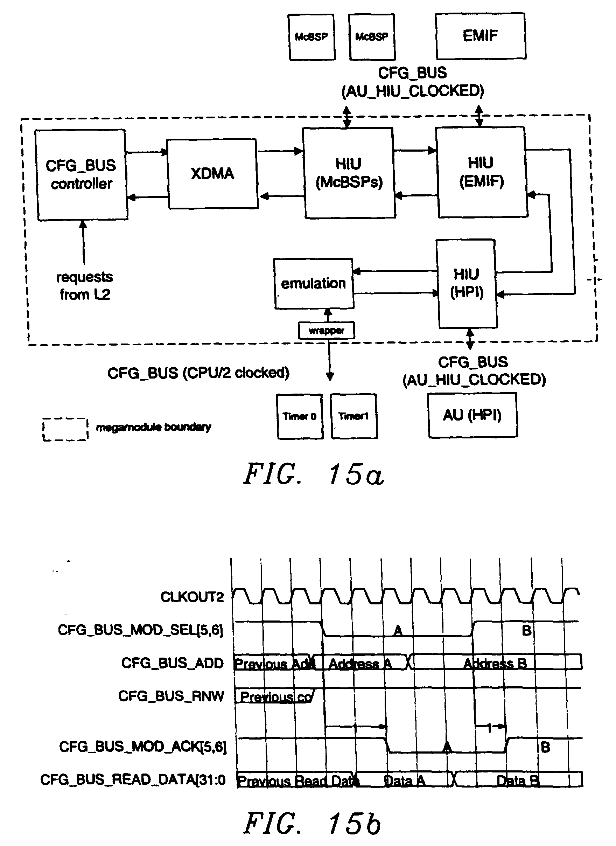

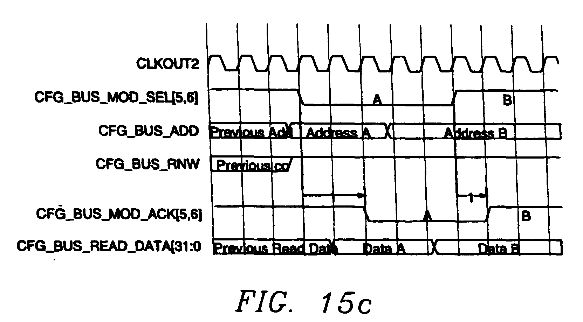

Figure 15-1 shows a CFG_BUS Flow;
Figure 15-2 shows a Timer CFG_BUS Read Cycle;
Figure 15-3 shows a Timer CFG_BUS Write Cycle;

Corresponding numerals and other symbols refer to corresponding parts in the various figures of drawing except where the context indicates otherwise.

### Detailed Description of the Invention

Referring now to Figure 1-1, there may be seen a high-level functional block diagram of a presently preferred microprocessor 11. Figure 1-1 shows a block diagram for a digital signal processor (DSP). The DSP is based on a CPU, shown in the left center portion of Figure 1-1. The DSP relies on a two-level memory hierarchy wherein the second level of memory is a unified data/instruction memory bank. The first levels of memory are denoted by the L1 prefix; the second level is referred to as L2.

A representative memory map for the DSP of Figure 1-1 is depicted in Figure 1-2. The on-chip memory is a single unified block of program and data memory starting at address 0x00000000. The amount of memory at this location is dependent on the configuration chosen for L2. These functions are described later herein.

The CPU instruction side is fed from a small, fast instruction cache. A 1-way (direct-mapped) 4Kbyte instruction cache microprocessor is sufficient to provide adequate hit rates (>95%) for significant performance for the bulk of microprocessor applications. The L1I (level 1 instruction) cache provides single cycle throughput to the L1I controller of the DSP core. A line size of 64 bytes (2 fetch packets) is preferably used for L1I, which will provide an amount (equal to 1 fetch packet) of program prefetch on a miss to L2/external memory. L1I always operates as a direct-mapped cache, and may not be memory mapped.

To support the L1I cache, a small amount of tag storage is required. With a 64-byte line size, 64 entries of 20 bits each are required. The address and tag break down as follows.

**Table 1-1**

| L1I Address Organization | | |
|---|---|---|
| Tag | Set | Offset |
| 31:12 | 11:6 | 5:0 |
| 20 | 6 | 6 |

The L1I tag RAM should be dual ported to support invalidations (via snoop) from L2 without conflicting with the CPU.

The L1I RAM preferably is constructed 256-bits wide, to support single cycle execution by the CPU. The RAM bank operates within the timing constraints of the instruction cache/CPU pipeline depicted in Figure 1-3.

The CPU data memory controller is interfaced to a small, fast data cache. A 4Kbyte, 2-way set associative data cache is employed for the L1D data cache. The cache provides single cycle access by the CPU. A line size of 32 bytes is employed for the L1D cache. The L1D cache serves to decouple the CPU pipeline from the slower L2 bank and external memory. L1D may not be disabled to operate as a memory mapped SRAM. L1D caches accesses to the L2 SRAM space, plus any external addresses identified as cacheable.

The L1D controller uses a tag RAM to track the validity of data in the cache. Two tag RAMs are required due to the 2 Load/Store (LD/ST) units of the DSP. The address and tag break down as follows.

**Table 1-2**

| L1D Address Organization | | | |
|---|---|---|---|
| Tag | Set | Subline | Word |
| 31:11 | 10:5 | 4:3 | 2 |
| 21 | 6 | 2 | 1 |

The set field indicates which of the 64 sets the memory access falls into. The subline field indicates which of the four 64-bit sublines the access falls into. The word field indicates whether the memory address refers to the upper or lower half of the 64-bit subline.

Each tag RAM contains 64 entries of 42 bits each (21 bits by 2 LD/ST pipes). The tag RAMs are dual ported to eliminate stalls caused by snoop cycles from L2.

Misses in the L1D side must be addressed accordingly. The type of service performed on an L1D miss depends on two items: the address, and the direction of the miss. On a read miss, the L1D controller sends a request for service to L2. This occurs regardless of the L2 operation mode; thus L1D is independent of the L2 configuration. A read miss in L1D will force the L1D LRU (least recently used) line mapping to the requested address, to be copied out to the L2 controller, if it is modified, and the new line read in to L1D. The copy out to L2 is present only if the L1D copy of the line is modified, indicated by the line state bits. The L2 controller will, depending on its operation mode, either service the request directly or pass it off to the I/O subsystem. The tag and LRU status for the new line is updated in both L1D and L2 as appropriate.

Write misses in L1D are handled somewhat differently. A write miss in L1D will fall through to L2; without modifying L1D (i.e. there is no write allocation in L1D). This type of cache is commonly called a write-through cache. The L2 controller determines how to handle the miss, depending on its configuration or operation mode. The L2 may accept the write directly, or pass the write off to the I/O subsystem. Again, the tag and line state information will be updated in L2 as appropriate. The L2 memory bank(s) provide two-cycle access (at the fastest), hence writes are preferably buffered in a small queue. The size of the queue is adjustable; however, it should be fairly small (2-3 entries). As a note, in the event of a read miss, the write buffer is first allowed to empty to maintain coherency with L2.

The current L1D bank uses a dual ported RAM bank at a 64-bit width, which will eliminate bank conflicts between the 2 LD/ST pipes of the CPU. A 128-bit data path to/from L2 can also be provided by using both of the RAM data ports. The L1D tag and data RAMs must operate within the constraints of the data cache/CPU pipeline depicted in Figure 1-4.

The DSP includes a second level of memory which provides a unified 64Kbyte data and instruction RAM/Cache. The L2 may be operated in one of several modes, selectable at power up. The user may select portions of L2, in increments of one-quarter of the L2 size, to be SRAM for either program or data segments. As quarters of the L2 memory are locked down as SRAM, the cache operation of the remaining L2 memory operates with reduced associativity. This is illustrated in Table 1-3 below. Cache quadrants of L2 cache instruction and data fetch requests from L1l.

**Table 1-3**

| L2 Operation Modes | |
|---|---|
| L2 Mode (see section 1.3.10.1) | Cache/SRAM Model |
| 000 (reset value) | 64K SRAM, D/I mixed |
| 001 | 16K 1-way D/I$, 48K D/I SRAM |
| 010 | 32K 2-way D/I$, 32K D/I SRAM |
| 011 | 48K 3-way D/I$, 16K D/I SRAM |
| 100 | Reserved |
| 101 | Reserved |
| 110 | Reserved |
| 111 | 64K 4-way D/I$, 0K data RAM |

Figure 1-5 illustrates the L2 operation modes. The operation mode is determined via a memory mapped control register, as described later herein. The L2 resets to an all SRAM mode at power-up/chip reset. This is included to support boot loading, as described later herein.

The L2 memory structure is accessible via three ports, which include the L1I controller, L1D controller, and the I/O subsystem. In order to track the line state of the L2 cache, a 256 set, 4-way tag RAM is included, with each way containing 18 bits of address. Several additional bits may be included to track the state of the L1D lines as well as to maintain coherency (as described later herein). To alleviate contention for the L2 resource, the tag RAM shall be banked on a x4 basis.

The L1I interface is comprised of a 256-bit datapath from L2 to L1I, and a 26- bit address from L1I, which is driven by L1 on a miss. The line size of L2 is set to 128 bytes, directed largely by the instruction word of the CPU. L1I and L1D misses posted to L2 will either return data from L2 at the appropriate address, or possibly stall the CPU while the L2 posts the request to the I/O subsystem. L1I accesses to L2 SRAM space may be serviced immediately. It is the responsibility of the programmer to ensure that code has been preloaded into L2 SRAM space before execution.

The L1D controller interface to L2 is more complex than the L1I interface because both read and write accesses must be considered. Both the read and write datapaths from L2 to L1D are 128 bits wide. This widened path aids in performing L1D fetches and evictions (write backs) with minimal latency. Data accesses from L1D may be serviced from L2 SRAM or cache. Access to the SRAM space when configured as cache will return invalid data; writes to SRAM space configured as cache are discarded.

The final L2 interface is from the I/O subsystem. This interface is a 64-bit datapath. This is again done in the interest of developing an infrastructure for future device spins, which might benefit from the additional bandwidth provided by this wider interface. The I/O subsystem includes both a 64-bit read (L2 to I/O subsystem) and write (I/O subsystem to L2) data port, along with a 30-bit address accompanying the write datapath. Read requests to the I/O subsystem rely on a transfer request packet structure rather than address generation by the L1/L2's, as described later herein. The I/O subsystem is denoted by the acronym DTB (data transfer bus) in Figure 1-6, which depicts a simplified block diagram of the L2 cache and its interfaces.

Note that the L2 SRAM is constructed of a denser, but slower SRAM cell, which requires a 2-cycle access. Consequently, the following miss penalties exist from L1 to L2: L1D miss to L2: 4 cycles; L1l miss to L2: 4 cycles.

Since three ports exist to L2, the banking of L2 is an important item. Both the L2 RAM, and tag RAM are banked such that conflicts between the L1D and I/O subsystem are minimized. Ideally, the program fetch side could also be isolated, however, the 256-bit width makes this a significant challenge. The L2 RAM array is organized as 4x64-bit memories. Consequently, an L1I miss requires the entire L2 RAM bank set. The tags shall additionally be banked which provides a means for simultaneous L1D and I/O subsystem access to L2.

The L2 controller allows for up to two concurrent accesses at a time provided that there are no bank conflicts. The L1D interfaces are such that accesses that collide with one another are prioritized such that only one proceeds as a time. The prioritization will match that of the L1D level, and L2 shall see only one L1D request at a time.

At the L2 level, there are potentially six requesters of the memory banks. The requesters are prioritized as follows in the event of colliding accesses (highest to lowest).
- L1I (hit)
- L1D (hit)
- TC (DMA reads/writes)
   •• Read fill (cache service in L2)
   •• Victim write (cache writeback from L2 to memory via TC)
   •• Snoop (data merging with L1D)

The priorities listed above optimize CPU performance, by unstalling it as quickly as possible when an L1 miss occurs. DMA accesses made by the TC are by definition background tasks, and can tolerate the effects of being prioritized below the L1 accesses.

The existing C6201 DSP includes a prioritization bit for the internal memory resource for contention resolution with the DMA. While the value of this is somewhat limited in the 2-level hierarchy, the bit is included and controls prioritization of bank conflicting accesses between the L1I/L1D interfaces and the I/O subsystem interface to L2. The I/O subsystem has no direct interface to the L1D controller; therefore no special prioritization is required at those levels.

As with any multi-level memory hierarchy, the issue of coherency and at what levels it should be supported must be addressed. In the present system, coherency is maintained by tracking the state of lines in L1D and L2, and performing the correct bus cycles as required. Self-modifying code may still be supported through software.

As a simplification, external memory coherency with the L1D and L2 caches is not maintained. The L1D can be thought of as a buffer memory space to reduce conflicts between DMA and L1I accesses to L2. Additionally, L1D simplifies the L2 controller by reducing the number of ports from 4 to 3 (see Figure 1-5).

In order to support internal coherency between the L1's and L2, the L2 controller interface will rely on a system of snoop-invalidate cycles. These cycles will ensure that the CPU does not access stale data, and is not adversely affected by L2 activity from DMAs. The mechanism works as described below.

When L2 performs an eviction, it will always perform a snoop-invalidate cycle in L1D, and wait for return data. If there is no return data (there is always a response) then the eviction proceeds normally. If data is returned from L1D, then it is merged with the L2 data before the eviction proceeds such that the data written out to memory is the most up to date copy. The line is invalidated in both L1D and L2.

The same type of cycles are performed when the DMA accesses L2. DMA accesses are only allowed to L2 SRAM space, and will rely on the same snoop-invalidate cycles to maintain coherency with the L1's. When a DMA write occurs to L2 SRAM, a snoop invalidate cycle is sent to both the L1D and L1I controller. Both L1's must be snooped because it is impossible for the L2 controller to know if the DMA contains code or data segments. If the L1D controller responds with data, it is merged with the incoming DMA data. The line is invalidated in L1D regardless, such that future accesses to the line will miss L1D, and be passed to L2 for service. In this manner, the CPU is guaranteed to access the new DMA data. Similarly, if the line resides in L1I the snoop-invalidate cycle will invalidate the line, such that L1I will miss on an access to that line, and fetch the new data from L2. It is noted that L1I should be structured such that invalidate commands from L2 may be sent in a "fire-and-forget" type fashion, such that stalls in L2 are limited to actual data movement rather than code prefetches via DMA.

A DMA read of L2 SRAM space is handled in basically the same way as an eviction of a cache line. A snoop-invalidate cycle is performed to L1D, and the L2 controller waits for a response. If data is returned to L2, it is placed into L2 and then the DMA is allowed to proceed, transferring the new data. The line is again invalidated in L1D. This invalidation is not strictly necessary, however, the line will still reside in L2 so the impact is negligible. This is done to simplify the L1D controller, as it now must support only one type of snoop-invalidate function.

Note that in the case of evictions from L2 and DMA read cycles, no L1I invalidations occur. This is due to the fact that L1I never returns data to L2. As an optimization, the L2 controller shall include sub-line (L2 line) state bits down to the L1D line size (32 bytes), such that accesses to L2 lines not in L1D are not invalidated unnecessarily. Because the L1I supports invalidates from L2 without any feedback (see above), no directory bits in L2 are required for the L1I.

The following example illustrates how the L1-L2 caches will work in conjunction with DMAs to L2. For the purposes of this example, assure the L2 space is configured solely as SRAM. Referring now to Figure 1-7, there may be seen an example of data transfers between L1D and L2. The data transfer process begins with a buffer of data, InBuffA, which has been written to L2 via the DMA controller. It is assured that an interrupt from the DMA controller was sent to the CPU to inform it that data was ready. As the L2 space is accessed (1), it is cached into the L1D memory. As the CPU processes the data, it might write data to a separate output buffer, OutBuffA, in the L2 space. For the purposes of this example, assure that the CPU first read OutBuffA, thus caching it into L1D (2). If this had not occurred, then OutBuffA would only be resident in L2, and writes to OutBuffA would simply fall through the aforementioned write buffer to L2. Write data to OutBuffA is captured in L1D's image of OutBuffA. Note that in the background DMA accesses may be continuing to a separate input buffer (InBuffB) (3).

Referring now to Figure 1-8, there may be seen another example of data transfers between L1D and L2. Once processing is complete, the CPU or possibly a peripheral that requires the data in OutBuffA, performs a DMA access to L2. The L2 controller performs a snoop-invalidate cycle to L1D, and waits for a response. The L1D image of OutBuffA is invalidated (4), and data is returned to L2. The data is written to the L2 SRAM, and then passed to the I/O subsystem to service the DMA (5). If the CPU requires further use of OutBuffA, the first read access will miss L1D, and the data will be fetched from L2. This has minimal impact to system performance.

As typical with many DSP applications, double buffering is incorporated into this example to illustrate the coherency issues which must be addressed (6). As the process continues in Figure 1-9, the CPU is interrupted once InBuffB is ready to be processed. The CPU reads InBuffB, caching it into L1D (9). As data is processed, the CPU writes it to OutBuffB (10). As before, assure the CPU reads OutBuffB first, thus caching it into L1D. Writes to OutBuffB will be captured in L1D's image of OutBuffB.

If OutBuffB had not been read first, the writes to OutBuffB would simply pass through to L2 directly, and leave L1D unmodified. The reads of the output buffer are included to illustrate the significance of the snoop-invalidate the cache performs for applications which perform this type of access.

Referring now to Figure 1-9, there may be seen another example of data transfers between L1D and L2. As before, in the background DMA accesses may continue to buffers that may be resident in L1D (7), as shown with OutBuffA above. As DMA accesses are performed to L2, the appropriate lines in L1D are invalidated (8) to prevent the CPU from using stale data. As DMA requests are made of OutBuffB, L1D's copy of OutBuffB will be snooped and invalidated (11) and the most up-to-date data is passed to the I/O subsystem. In this manner, the cache hardware maintains coherency with L2, such that the programmer's view of the device is just L2 SRAM.

The snoop-invalidate cycles performed between L2 and the L1's must have a minimal impact on system performance. Several architectural decisions have been incorporated into the L1's to ensure this. Firstly, both the L1I and L1D controller implement tag RAMs as dual ported entities, such that snoop-invalidate cycles do not interfere with CPU access.

The only adverse effect of the snoop invalidate mechanism is for DMA read cycles from L2. Recall that in this case, the line is invalidated from L1D when it is not strictly necessary to do so. As the line is still resident in L2 however, the system impact is very minimal. If the CPU requires the data again, it must be fetched from L2. This will stall the CPU for a period of not more than 4 cycles while the line is copied from L2 to L1D (it may be possible to reduce this period).

In addition to the L2 cache and/or RAM, the controller also provides several memory mapped control registers which the CPU can access to configure the L2 operating mode. These registers are accessed via the CFG_BUS. The L2 control registers are depicted in Figure 1-10.

The following outlines the functions of the above registers depicted in Figure 1-10. In order to support emulation of the DSP, the instruction and data caches (both levels) must be capable of supporting several modes of operation. The L1I and L1D modes of operation are determined by the PCC/DCC field in the CPU control status register (CSR). The following modes are supported.

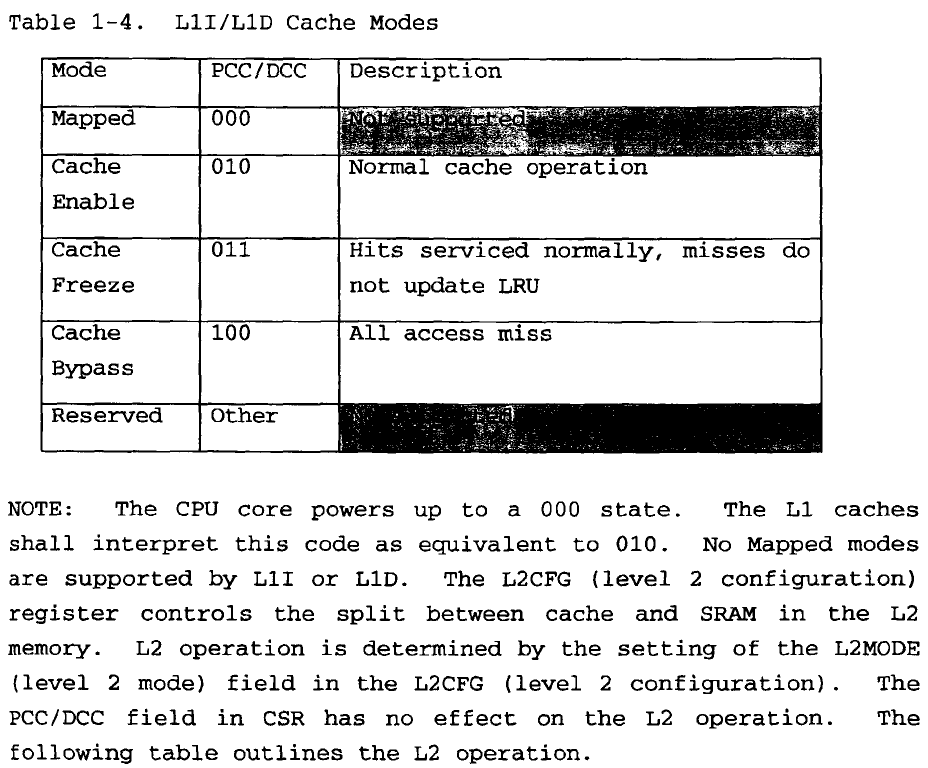

**Table 1-5**

| L2 Cache Modes | | | | |
|---|---|---|---|---|
| L2 Mode | L2 MODE | Cache Enabled L2CC=00 | Cache Freeze L2CC=01 | Cache Bypass L2CC=1X |
| All SRAM | 000 | All SRAM | All SRAM | All SRAM |
| Mixed Cache/SRA M | !000 | ¼, ½, ¾ cache, | Cache frozen. | Cache disabled. |
| | | ¾, ½, ¼ SRAM | Hits proceed normally; | All L1D service provided via long distance access; |
| | | | L1D misses serviced as long distance; | |
| | | | | instruction service 1 L1I line at a time |
| | | | L1I misses serviced 1 L1I line at a time (no LRU updates) | |
| NOTE: The Freeze and Bypass modes are used by emulation. | | | | |

The user may completely invalidate L1D and/or L1I with a single write to the L2CFG register. When II and ID are written as "1", all lines in L1I and L1D, respectively, shall be invalidated. No data is written back to L2 or to external memory in this case. This function may be useful however for task switches, where the OS wishes to clean the L1 caches knowing that it has paged new program/data segments into L2 SRAM space. As a note, II and ID are considered write-only bits. Reads of these bits always return a "0". Once an invalidate cycle is signaled via these bits, the CPU stalls if it tries to access either L1D or L1I until the invalidations are complete, and the new request (which will obviously miss) is processed.

The L2 is accessible via three ports; the L1I interface, L1D interface, and the I/O subsystem interface. In the event of bank conflicts in L2, the L2 controller will prioritize and serialize requests from these interfaces. CPU accesses (L1I or L1D) are given priority over the I/O subsystem if the P bit of L2CTL is 0 (the reset condition). If it is set to 1, then I/O subsystem requests of L2 are given priority over CPU requests. The L1I access is always given priority over L1D.

In order to support single word access to I/O registers and peripherals, the L2 controller includes a set of memory mapped control registers to define the cacheability of the external memory space(s). These registers, referred to as MARs (memory attribute registers), are illustrated in Figure 1-11.

Each bit of the MAR register defines the cacheability for a range of EMIF address space. A 1 indicates that a region is cacheable; a 0 disables caching of that space and requires long distance service. All bits of MAR will be cleared to 0 at system reset. Each MAR bit is intended to control the cacheability for a 16MB range. Any space outside of the ranges defined by the MAR register set is assumed to be non-cacheable, though MAR registers for all ranges are not implemented. Each MAR bit controls cacheability for the address ranges in Table 1-6, below.

**Table 1-6**

| MAR Bit Functions | |
|---|---|
| MAR Register | Defines cacheability for address range... |
| | /CE3 |
| 15 | 0xB3000000-0xB3FFFFFF |
| 14 | 0xB2000000-0xB2FFFFFF |
| 13 | 0xB1000000-0xB1FFFFFF |
| 12 | 0xB0000000-0xB0FFFFFF |

| | /CE2 |
|---|---|
| 11 | 0xA3000000-0xA3FFFFFF |
| 10 | 0xA2000000-0xA2FFFFFF |
| 9 | 0xA1000000-0xA1FFFFFF |
| 8 | 0xA0000000-0xA0FFFFFF |

| | /CE1 |
|---|---|
| 7 | 0x93000000-0x93FFFFFF |
| 6 | 0x92000000-0x92FFFFFF |
| 5 | 0x91000000-0x91FFFFFF |
| 4 | 0x90000000-0x90FFFFFF |

| | /CE0 |
|---|---|
| 3 | 0x83000000-0x83FFFFFF |
| 2 | 0x82000000-0x82FFFFFF |
| 1 | 0x81000000-0x81FFFFFF |
| 0 | 0x80000000-0x80FFFFFF |
| NOTE: The above register definition defines cacheability for the EMIF only. Any HPI bus spaces are assumed to be non-cacheable, as are serial ports, timers, or other on-chip peripherals and memory. | |

When a request is posted to L2, the address is first evaluated to determine the type of service to perform. If the address falls into the EMIF memory space, the cacheability attributes defined in MAR for the address are evaluated to determine if a cache service or direct access is to be performed (this occurs even if L2 is configured as all SRAM). Direct accesses, referred to as long-distance accesses, are analogous to the way in which the C6201 accessed external memory, and are described below.

Certain accesses must be performed as single word reads or writes. Examples might include I/O registers or peripheral control registers such as in an external audio codec or FPGA. These accesses would be mapped to a non-cacheable memory space, indicated by the aforementioned memory attribute register.

Accesses made by the CPU which are to a non-cacheable memory space are termed as long distance, and should be thought of as accesses directly to external memory. In the case of a long distance read, the CPU must be stalled until the read data returns. In the case of a long distance write, the CPU may continue to run until a second long-distance access (read or write) is attempted. In general, long distance accesses should be avoided in code since they will adversely affect CPU performance. Long distance accesses are typically not used during time critical code segments, however, they must be supported for robustness and ease of use.

The L2 controller includes a long distance buffer, which provides long distance access and the appropriate stalling mechanism to the CPU as required. Long distance accesses are formatted as single word TR packets to the I/O subsystem by the L2 controller. Completion of the long distance access may be tracked directly by the L2 controller, or using one of the L2 reserved QCOMP codes provided by the I/O subsystem.

Long distance accesses will always force a miss of L1D (assuming the memory attribute registers are not changed dynamically, a restriction placed on the programmer), which, like any miss, is passed onto L2 for processing. The L2 controller will compare the address against the memory attribute registers to determine how to process the request. If non-cacheable, a long distance access is performed. In the case of a write, a long distance write is performed by loading the long distance data buffer with the data value to be written, and submitting a 1 word TR request to the I/O subsystem. A sticky bit is also set such that future long distance accesses will stall the CPU, as the long distance data buffer is out of service until the I/O subsystem reads it. The sticky bit is cleared once the read is complete. In the case of a read the CPU is stalled immediately. A 1 word TR request is again sent to the I/O subsystem. When the read data is returned to the long distance data buffer, the CPU is released from the stall condition.

Self-modifying code is not supported directly by the cache hardware. This decision was made to reduce complexity in the cache controller state machines. Self-modifying code may be supported through hardware hooks and software. The hardware hooks are a set of memory mapped control registers in L2 which allow for invalidate, and invalidate and write-back control.

There are several methods of L2 control, however, all use the same underlying hardware. The operations that the user may perform, are 1) write back (to external memory), 2) write back with invalidation of L1D and L2, 3) L1D invalidate with writeback to L2 only, and 4) invalidate L1I (only). The first two methods are generally used to control data flow in a cache based system. The latter 2 methods provide a means of software controlled self-modifying code, and are also the proposed method of emulation breakpoint insertion.

The cache control mechanism consists of a 32-bit base address register and a 16-bit word count register, accessible through L2. Note that granularity only down to the word level is provided. In the case of a write back, only the requested number of words are written back; however, complete cache lines containing any of the requested words are invalidated (if requested). To perform these operations, the user writes to the cache base address register (WBAR) with the starting address of words to be written back to memory and/or invalidated from the cache. A second write cycle is then performed to the cache write back word counter (WWC). The WWC write activates the L2 state machine that performs the requested operations. The user should take care to ensure that the WBAR register is set up correctly before performing a write to WWC.

The WWC is accessible at multiple memory-mapped locations, which determine the operation to be performed. For consistency, WBAR is also mapped at multiple locations as well. It should be noted however that only two physical registers exist in the mechanism. The L2 controller stalls the CPU if it attempts a second write access to these registers while performing a previously issued write back and/or invalidate cycle. Reads will return the current value of the word count, such that the user can monitor the write back/invalidate progress.

An example use of these registers is shown below.

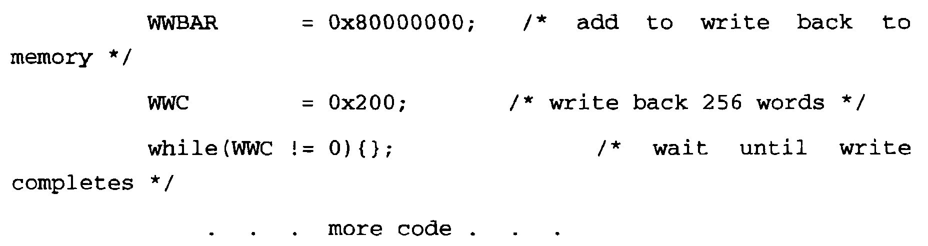

The following table identifies the programmer's view of the line control registers.

**Table 1-7**

| Cache Control Registers | | |
|---|---|---|
| Register | Address | Function |
| WBAR | 0x01844000 | Write back base address register |
| WWC | 0x01844004 | Write Back word count |
| WIBAR | 0x01844010 | Write back invalidate base address register |
| WIWC | 0x01844014 | Write back invalidate word count |
| IIBAR | 0x01844020 | Invalidate instruction base address register |
| IIWC | 0x01844024 | Invalidate instruction word count |
| FDBAR | 0x01844030 | Flush data base address register |
| FDWC | 0x01844034 | Flush data word count |
| NOTE: As defined, the cache control registers are mapped into the CFG_BUS memory space 1. | | |

Write backs to external memory are serviced by a simple state machine that queries, and possibly invalidates the tags of the L2 cache. Using the aforementioned cache snoop-invalidate protocols, modified data in L1D will automatically be snooped out during the write back cycle(s), so no stale data is written out to memory. Similarly, invalidate cycles will invalidate L2 lines, which, using the aforementioned mechanisms, will invalidate L1D lines as well.

L1I invalidates are somewhat different, in that the L2 does not maintain line state information regarding L1I. Instead, L1I invalidate cycles shall simply be processed as a series of invalidate commands sent form L2 to L1I. No data is ever extracted from L1I. The L1I tag RAM is preferably dual ported to alleviate conflicts during invalidate cycles.

L1D flush cycles allow the user to move data from L1D to L2 only. This type of cycle is useful for supporting self-modifying code sequences through software. The typical use of this cycle type would be following the modification of code by the CPU, which would be (at least in part) captured in L1D. The user would perform an L1D flush to L2 before jumping to the new code, to ensure that L1I gets the updated sequences. Note that the cache writeback function would perform the same function, however, there is no reason for the data to be written to external memory in this case.

In addition to the write back control registers, two other cache control mechanisms are provided. The user may write back the entire L2 cache space with a single command, by writing to the L2FLUSH register. Similarly, a write back and invalidate command may be performed on the entire cache space by writing to the L2CLEAN register. To perform a flush or clean cycle, the user must write 0x00000001 to the L2FLUSH or L2CLEAN register. This value is maintained in the register by the L2 controller until the command is complete, at which time the register is cleared to 0x00000000 by the L2 controller. This provides a means of telling the CPU when the flush or clean command is finished. The flush and clean registers are defined below.

**Table 1-8**

| L2 Flush and Clean Registers | |
|---|---|
| Register | Address |
| L2FLUSH | 0x01845000 |
| L2CLEAN | 0x01845004 |
| NOTE: As defined, the cache control registers are mapped into the CFG_BUS memory space 1. | |

A flush command will snoop L1D as required to extract the correct data. Similarly, a clean command will invalidate L1D and L1I lines along with L2 as appropriate.

The following table outlines the required operation for the various cache control cycles.

**Table 1-9**

| Cache Control Cycles | | | | |
|---|---|---|---|---|
| Cache Opern. | L2 Register Usage | L1I Effect | L1D Effect | L2 Effect |
| Write Back | WBAR/WWC | None | Invalidated as appropriate ; data to L2 | Written back to external memory (but kept valid) |
| Write Back w/invalidate | WIBAR/WIWC | None | Invalidated as appropriate ; data to L2 | Written back to external memory and invalidated |
| Invalidate Instruction | IIBAR/IIWC | Invalidated as appropriate | None | None |
| Flush Data | FDBAR/FDWC | None | Invalidated as appropriate ; data to L2 | Data updated in L2 |
| Clean L2 | L2CLEAN | None | Invalidated (completely); data to L2 | Invalidated (completely); data to external memory |
| Flush L2 | L2FLUSH | None | Invalidated as appropriate ; data to L2 | Written back to external memory (but kept valid) |

The long distance buffer and mechanism is invisible to the user, however, it will require a physical address such that the I/O subsystem may return data to it. Likewise, cache service must provide an address to the I/O subsystem which will allow the underlying RAM to be read/written. These addresses are in a reserved location of memory. The following address ranges may be used.

**Table 1-11**

| L2 Reserved Addresses | |
|---|---|
| Internal Address Range | Function |
| 0x00800000 - 0x00FFFFFF | L2 memory access (in cache mode) |
| 0x01000000 - 0x017FFFFF | Long distance buffer |

Operation of accesses by the CPU to the above address ranges is undefined, and may produce undesirable effects.

The L2 cache controller resets to an all SRAM state (L2CFG = 000). This is done to ensure that SRAM exists at the 0x00000000 location. This is required because the CPU always jumps to this location following reset. Two methods of device reset are supported. If an HPI is used, then the HPI is responsible for placing code at the 0x00000000 location prior to releasing the CPU from reset (which is signaled via assertion of DSP_INT). If there is no host in the system, then it is assumed that a ROM or other memory device at EMIF space /CE1 (0x90000000) has valid boot code in it, from which the CPU shall be bootloaded.

To support bootloading, the L2 controller includes a bootload input. This input is latched from the ED[4:3] pins of the EMIF. If high following device reset, the L2 controller sends off a single TR packet requesting 1Kbytes of data to be transferred from 0x90000000 to 0x00000000. Once this transfer completes, DSP_INT must be asserted to unhalt the CPU. One of the L2 reserved completion codes may be used to accomplish this.

The purpose of the configuration bus (CFG_BUS) is to provide a scalable mechanism for the CPU to control the on-chip peripherals, and other configuration registers not directly accessible inside the CPU register files. The CPU can access (read or write) any control register in the CFG_BUS memory space (whether for a peripheral control or other control, such as L2) simply by performing a load/store to the particular memory location. This command will be passed to L2 which will decode it as a CFG_BUS request and use the CFG_BUS to directly access the control register. It is important that the purpose of this bus be kept as a control bus, whereas all data access to the peripherals are performed through the normal TC/XDMA mechanisms. Keeping the control access to peripherals separate from the data access allows "locked" peripherals or such to be reset (by the CFG_BUS) even though the normal data bus is blocked as well. Also, the CFG_BUS should be kept highly scalable in the number of peripherals attached as well as the frequency and latency it supports.

Because all data transfers are conducted through the TC, there is only one master of the CFG_BUS, mainly the memory on behalf of the CPU, or specifically L2 in the case of the DSP. This master drives all the request control signals, the address, and the write data, while the slaves only drive the acknowledge control signals, and the read data. In order to save on bus routing throughout the chip, the data buses are not dedicated between each node and the controller, but are rather linked between the controller and each of the nodes. At each node, the request, address, and write data buses are simply passed on unchanged to the next node, whereas the read data bus is MUX'ed between the previous nodes' and the local data (should it need to respond to the current CFG_BUS command). Each node monitors its own separate module select (mod_sel) and module acknowledge (mod_ack) signal.

A programmable register path can be added to each node to allow a register to be inserted in the path when timing requires this. The extra register allows scalability, given that it is not guaranteed that the bus can travel from the master to the furthest node in a single cycle.

The CFG_BUS master initiates a command by switching one of the mod_sel bits for which node is being accessed. These module selects are simply a decode of the 4 most significant bits inside the CFG_BUS memory space that determine which node the access requires. At the same time, the rnw (read-not- write) signal, the address bus, and the write data bus (on write commands) are setup as well. All the master signals are clocked at the CPU clock rate. On a read command, the rnw signal is set high, and for a write command, the rnw signal is set low. Eventually the peripheral responds by switching its mod_ack bit (one per mod_sel) and placing the read data on the read data bus (if the command were a read). The mod_ack indicates when the node has completed the command (fetch the read data or written the write data), and no longer needs the address or data input buses and can deliver the read data in the case of a read. Again, all these node signals going back to the master are clocked at the CPU clock rate (although they may be synchronized to the peripherals clock rate before acknowledgement). The address bus is 16 bits wide to allow for a large space of peripheral (and other) control registers, while the data buses are 32 bits wide that allow only word access.

**Table 2-1**

| CFG_BUS Signals | |
|---|---|
| Signal | Function |
| CFG_BUS_mod_sel[15:0] | Single bit per CFG_BUS node to enable access |
| CFG_BUS_rnw | Access direction: Read = 1; Write = 0 |
| CFG_BUS_access | New access indicator |
| CFG_BUS_address[15:0] | 16-bit address |
| CFG_BUS_write_data[31:0] | Data for write commands |
| CFG_BUS_read_data[31:0] | Data for read commands |
| CFG_BUS_mod_ack[15:0] | Single bit per CFG_BUS node to acknowledge completion of a command |

Edge sensitive timing is used for the module selects and the module acknowledges to allow simpler (and quicker) synchronization between different clock domains. If a high level method were employed, then the mod_sel would have to go high, then the mod_ack go high, then the mod_sel go low, and finally the mod_ack go low, before the next command could be sent on the CFG_BUS. By using switching methods, the mod_sel switches to indicate a new CFG_BUS access, and the mod_ack switches to indicate the acknowledgement of the CFG_BUS access. Then, another CFG_BUS access can simply switch the level of the mod_sel (assuming the access was to the same node), and the access will get synchronized to the node without potential for being lost. This can happen when two pulses occur too close on the opposite clock and the first does not get synchronized before the second does, losing the first pulse which could have been the access trigger.

In addition to the module select and acknowledge signals, a single access indicator signal is required. This is done such that all CFG_BUS nodes are not required to monitor all module selects to determine whether and access is for their node. The access signal pulses high for one cycle when a new access begins. If access is sampled high and a module's mod_sel signal toggled, then the access is for that node. All non-requested nodes will not respond to the command, and will multiplex the write datapath over to the downstream nodes, and the read datapath from upstream nodes (the CFG_BUS is routed through a single read/write datapath). Since the CFG_BUS is decoded in the local HIUs for each peripheral, the peripheral version of the CFG_BUS will not include the access signal.

Similarly, only one module acknowledge signal will be routed to each peripheral, with local decoding provided in the appropriate HIU. Figures 2-1 and 2-2 illustrate a read and write command, respectively, on the CFG_BUS. Certain modules such as the L2, XDMA, and interrupt selector will use this interface. Peripherals outside of the processor megamodule, are discussed later herein.

The original PBUS (C6201 Peripheral Bus) is not scalable in terms of timing; it assumes that all accesses complete in 3 clock cycles which may not hold for higher megahertz spins of the chip. The CFG_BUS was designed with asynchronous access in mind in order to allow complete peripheral blocks to operate in a single clock domain. For this reason, the CFG_BUS synchronizers shall be consolidated in the HIU mechanisms. The HIU will take in the CPU clocked CFG_BUS, synchronize the mod_sel and mod_ack signals between the CPU clock and the peripheral clock, and pass all the other signals/buses between the CFG_BUS and the peripheral directly.

In this way, the CFG_BUS data is all setup by the time the control signals are synchronized through to the peripheral, or going back, the read data is ready by the time the mod_ack signals is synchronized into the CPU clock domain. The synchronization mechanisms can re-use the one's currently in each HIU for TC to peripheral communication. This also has the advantage of isolating where the multi-domain clocking must be handled, in the HIUs only, not in both the HIUs and the peripherals.

In contrast to dedicating a bus between each CFG_BUS node and the controller, a chain flow is used to reduce routing requirements and mincing at the controller. The chain is produced by connecting the inputs and outputs of each node to its neighbors, and only delivering one set of signals to that neighbor. The signals driven by the controller that indicate the command, address, and write data are simply passed from one node to the next, since this information only changes from the controller directly. For the returned acknowledgements and the read data, each node simply muxes between its local ack/read_data (when the command was directed to that particular CFG_BUS node), and the downward neighbor when being sent upward (to the CFG_BUS controller). To support transport delays and the fact that the signals may not be able to pass through all the CFG_BUS nodes in a single cycle, a register is placed inside each node before passing the data to the neighbor. In addition, there is a programmable path to tell the node whether to use the register in the path, or not to (if the timing permits). This allows less latency to occur on the CFG_BUS than registering each node, and can also be tailored once the layouts have identified how far the signals can travel in a cycle. Figure 2-3 illustrates the CFG_BUS bus flow.

Each HIU datapath architecture of the CFG_BUS is depicted in Figure 2-4. Registering of address, data, and control signals will only be included if timing requires it. Within the HIU, a small block of synchronization and control logic will reside, which is responsible for decoding of the local node address and translation of the CFG_BUS interface into the AU clock domain to which the HIU corresponds. Since each HIU shall provide its own local decode, only one module select must be sent to each AU, rather than all 16. Additionally note that the CFG_BUS access signal will not be provided to the peripherals, as the HIU already performs local node decoding.

Figures 2-5 and 2-6 show a read and write cycles for the CFG_BUS in the AU clock domain, respectively. The same type of interface will be used for the timer modules, with AU_HIU_CLOCK replaced by CLKOUT2. Note that the CFG_BUS does not include byte enables. All control register accesses are considered to be 32-bits in width.

Several of the peripheral connections shall require special attention. Of particular importance are the timer (x2) and MCSP (x2) interfaces. Two timers are included in the C6211 design. The existing PBUS interface of the timer modules is modified to a CFG_BUS interface. Since the timer modules operate in the CPU clock domain (CLKOUT2 on the backend), no synchronizers or HIU interfaces are required for the timers. The timers are tied to a megamodule boundary version of the CFG_BUS.

I/O subsystem access to the CFG_BUS is provided solely through the L2 controller. L2 decodes the access address, and, if it detects a CFG_BUS address, the access is arbitrated with the normal CPU CFG_BUS requests. However, using the CFG_BUS for TC reads could potentially stall the TC (at least that channel) for a long time waiting for the CFG_BUS.

At reset, all the mod_sels are low, and all the mod_acks are low. The address, data, and rnw signals are don't cares, as they should only be sampled on a polarity switch after reset.

The CFG_BUS will occupy the existing C6201 PBUS memory space. CFG_BUS will support 16 module selects, each decoding to a different address space. The following module selects and address ranges are defined.

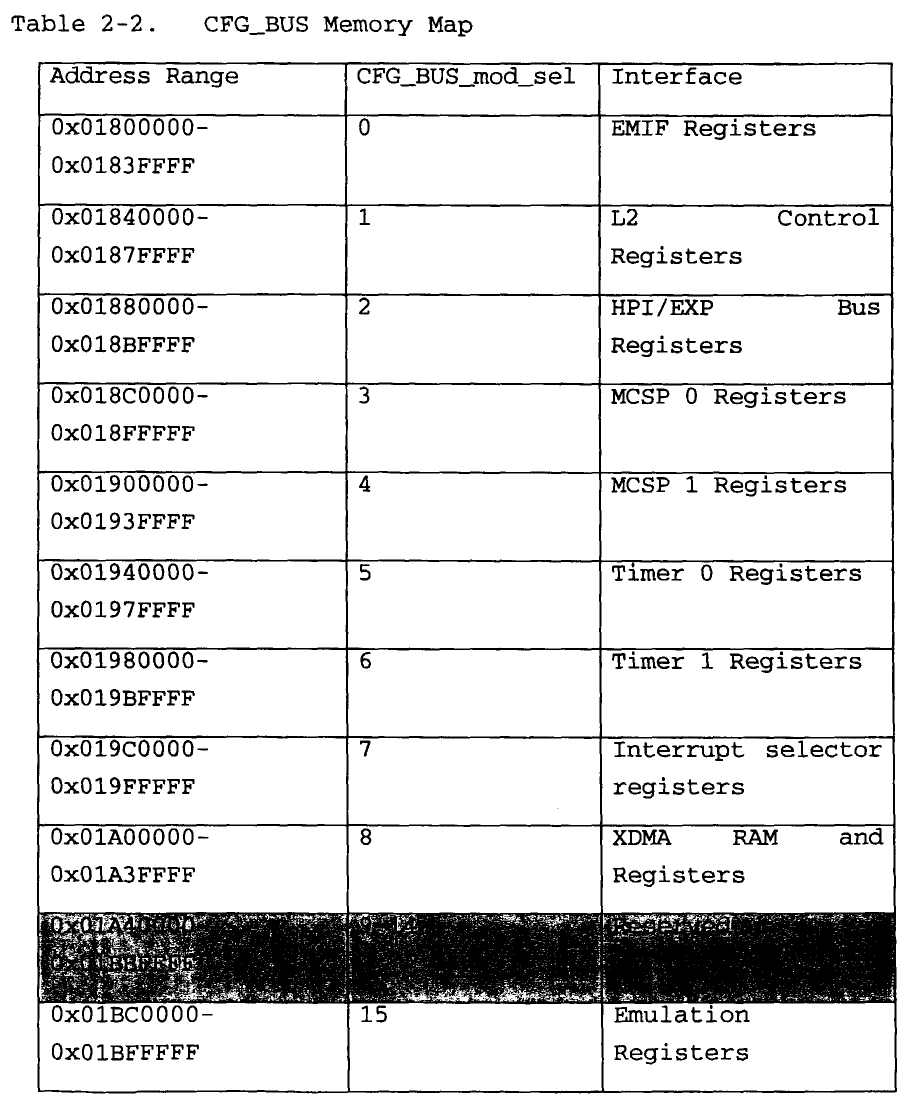

Read and write requests from the L1s and L2 banks are consolidated in L2, and passed onto the I/O subsystem as required via a transfer request (TR) node. The TR node is a simple 3-ported entity, which accepts request packets from either upstream nodes or the local node, prioritizes them accordingly, and passes them onto the downstream node. The last downstream node is the I/O subsystem, which processes the requests. The TR bus may be shared by multiple requesters, which might include the L2 controller, L1 controllers (in future devices), CPU ports (CPU initiated DMAs or cache prefetches), or intelligent mastering peripherals such as PCI or host port interfaces (HPIs). The architecture of the TR bus is depicted in Figure 3-1. Because the TR node prioritizes on upstream and local requests, the relative priority of each requester is dependent on its position on the TR bus. While the traffic on the TR bus is anticipated to be minimal, the TR prioritization feature allows for an upstream TR node to lock up the TR bus with requests. To prevent this, a simple round-robin token passing scheme is implemented on the TR bus. The token is passed from upstream nodes to downstream nodes (same as the request flow), and will prevent upstream nodes from hogging the TR bus bandwidth. The operational rule is that the TR node prioritizes an upstream packet above local requests unless it has the token, in which case the local request is allowed to proceed. The token is passed downstream on each cycle when there is no local request.

All requests are posted to the I/O subsystem via the TR bus. Access requests are placed on the TR bus in a packetized format, referred to as a TR packet. The TR packet describes the access to the I/O controller. The format of a TR packet is depicted in Figure 3-2. As depicted, all TR packets require 2 CPU clock cycles to submit. Access to the TR bus is provided via the aforementioned TR node. The TR node prioritizes requests from upstream nodes and the local node, and provides a stalling mechanism and pipeline registers to ensure that no data is lost.

The requester interface to the TR node is a simple two-wire handshake mechanism. To make a request, the requester must drive the first TR word on the TR data bus, and assert the request input on its local TR node. If stall is low (inactive), then the TR node may be driven with the second data word on the next cycle. If stall is sampled high, then the TR data word may not be changed. The same restriction applies after the second word is driven to the TR node- it must be held until stall is sampled low. The stall signal from the TR node may come in at any time, and should be registered by the local requester. Submissions on the TR node may occur back-to-back, however, the TR node may insert stalls. Figure 3-3 depicts a TR transaction, with a stall inserted in the second data word. Note: that the REQ bit is considered at the 69^{th} bit of the TR packet, and indicates a pending request.

All requesters on the TR bus are assigned a requester ID. The requester ID is used by the I/O subsystem to report information back about the requests that have been accepted and processed. Each requester is responsible for including its requester ID in the TR packet as shown in Figure 3-2. The following requester IDs are defined.

**Table 3-1**

| Requester ID Assignment | |
|---|---|
| REQ ID | Module |
| 000 | L2 controller |
| 001 | HPI |
| 010 | XDMA Controller |
| 011-111 | Reserved |

In addition to the TR bus, requesters must interface to a narrow bus called the queue acknowledge bus, or the QACK bus. This bus reports information back from the I/O subsystem about which TR packets have been accepted. The purpose of this bus is to provide a handshake mechanism with the requesters to ensure that the limited I/O subsystem is not oversubscribed to. The QACK bus is a 7-bit wide bus, operating synchronously to the CPU clock. This bus contains a valid bit, 3-bit priority level (mapping to priority bits of the TR packet) and a 3-bit requester ID. This bus is driven valid for only one cycle by the I/O subsystem for each TR packet which is accepted. Figure 3-4 illustrates the QACK bus operation. In this example, 3 TR requests have been accepted by the I/O subsystem.

Each requester implements a small counter for each priority level on which it will submit requests of the I/O subsystem. The XDMA controller includes two counters (levels 1 and 2), and the L2 controller includes a single counter (for level 0). The HPI submits requests on level 1 only, however, it may not require an allocation counter. The QACK bus may be provided at the megamodule boundary however in the event that this is false.

For each TR packet submitted, the requester interprets the priority of the TR packet and decrements the appropriate counter by 1. Once a counter is decremented to 0, no TR packets may be submitted on that priority level, and the requesting module stalls. The counters are incremented by detecting a condition on the QACK (queue acknowledge) bus. A static decode of the QACK bus provides the appropriate increment signal. An exemplary functional counter set for two priority levels is depicted in Figure 3-5.

Completion of a transfer by the I/O subsystem is transmitted over a third bus, called QCOMP. This bus contains a 5-bit return completion code and a valid bit, and operates synchronously to the CPU clock. If enabled by the TR parameters (see Table 3-2 below), the I/O subsystem will drive the Report Code specified in the TR parameters on this bus for one clock cycle. The operation of the QCOMP bus is depicted in Figure 3-6.

The report words transmitted over the QCOMP bus are copied directly from the TR parameters. Thirty-two possible codes may be specified in the TR parameters. The following codes are allocated.

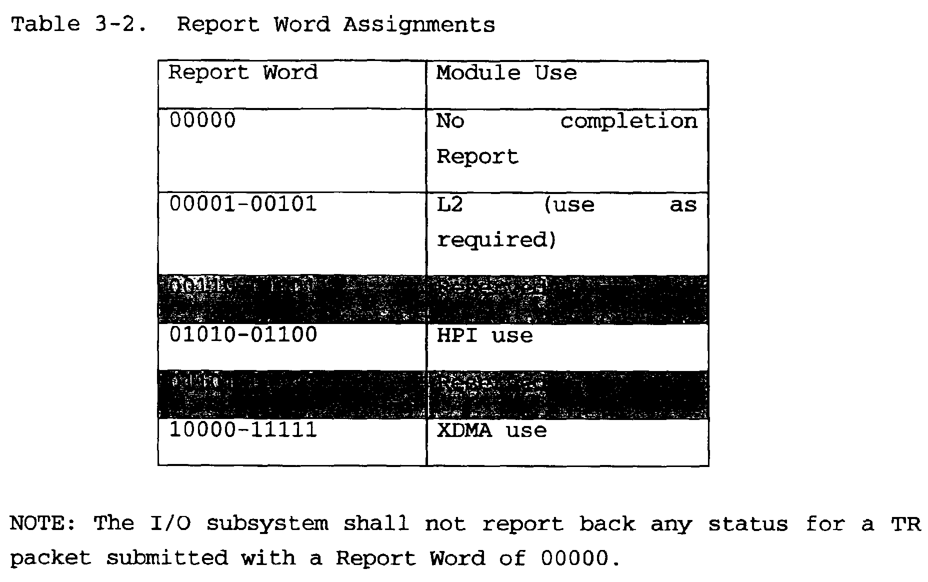

The upper 16 report word codes may be used for interrupt generation or XDMA event chaining, as described later herein.

The TC is a highly parallel and highly pipelined memory transaction processor, which serves as a backplane to which many peripheral and/or memory ports may be attached. The TC provides many features above and beyond the existing C6201 DMA controller, including support for multiple concurrent accesses, cycle-by cycle arbitration for low turnaround, and asynchronous operation of all ports.

The transfer controller may be broken into three sections, identified as the queue manager where requests are buffered, the TC HUB, which contains the channel registers and addressing hardware, and the HUB interface units which act as a buffer between the TC HUB and the memory or peripheral port.

The TC accepts access requests from the TR bus via the queue manager. The queue manager is a 512 byte RAM divided into 3 separate queues, which operate as circular FIFOs. As requests are removed from the TR bus, the priority level is interpreted and the access parameters are stored into the appropriate queue.

The queue sizes are as follows:
•• high priority (queue/channel 0) = 96 bytes (6 entries)
•• medium priority (queue/channel 1) = 208 bytes (13 entries)
•• low priority (queue /channel 2) = 208 bytes (13 entries).

The appropriate channel in the TC empties each queue manager RAM queue. As a channel access completes, the TC channel checks the head of the queue manager queue for that channel and loads the request parameters into the channel registers if another access is pending. Requests within a given channel always complete in order, and are always run to completion before the next access for that channel begins. A block diagram of the queue manager is depicted in Figure 4-1.

The queue manager is responsible for reporting that it is accepting a request as the channel registers process them. The report is transmitted over the QACK bus, as described earlier herein.

The heart and soul of the TC engine is the TC HUB, consisting of the source (SRC) and destination (DST) pipelines, along with the routing unit. The pipeline consists of the following stages:
- Q Queue.: Read Queue RAM - receive acknowledges from ports (1 cycle for transport)
- M Mapping.: Read and write ready's from the ports are evaluated- Port to channel mappings.
- P Prioritization.: Prioritize which channel's access to perform
- A0 Add stage 0.: First half of a pipelined add to adjust SRC/DST address and word (element) count
- A1 Add stage 1.: Second half of pipelined add to adjust SRC/DST address and word (element) count
- C Command.: Issue read or write command to the ports. One cycle for transport.

A simplified block diagram of the TC pipeline is depicted in Figure 4-2.

The source pipeline (SRC Pipeline) is responsible for two types of commands. Read commands are always issued from the SRC pipe. Additionally, the SRC pipe is responsible for issuing pre-write commands.

Pre-writes introduce a new concept called write driven processing. Traditionally, DMA controllers perform read driven processing, where writes are not performed until read data is available. While sufficient for simple I/O traffic, increased bandwidth requirements and higher system integration levels require a more efficient mechanism. The classic downfall of read driven processing is evident when transferring data from a fast port to a slow port; for example, from the internal memory (L2) port to an external memory port talking to asynchronous memory. Because the write side of the transfer is slow, the read port is tied up while the writes complete, which reduces the bandwidth of the internal memory for the processor or other peripherals to utilize. Write driven processing eliminates this restriction by allocating space in the destination port before issuing the read command. While this is occurring, accesses can continue to occur to the faster memory port. Once the destination buffer has been allocated, the read commands can begin and will operate at the speed of the source, rather than the speed of the destination, thereby maximizing bandwidth to all ports. The pre-write commands of the SRC pipe, in conjunction with the HIU buffering of each port (see Figure 4-4), enable this function.

The DST pipeline is responsible for issuing write commands to the ports. The DST pipeline also receives read responses (returning read data) from the ports and accepts read data into a structure known as the routing unit. The routing unit is functionally a crossbar between all of the TC read ports and the write ports, such that accesses may be made in a fully orthogonal manner, including external to external, external to peripheral, peripheral to external, external to internal, etc. The routing unit is responsible for ensuring that data is properly aligned to the destination port, accounting for the number of words being returned by each port and the endian mode of the device. The DST pipe is also responsible for detecting the end of a transfer and driving the QCOMP bus with the appropriate report word specified in the TR parameters. The format and function of the QCOMP bus have been described earlier herein.

The SRC and DST pipes operate independently from one another. Each pipeline of the TC can issue a command on each megamodule clock cycle. In this manner, the arbitration of the TC is pipelined, resulting in near zero turnaround time from one access to the next for each and every port (actual turnaround can be as low as zero cycles as determined by the port).

Each port reports what is referred to as a "default burst size" back to the TC HUB. These values represent a number of elements, which the TC will try to use as a minimum access size to make best use of the port bandwidth. The default burst size inputs to the TC are presented at the module boundary, and should be tied high or low at the chip top level. The default burst size for a port represents the granularity with which the TC will try to issue commands to each port. The value for each port is between 1 and 256 words, however, in practice only the lower end of this spectrum is used. The default burst size for each port is a function of the port interface. For example, a serial port natively performs sample by sample accesses, so a default burst size of 1 word may be sufficient. A main memory port servicing full rate SBSRAM however, may require a burst size of 8 to 16 words to maintain efficiency.

Default burst size is the normal address adjustment which the TC attempts to make as it progresses through a transfer. However, depending on the options bits specified for the transfer, other adjustment values are possible. For example, if the user specifies fixed addressing, then no address updates are performed. Likewise, reverse addressing may be specified, which will force the TC to subtract the default burst size from the address rather than add it. A final complication is added by the programmable index (element and line index) which may be specified. In these cases, the TC will process one element per command. It is further noted that element sizes of bytes and halfwords additionally incur a "1 access per element" type penalty (though slow ports may not see a performance hit). Whenever possible, it is suggested that word accesses be performed to maximize performance. While this is inefficient, the bulk of transfers specifying these modes are for serial port servicing or other slow sample sorting functions, and thus the effect is tolerable. The following table outlines the required TC addressing functions, as determined by the DIR fields supplied in the TR packet.

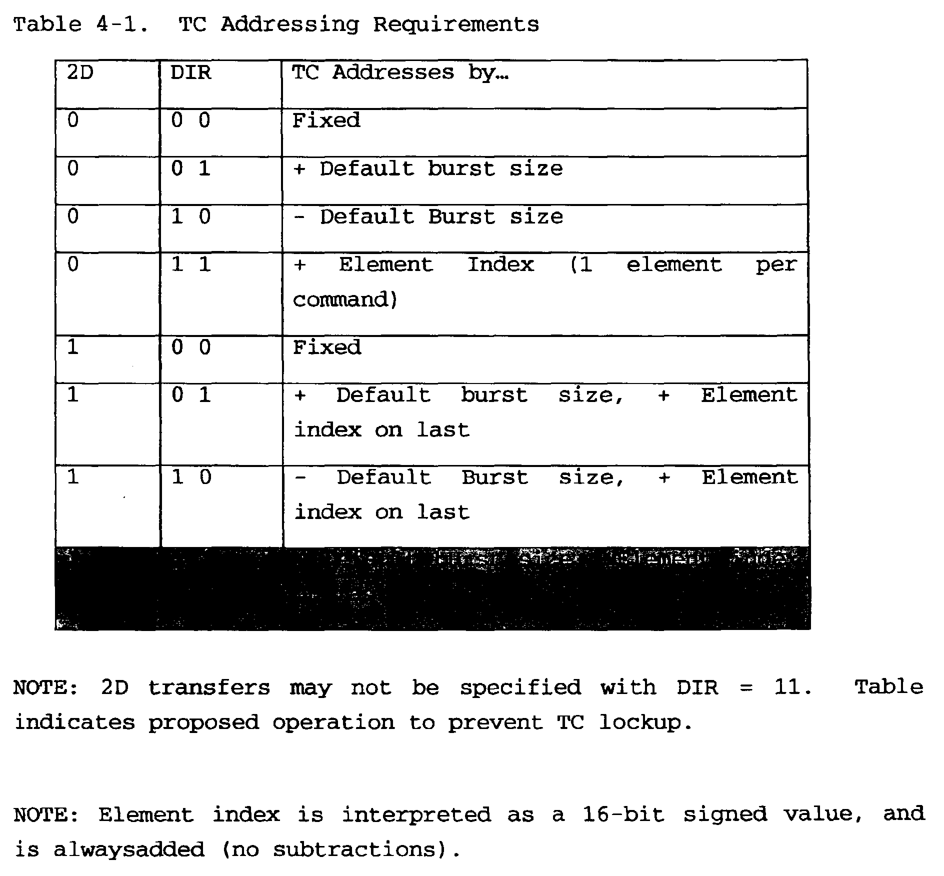

When the SRC or DST pipelines issue a command, it is issued for the lesser of either:
•• the default burst size of the port,
•• the actual word/element count of the transfer, or
•• (the 2's complement of) | (address) LS bits of the address, where the 2's complement vs. address decision is determined by the address direction (forward vs. reverse), and the number of LS bits is determined by the default burst size for the addressed port

For example, a 1000 word transfer from a port with a default burst size of 16 words will result in 64 commands, for 16 words each, posted to the port. The port will see a series of contiguous commands however, and be allowed to stream data as fast as possible. If additional channels of the TC require service of the active port, those commands will be prioritized and inserted into the pipeline as appropriate, and again trying to optimize according to the default burst size of the port. In this manner, the TC always maximizes whatever bandwidth is available on each port.

Because the SRC and DST pipelines are independent, read response data returned to the DST pipe may be overlapped with additional read or write commands from either pipeline. The amount of overlap is dependent on the port architecture, and not a function of the TC. The port is only required to process commands in the order is which they are issued.

The third bulleted item listed above is of particular importance. When accesses are performed to addresses that are not aligned according to the default burst size of the port, the TC performs a natural alignment to that burst size. For example, an 11 word transfer to a port with a DBS of 8 words, at a starting address of 0x80000008, will be broken up as follows. The first access will occur for 6 words, accessing words 0x80000008 through 0x8000001C. The TC determines that 6 words may be accessed by taking the two's complement of the LS 5 bits of the address. Five LS bits are chosen to align the accesses on an 8 word boundary (8 words = 32 bytes => 5 bits). The value six is thus calculated as:
0x80000008 & 0x0000001F = 0x08
2s_Comp(0x08) = 0xF8
LS_5(0xF8) = 0x18
0x18 = 24 bytes, or 6 words

A second access is then performed for the remaining 5 words starting at 0x80000020, which is aligned on the DBS size (8 words) for the port (0x80000008 + 0x18 = 0x80000020). For transfers which require multiple commands, this alignment facility will always be present. The first access of any such transfer will occur at the requested address, and subsequent accesses will be aligned to the port DBS.

It is worth noting that the above alignment facility of the TC operates in both forward and reverse addressing modes. If reverse addressing is specified, then instead of taking the two's complement of the LS bits of the address, the LS bits may be taken from the address directly. For example, an access request for 11 words starting at 0x80000008, will begin with an access for 2 words, calculated as follows:
0x80000008 & 0x0000001F = 0x08
LS_5(0x08) = 0x08
8 bytes = 2 words

A second access will then be performed to an address ox 0x80000000 (0x80000008 - 0x08) for the full default burst size, or 8 words. After this access 1 word remains to be transferred, so a final command is issued by the TC at an address of 0x7FFFFFE0. Note again that both the second and third commands are issued to addresses aligned to 8 word (32 byte) boundaries.

Only the first command in any series of commands for the same transfer will be misaligned. In the TC, the significance of the natural address alignment facility may not seem significant. However, it should be noted that various peripherals may rely on this mechanism to simplify their design. For example, the EMIF may use this mechanism to prevent it from having to implement page crossing logic, which is a boundary condition. Both the TC SRC and DST pipes continue processing until a command is complete (element count and line count have been exhausted). A special case exists when a 1-D to 2-D or 2-D to 1-D transfer is encountered, as only one of the machines (SRC or DST) evaluates the line count. In this case, the TC SRC/DST pipes must evaluate the other machines 2D-specifier bits (2DS or 2DD from the initiating TR packet) to determine if a transfer is truly complete. The SRC/DST pipes must exhaust both the line count and element count to complete a transfer.

The TC module has a key emulation requirement which must be addressed. In order to stop the processor gracefully under emulation control, the TC must provide three individual signals to the emulation logic. These signals will inform the emulation logic that the respective queues of the TC have been emptied, and the channel registers are idle. The following table outlines the requirement.

**Table 4-2**

| Queue Status Signals | |
|---|---|
| Signal Name | Is set to 1 when... |
| CH0_IDLE | Channel 0 channel registers are empty and QM queue 0 is empty |
| CH1_IDLE | Channel 1 channel registers are empty and QM queue 1 is empty |
| CH2_IDLE | Channel 2 channel registers are empty and QM queue 2 is empty |

The emulation logic uses these signals to determine when it is okay to stop the device. All three signals must be provided, such that the emulation logic can choose which queues to evaluate. These three signals are routed to a register in the emulation space. Additionally, the three signals listed above must be routed to the XDMA module, which provides read access to these signals via the CHNL_EMPTY register. This facility allows application code to determine when the channels are empty, which is useful for determining acceptable points of a full context switch in multitasking code.

A TC port may be divided into two sections. The application specific design (ie the MCSP, HPI, EMIF) is referred to as the AU, or application unit. Between the AU and the TC HUB is the second module, known as an HIU. The HIU serves several functions. Firstly, the HIU institutes an amount of buffering for read and write data to support the write driven processing. Secondly, the HIU prioritizes read and write commands from the SRC/DST pipelines such that the port sees a single interface with both access types consolidated. A final function of the HIU is to decouple the port interface clock domain from the megamodule clock domain (see Figure 4-4).

The TC protocol requires an amount of buffering in each port's HIU. As a consequence, the opportunity exists to use the buffering to additionally decouple the AU clock domain from the megamodule clock domain. The interface from the AU side of each HIU is synchronous, but may operate at a speed independent of the megamodule clock speed. For example, if the megamodule clock speed is 180MHz, the EMIF may be operated at a speed completely asynchronous to this rate. Likewise, the serial port interface may operate asynchronously to both the EMIF and CPU, as well as any other ports in the system. Note that the HIU also includes the synchronization and interface logic for the CFG_BUS interface. This is done in the HIU so that the AU can operate in a single clock domain. For more information on the CFG_BUS interface, please refer to the discussions earlier herein referring to Figures 2-1 through 2-6. A block diagram of the HIU is depicted in Figure 4-4.

In an attempt to consolidate the synchronizers for each port into one place, and to allow each peripheral to operate in only one clock domain, the HIU includes several synchronizers in addition to those required for the AU-HIU interface. These are described below.

The HIU for each AU shall include synchronizers for translating CFG_BUS into the AU clock domain. This is expected to be a very low gate count interface, but will require synchronization of the module select and module acknowledge signals between the HIU and AU clock domains.

Each HIU includes of a set of synchronizers for XDMA and interrupt synchronization. This is again in the HIU module to consolidate all the synchronizers into a limited section of the design. The following synchronizer requirements exist.

**Table 4-3**

| Event Synchronization | | | |
|---|---|---|---|
| HIU Design | Event Synch's | AU Side | HIU Side |
| MCSP | None required | None required | N/A |
| EMIF | 0 | /EINT7 (pin) | Route to XMDA event 5 and interrupt selector EXT_INT7 |
| | 1 | /EINT6 (pin) | Route to XMDA event 4 and interrupt selector EXT_INT6 |
| | 2 | /EINT5 (pin) | Route to interrupt selector EXT_INT5 |
| | 3 | SDINT (EMIF) | Route to interrupt selector SD_INT |
| HPI | 0 | /EINT4 (pin) | Route to interrupt selector SD_INT4 |
| | 1 | HPI_DSP_INT | Route to interrupt selector DSP_INT |
| | 2 | PER_TR_REQ | TR packetizer request valid |
| | 3 | TR_PER_ACK | TR packetizer request accept |

Each AU interface is identical. Each HIU interface may be tied to a single peripheral or memory AU. Multiple AUs may be tied to a single HIU provided the bandwidth requirement for each is low enough. The port mapping for the DSP is as follows.

**Table 4-4**

| TC HUB Port Mapping | | |
|---|---|---|
| Physical Port | Logical Port | Port Description |
| Port 0 | Port 0 | Internal memory port |
| Port 3 | Port 7 | EMIF |
| Port 2 | Port 5 | HPI |
| Port 1 | Port 2 | MCSP0/1 |
| Logical ports 1, 3, 4, and 6 are unused in the LC implementation. | | |
| NOTE: The logical port number is not meaningful- the TC maps addresses to ports via a static mapping module (lookup table). The TC has no other knowledge of the system memory map. The logical port number is presented to correlate back to the physical memory map. | | |

The AU-HIU interface consolidates read and write commands to the AU. Recall that commands are presented from the HUB for up to the default burst size of the port, so each AU must implement a small incrementer and decrementer to adjust the address and word count respectively as the AU executes the command. The size of the incrementer and decrementer must only be up to the bit position defining the default burst size of the port, since the TC HUB will handle alignment issues up to that granularity. Additionally, the bottom two bits of address may be assumed to be zero, as the byte enables associated with the interface account for sub-word accesses. Thus, the formula for determining the incrementer/decrementer size is:
Address incrementer/decrementer size (in bits) = log2(default burst size (in bytes)) - 2
Word count decrementer size (in bits) = Address incrementer size + 1

The word count decrementer size can be decreased by 1 bit, by forcing the 0 condition to be interpreted as a full burst size. This complicates control logic however, and is not recommended.

The port implementations on the DSP, have the following burst sizes and resulting incrementer/decrementer sizes. The incrementer/decrementer location must be in the AU clock domain.
EMIF DBS = 8 words, incrementer/decrementer size = 3 bits
MCSP DBS = 1 word, incrementer/decrementer size = 0 bits (not required)
HPI DBS = 4 words, incrementer/decrementer size = 2 bits

The following section outlines the function of the AU-HIU interface depicted in Figure 4-5.

The following table identifies each interface signal and its function.

**Table 4-5**

| AU-HIU Signal Description | | | |
|---|---|---|---|
| Signal | AU dirtn | HIU dirtn | Function |
| AU_HIU_CLOCK | O | I | Port clock |
| HIU_AU_ADDR(31:0) | I | O | command address (2 LSBs 00) |
| HIU_AU_WD_SIZE(7:0) | I | O | command word count |
| HIU_AU_READ | I | O | read command |
| HIU_AU_WRITE | I | O | write command |
| HIU_AU_CMD_VALID | I | O | command valid |
| HIU_AU_FIX_ADDR | I | O | fix address |
| HIU_AU_DEC_ADDR | I | O | decrement address |
| AU_HIU_CMD_ACK | O | I | command accept |
| AU_HIU_RD_DATA_ERROR | O | I | read data error |
| AU_HIU_WR_DATA_ERROR | O | I | write data error |
| AU_HIU_WR_DATA_ACK | O | I | write data accept |
| AU_HIU_RD_DATA_VALID | O | I | read data valid |
| AU_HIU_RD_DATA(31:0) | O | I | read data bus |
| HIU_AU_RS(3:0) | I | O | byte enables for reads |
| HIU_AU_WS(3:0) | I | O | byte enables for writes |
| HIU_AU_WR_DATA(31:0) | I | O | write data bus |

The AU-HIU interface is driven by AU_HIU_CLOCK, which is an output of the AU. This is done to allow each port to operate at a speed commensurate with the interface which it provides. All outputs of the AU should be driven synchronously to AU_HIU_CLOCK; all inputs to the AU should be driven synchronously to AU_HIU_CLOCK.

Proposed timing for the AU-HIU interface is as follows:

**Table 4-6**

| HIU Interface Timing | | |
|---|---|---|
| Timing Parameter | Description | Value |
| Tsu(OUTV-CKOH) | Setup time for all HIU inputs | 2ns |
| Td(CKOH-OUTV) | Delay from AU_HIU_CLOCK on HIU outputs | 1ns |

Commands show up at the HIU interface synchronously to AU_HIU_CLOCK. Commands are submitted over the HIU_AU_ADDR (address), HIU_AU_WD_SIZE (word count), and AU_HIU_READ and AU_HIU_WRITE. These signals are further augmented by a fourth signal, HIU_AU_VALID, which is used to indicate the presence of a valid command presented to the AU. All HIU sourced signals are synchronous to AU_HIU_CLOCK.

The AU accepts a command by asserting AU_HIU_CMD_ACK, which will inform the HIU that a command has been accepted, and presents the next command to the port, if it is ready. The port (AU) must latch the access information on HIU_AU_CMD, HIU_AU_ADDR, and HIU_AU_WD_SIZE. Assertion of the CMD_ACK signal will force the HIU to switch to the next entry on the next AU_HIU_CLOCK cycle. Because the entire interface is synchronous to the AU provided clock, the state machine to accept commands is fairly straightforward. A command accept cycle is depicted in Figure 4-6.

The HIU makes no assumptions about the speed at which the AU will be able to accept a command. The AU may accept a command on the cycle in which it becomes valid if the interface is fast enough. However, in practice it is believed that all inputs to the AU will be registered, and thus the fastest AU will only be able to accept a command every other cycle. This is not deemed a performance hit however, since the expectation is that the fastest ports will have a default burst size large enough that the command acknowledge time is insignificant, and overlapped with data accesses.

Once a command is accepted by the port, it must interpret the command and process it accordingly. Functionally, there is nothing which requires that the port accept a command immediately. The effect of this is that the AU_HIU_CMD_ACK signal is not asserted for a few cycles. This will be a function of the desired port functions and throughput requirements. The HIU_AU_CMD_VALID signal must be used to qualify the read, and write command signals. If HIU_AU_CMD_VALID is not active (high), then the command is not valid, and should not be executed.

Similar to acceptance of commands by assertion of AU_HIU_CMD_ACK, the AU must inform the HIU that write data is accepted by asserting the AU_HIU_WR_DATA_ACK signal, synchronously to AU_HIU_CLOCK. Figure 4-7 illustrates the write data acknowledge timing.

Figure 4-7 points out several features of the write data acknowledge strobe. Firstly, the AU_HIU_WR_DATA_ACK works identically to the AU_HIU_CMD_ACK strobe. The HIU will shift to the next data entry for either the active command or the next command on each rising AU_HIU_CLOCK edge for which AU_HIU_WR_DATA_ACK is high. Secondly, note that write data for a command is not valid until the cycle after a command becomes valid (command is valid in cycle 12, but data not driven until cycle 13). In the case of a back to back write as shown above, this provides gapless access, plus a consistent model for AU designs.

A unique constraint exists for write commands, which must be addressed. Because of the queuing mechanisms in the HIU, the AU cannot accept a write command (AU_HIU_CMD_ACK asserted with HIU_AU_CMD_VALID and AU_HIU_WR active) until it has accepted all the data from the previous write command. This rule must be strictly followed by the AU, or else the write buffer pointers will become corrupted. This rule is fairly simple to follow however, as the end of a command can be detected by tracking the word count, which the AU must do anyway. If a write command cannot be completed, the AU may indicate an error condition by asserting the AU_HIU_WR_DATA_ERROR. This signal needs to be asserted only once per write command, and may be asserted at any time during the course of the command. It does not need to be asserted concurrently with any other signals, but must be asserted synchronously to AU_HIU_CLOCK. In the event of a write data error, it is important that the AU still assert the AU_HIU_WR_DATA_ACK signal the appropriate number of AU_HIU_CLOCK cycles to exhaust the command, else the HIU buffer pointers would become corrupted. The write error condition merely forces an exception to be signaled back to the CPU of the device; it does not in any way affect the HIU data buffers.

On current TMS320C62X devices there is no concept of a write data error. The AU_HIU_WR_DATA_ERROR signal is tied low to prevent spurious errors from being reported to the HIU.

When returning read data to the HIU in response to a read command, the AU must indicate the presence of valid data on the AU_HIU_RD_DATA bus by asserting the AU_HIU_RD_DATA_VALID signal. This signal is asserted (high) for each AU_HIU_CLOCK cycle during which data is returned. The HIU uses this signal to latch the data into its internal data buffers, and additionally to maintain its internal pointers. The AU may not assert the RD_DATA_VALID strobe for returning data for a command on the same cycle as the command is accepted (AU_HIU_CMD_ACK high). This condition is highly unlikely, however slow ports such as the serial ports may have to take care to ensure this condition is met.

In the event of a read error, the AU must assert AU_HIU_RD_DATA_ERROR concurrently with AU_HIU_RD_DATA_VALID for each word of read data that is returned invalid as depicted in Figure 4-8.

On current TMS320C62X devices there is no concept of a read data error. The AU_HIU_RD_DATA_ERROR signal is tied low to prevent spurious errors from being reported to the HIU.

Write accesses replicate the appropriate byte or halfword onto all bytes/halfwords of the bus, and drive the byte strobes accordingly. Hence, a port command to write 1 word may actually only write 1 byte or 1 halfword. In this sense, the word count provided with the command can be thought of as an access count. Byte strobe information may be taken directly from the HIU_AU_WS(3:0) bus. Read accesses do not require byte and halfword accesses, so no special requirements exist. Byte replication hardware is incorporated into the HIU.

Concurrent with the command address, word count, and command type, the HIU may also drive the HIU_AU_FIX_ADDR signal. Although left out of most of the timing diagrams discussed herein, this signal is important, and must be addressed. The TC mechanism allows users to specify DMAs which have the source or destination address fixed. This transfer type might be useful for addressing a FIFO, wherein multiple reads or writes must be performed at the same address. The fundamental problem with this mechanism is that regardless of what the access parameters tell the TC HUB, the port, not the HUB, actually controls fixing the address.

The TC HUB is responsible for parsing the access parameters and passing them to the ports in "default burst size" chunks. For example, if the EMIF specifies a 16-word burst size, a 64-word burst will be broken into 4 commands to the port. If the specified parameters also fix the source address, it would make no difference because the port would only see an address and a word count, and know nothing about the fixed address requirement.

Hence, to address this problem, the HIU will pass the fix address signal from the TC HUB to the port AU, signaled on HIU_AU_FIX_ADDR. When set, the AU will perform the command as normal, however, the address will be fixed at the original address supplied with the command on HIU_AU_ADDR(31:0). HIU_AU_FIX_ADDR is considered valid only when AHIU_AU_CMD_VALID is active (high).

The I/O subsystem is responsible for coarse addressing of each memory and/or peripheral port. This poses a potential performance problem for frame synchronized events which specify reverse addressing. Recall that the TC attempts to address each port by its default burst size, thereby allowing the port to perform fine grain addressing as it sees fit. When reverse addressing is specified, the TC cannot add the default burst size to the address. The same restriction applies to frame synchronized transfers which specify a programmable index (C6201 style frame synchronized events with DIR = 11). Similar to the fixed address mode, the HIU shall pass a decrement signal (from the TC HUB) through to the AU (HIU_AU_DEC_ADD), which will inform it that the supplied address should be decremented rather than incremented as the transfer proceeds. A high on HIU_AU_DEC_ADD indicates that reverse addressing should be specified; a low value indicates that normal addressing should occur. As a note, HIU_AU_DEC_ADD and HIU_AU_FIX_ADDR are mutually exclusive. HIU_AU_DEC_ADD is considered valid only when HIU_AU_CMD_VALID is active (high).

The functional requirements of the AU-HIU interface are summarized below:
•• The AU will monitor the HIU_AU_VALID bit to determine when a valid command exists on the HIU_AU_RD, AU_HIU_WR, HIU_AU_ADDR(31:0) and HIU_AU_WD_SIZE(7:0) (word count) busses. All signals are synchronous in the HIU to AU_HIU_CLOCK.
•• The port can accept a command by asserting AU_HIU_CMD_ACK. This signal is normally only asserted for one port clock cycle, however, the HIU will support back-to-back command acknowledges should an AU someday be designed which supports it. The AU should latch the information AU_HIU_ADDR(31:0), HIU_AU_WD_SIZE(7:0), and AU_HIU_RD|WR, HIU_AU_FIX_ADDR, HIU_AU_DEC_ADD as the assertion of AU_HIU_CMD_ACK informs the HIU that it is okay to change the values on these busses (this occurs on the rising AU_HIU_CLOCK edge in which AU_HIU_CMD_ACK is high).

Note that a special condition exists in the case of write commands. The AU may not accept a write command until a previous write command has accepted all of its data (see Figure 4-7).

As a note, acceptance of the command may NOT necessarily force deassertion of the HIU_AU_RD/WR or HIU_AU_CMD_VALID bits, as another command may already be posted. AU_HIU_CMD_ACK is asserted once for each cycle in which a command is accepted.
•• The AU informs the HIU when read data is being returned. This function is provided by assertion of AU_HIU_RD_DATA_VALID, which instructs the HIU to latch the AU_HIU_RD_DATA(31:0) bus and accept the data. The AU may assert AU_HIU_RD_DATA_VALID and drive AU_HIU_RD_DATA(31:0) for multiple cycles as long as the port can keep up. AU_HIU_RD_DATA_VALID must be asserted the appropriate number of cycles to completely exhaust the command (ie decrement word count to zero). The AU may not assert the AU_HIU_RD_DATA_VALID strobe on the same cycle as the AU_HIU_CMD_ACK strobe if the data is for that command. It is noted that this condition is highly unlikely, however, slow peripherals such as the serial ports may have to take care to ensure that RD_DATA_VALID is held off until after the read command is accepted.
•• In the event of a read error, the AU_HIU_RD_DATA_VALID strobe must be asserted to ensure the HIU read buffer pointers are not corrupted.
• •The AU informs the HIU that it is accepting write data and mask information by asserting AU_HIU_WR_DATA_ACK. Upon asserting this signal, the port should also latch HIU_AU_WR_DATA(31:0), as assertion of the accept strobe informs the HIU that it is okay to change the value on this bus. As with the read datapath, the AU may continuously assert the write data accept strobe provided that it can handle the data rate. The AU_HIU_WR_DATA_ACK signal must be asserted for the appropriate number of AU_HIU_CLOCK cycles to exhaust the command (decrement word count to 0). AU_HIU_WR_DATA_ACK must be asserted even in the event of a write error, to prevent the HIU write buffer pointers from being corrupted.
• •The AU informs the HIU of read exception conditions by asserting AU_HIU_RD_DATA_ERROR appropriately. Read data errors are signaled by asserting AU_HIU_RD_DATA_ERROR concurrently with AU_HIU_RD_DATA_VALID and the data (driven on AU_HIU_RD_DATA(31:0)) to which the read error corresponds. The read data is invalid if an error occurs, and thus the control flow simply asserts the data valid and data error strobes without driving data at all. This feature is provided for future revisions of the device and AU designs. In the first implementation (DSP), each AU design should tie AU_HIU_RD_DATA_ERROR low.
•• The AU informs the HUB of an exception condition for writes. AU_HIU_WR_DATA_ERROR is driven synchronously to AU_HIU_CLOCK, and may be asserted at any time during the write cycle. This feature is provided for future revisions of the device and AU designs. In the first implementation (DSP), each AU design should tie AU_HIU_WR_DATA_ERROR low.

The XDMA controller is a block which contains a RAM for storage of DMA parameters, priority encoder for prioritizing simultaneous events, and a simple state machine for reading stored DMA parameters and writing them to the TR bus via the TR node structure. The XDMA is intended to provide a superset of the existing (C6201/02) DMA controller functions, with several enhancements. Most notably, the use of RAM rather than registers allows significantly more parameters to be stored in the XDMA space, thus allowing more effective channels to be used. Secondly, the XDMA controller includes several hooks for allowing linking of DMA transfers. The XDMA is a new peripheral for C62x devices. A block diagram of the XDMA controller is depicted in Figure 5-1.

As shown, the XDMA controller consists of several key elements. These are: an event capture register, priority encoder, FSM (finite state machine) for reading parameters and transmitting them to the TR bus, XDMA parameter RAM, and a TR node. The following sections describe these blocks and the overall XDMA controller operation.

Events are signaled to the XDMA controller and captured in an event register. An event is signaled to the XDMA controller via a low-to-high transition on one of its sixteen event inputs. All XDMA event inputs are synchronized to the internal clock domain via either synchronization logic in the TC HIUs or individual peripheral blocks. All requesting logic to pulses XDMA event lines for at least a single cycle when making a request, ensuring that a rising edge is seen by the XDMA controller. Alternatively, peripherals and other requesting devices may transition their request signal high when requiring service, and leave it high until the request is processed by the I/O subsystem. This method requires additional hardware in the requesting device to detect the service by the I/O subsystem, and additionally limits pipelining of events, but is acceptable. All events driven to the XDMA controller shall be synchronized to the internal clock domain outside of the XDMA module. To consolidate the synchronizers in the system, the synchronization of events occur in the TC HIUs. The following XDMA events are proposed.

**Table 5-1**

| XDMA Event Sources | | |
|---|---|---|
| XDMA Event Number | comes from Block:Signal... | whose synchronizer is in... |
| 15 | MCSP:REVT1 | MCSP HIU |
| 14 | MCSP:XEVT1 | MCSP HIU |
| 13 | MCSP:REVT0 | MCSP HIU |
| 12 | MCSP:XEVT0 | MCSP HIU |
| 11 | XDMA internal- QCOMP = 11011 decode | None Required |
| 10 | XDMA, internal- QCOMP = 11010 decode | None Required |
| 9 | XDMA internal- QCOMP = 11001 decode | None Required |
| 8 | XDMA internal- QCOMP = 11000 decode | None Required |
| 7 | PF0:/EINT7 (megamodule boundary) | EMIF HIU |
| 6 | PF0:/EINT6 (megamodule boundary) | EMIF HIU |
| 5 | PF0:/EINT5 (megamodule boundary) | EMIF HIU |
| 4 | PF0:/EINT4 (megamodule boundary) | HPI HIU |
| 3 | EMIF0:SD_INT (megamodule boundary) | EMIF HIU |
| 2 | TIMER1:TINT (megamodule boundary) | None Required |
| 1 | TIMER0:TINT (megamodule boundary) | None Required |
| 0 | HPI0:DSP_INT | HPI HIU |
| NOTE: Events 8-11 are generated by detection of the indicated QCOMP codes. This function is described later herein. | | |

In addition to the event register, the XDMA shall also include an event enable register, to allow the CPU to selectively enable and disable events as required. Events signaled to the XDMA controller are always captured in the event register (even with the event disabled). This is analogous to an interrupt enable and interrupt pending register architecture. Re-enabling an event with a pending event signaled will force the XDMA controller to process that event according to its priority. The user may optionally initiate XDMA transfers by writing to the event set register. In this case, the event need not be enabled (because no other method exists for the CPU to initiate DMAs). Figure 5-2 depicts a functional diagram of an XMDA register.

This Figure 5-2 is presented to illustrate the desired functions of the various control register bits. All XDMA control registers and parameter RAM are accessible via the CFG_BUS (configuration bus).

As shown, the CPU has the capability to selectively enable and disable all events by writing to the EVT_EN_REG (event enable register). Additionally, a pseudo-register, EVT_CLR_REG (event clear register) is included to allow the CPU the capability of clearing posted events. The latter feature is especially useful following a system reset, and in the case of a peripheral lockup or error condition.

Events posted to the XDMA controller are captured in the EVT_REG. The EVT_REG contains one bit for each event, or a total of 16 bits. Once set, the EVT_REG bits remain set until the XDMA controller FSM sends the TR packet for the event, or the CPU writes to the EVT_CLR_REG with a 1 in the bit position corresponding to the event. The CPU may directly set bits of EVT_REG by writing 1's to the corresponding bits of EVT_SET_REG. This feature provides the CPU the ability to submit DMAs in the system, and is also a valuable debug tool. Note that the event need not be enabled in this case.

A posted event in EVT_REG is enabled through the EVT_EN_REG to be passed onto the priority encoder and serviced by the XDMA controller. The EVT_EN_REG contains 1 bit for each event; a 1 in EVT_EN_REG enables the corresponding event; a 0 disables the event. All bits in EVT_EN_REG are cleared by a system (chip) reset to prevent spurious events from being serviced. Disabled events are still captured in EVT_REG.

In addition to the event and interrupt capture and enable registers, the XDMA controller includes a register accessible to the user to map several signals from the TC for the purposes of status reporting. Three signals from the TC are monitored. These signals indicate that TC channels 0-2 are empty, which is informative to multi-tasking applications to schedule context switches at opportune times. An example use might be as follows:

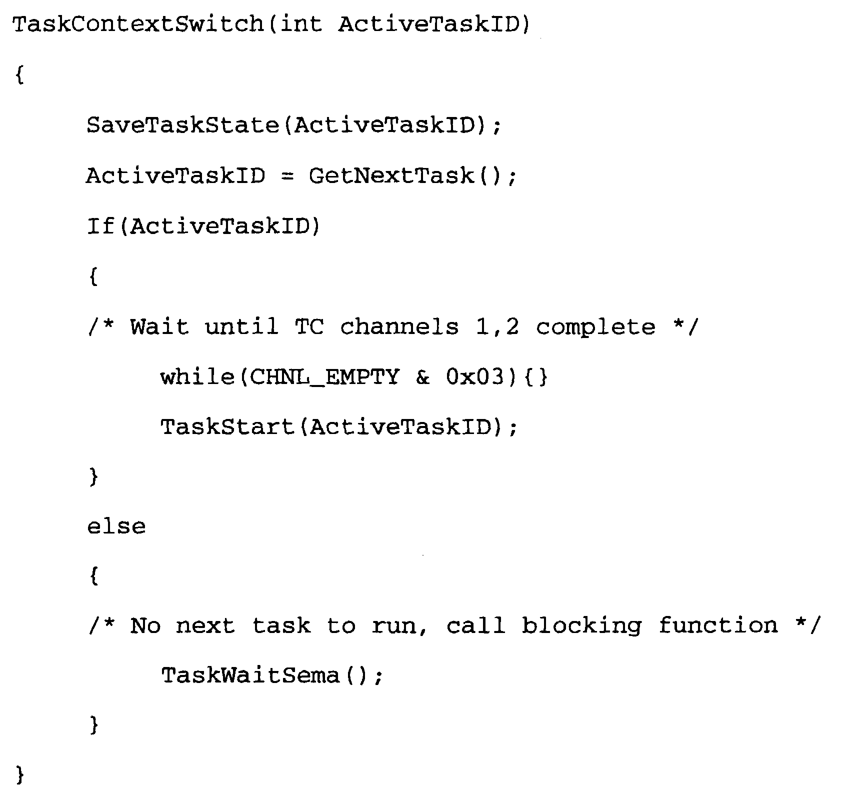

The TC module provides CH0_IDLE, CH1_IDLE, and CH2_IDLE. These three signals, in addition to being provided to the emulation logic are replicated in bits MT0, MT1, and MT2 respectively of the CHNL_EMPTY register. This register is considered read only, and may be implemented by any convenient means. The MTn bits may be taken from CHn_IDLE directly; no inversion or registering is required unless timing demands the latter.

Figure 5-3 illustrates the XDMA control registers bits. Reserved bits are returned as 0 during read operations; writing to them will have no effect.

Once posted to the XDMA controller, events are prioritized with a simple priority encoder to determine the order of event processing. This should not be viewed as the event priority however; the priority encoder is only a mechanism to sort out simultaneous events. The actual priority which an event has is determined within the parameters stored in the parameter RAM for the event, and is sorted out by the I/O subsystem.

Once prioritized, the XDMA controller reads one of the top 16 entries in the XDMA RAM to extract the parameters for the event. The parameters are read from the RAM and written to the TR bus. Depending on the parameters associated with the transfer, certain updates of the source and/or destination address may occur; likewise element, line, and line count updates may be required.

The XDMA includes a RAM bank, which stores the parameters for each event. Parameter sets may be linked to one another to provide processing of complex streams, sorting functions, and circular buffering. Parameters for an event are organized as depicted in Figure 5-4.

This format is valid for both endian modes. The XDMA Controller allows only 32-bit accesses to be made to/from the parameter RAM and control registers.

As shown above, each parameter set (called an entry) for an event consists of 6 words (32-bits), or a total of 192-bits. It is proposed that the XDMA RAM be 2Kbytes, which corresponds to storage of 85 complete parameter sets. The first 16 entries (384 bytes) contain the parameters to be sent to the TR node for each event; the remaining 69 sets (1656 bytes) may be used as linked parameter sets for the events. Note that 2K is not evenly divisible by 24 bytes- hence there will be 8 bytes which are unused.

The XDMA RAM design is not provided herein. The XDMA controller is capable of submitting TR packets in the required two CPU clock cycle period. As a further note which may affect the RAM implementation, the XDMA RAM, like the XDMA control registers, are accessible only via the CFG_BUS, which is 32-bits wide. The XDMA controller does not allow for halfword (16-bit) or byte (8-bit) accesses.

The following table outlines the XDMA parameter RAM as seen from the CPU (read as CFG_BUS). The structure and function of the CFG_BUS was described earlier herein. The following table outlines the proposed parameter storage.

**Table 5-2**

| XDMA Parameter RAM | | |
|---|---|---|
| Address | Function | Notes |
| | Reload/Link Parameters | |
| 0x01A0000 0 | Event 0, Options | Parameters for Event 0 |
| 0x01A0000 4 | Event 0, SRC Address | |
| 0x01A0000 8 | Event 0, Line/Element Count | |
| 0x01A0000 C | Event 0, DST Address | |
| 0x01A0001 0 | Event 0, Line/Element Index | |
| 0x01A0001 4 | Event 0, Element Count Reload/Link Address | |
| 0x01A0001 8 | Event 1, Options | Parameters For Event 1 |
| 0x01A0001 C | Event 1, SRC Address | |
| 0x01A0002 0 | Event 1, Line/Element Count | |
| 0x01A0002 4 | Event 1, DST Address | |
| 0x01A0002 8 | Event 1, Line/Element Index | |
| 0x01A0002 C | Event 1, Element Count Reload/Link Address | |
| ... | . . . | ... |
| ... | . . . | ... |
| 0x01A0017 4 | Event 15, DST Address | Parameters For Event 15 |
| 0x01A0017 8 | Event 15, Line/Element Index | |
| 0x01A0017 C | Event 15, Element Count Reload/Link Address | |

| | Reload/Link Parameters | |
|---|---|---|
| 0x01A0018 0 | Event N, Options | Reload/Link Parameters |
| 0x01A0018 4 | Event N, SRC Address | |
| 0x01A0018 8 | Event N, Line/Element Count | |
| 0x01A0018 C | Event N, DST Address | |
| 0x01A0019 0 | Event N, Line/element index | |
| 0x01A0019 4 | Event N, Element Count Reload/Link Address | |
| 0x01A0019 8 | Event M, Options | Reload/Link Parameters |
| ... | ... | ... |
| ... | . . . | ... |

Figure 5-5 depicts the XDMA parameter RAM and options fields. The parameter RAM is a 64-bit wide bank.

The location of fields within each entry, as well as bit positions within the options field is to match the TR packet format as closely as possible. This is done so as to ease implementation of the XDMA controller. However, there is not a direct one-to-one mapping, as the XDMA controller must interpret several of the options bits to determine which parameters to submit to the TR bus.

The following sections describe the XDMA parameters and the functions, which the XDMA controller provides.

The XDMA controller provides a mechanism known as "linking", which allows event parameters to be reloaded from a location within the parameter RAM. Each set of XDMA parameters includes a Link Address field (see Figure 5-5) which identifies the XDMA RAM position to reload the XDMA parameters for that event from. The Link Address is aligned on a 24-byte boundary. In addition to the Link Address field, a separate LINK bit is included in the XDMA parameters to enable/disable linking. The link address is evaluated only if LINK is equal to 1, and only after an event's parameters have been exhausted. This is identified according to the events parameters stored in the XDMA RAM, and is summarized below.

**Table 5-3**

| Link Conditions | | |
|---|---|---|
| | Non 2D Transfers | 2D Transfers |
| Read Sync/Write Sync (FS = 0) | Line Count == 0 && Element Count == 1 | Line Count == 0 |
| Frame Sync (FS = 1) | Line Count == 0 | Always |

There is one special case which exists for non-2D transfers which are read/write sync'd (FS = 0). In this case, transfers are performed for a single element at a time. These are typical of serial port service. In this case, the XDMA controller is responsible for tracking the element count of a transfer, and reloading it from the XDMA RAM when it decrements to 1. This is not a link cycle, however, is handled much in the same way. The detection of this condition is an element count of 0 with a line count of non-zero, on a non-2D read/write sync'd event. When this occurs, the XDMA controller reloads the element count for the transfer from the element count reload field of the XDMA. parameters. For all other types of transfers, the element count reload field is not used. If the link condition described above is met, the update may be skipped as a link cycle will be performed, which would overwrite the update result.

The evaluation of the link field involves reading the parameters at the address specified by the Link field, and writing them to one of the first 16 entries in XDMA RAM for the corresponding event. This process sets up the XDMA parameters for the next occurrence of the event. To eliminate possible timing windows posed by this mechanism, the XDMA controller does not evaluate the event register while performing parameter updates (events are still captured in the event register). It is assumed that the event rate is slow enough to allow for the parameter update to occur. The parameter update in XDMA RAM occurs after the TR packet for the last event is sent to the I/O subsystem. Note that it is not necessary to copy the "Reserved" fields during the link process; however, as these fields may someday be used it is proposed that the updates occur.

The XDMA controller supports two methods of event synchronization ---read/write synchronization and frame synchronization. The operation of the XDMA controller depends on the synchronization mode, and the dimensionality (1-D vs. 2-D) of the transfer parameters. Single dimension read/write synchronization is intended for use with slow peripherals, or single sample type access. A 1-D read or write synchronized event forces a transfer of a single element from the source to the destination address. To support this, the XDMA controller interprets the synchronization bit (FS) and 2DS|2DD bits and format the TR packet with an element count of 1, rather than the stored value of the element count in RAM. In the case of a 2-D transfer (2DS|2DD = 1), a single line shall be transferred at a time (as opposed to a complete frame, which is what will occur for a frame synchronized 2-D transfer).

Two dimensional transfers are specified via the 2DS (source) and 2DD (destination) bits in the Options field for each parameter set. The XDMA controller is responsible for sending the 2DS and 2DD bits to the I/O subsystem with the TR packet for the event. Additionally, if 2DS or 2DD is set, the XDMA controller may also modify the parameters sent to the TR bus depending on the type of synchronization specified. This function is described below.

The 2DS and 2DD bits work in conjunction with the FS bit to provide the various operation modes described earlier herein. The following table outlines the operations of the XDMA controller.

**Table 5-4**

| TR Element Count | | |
|---|---|---|
| Synchronization | Mode Element | Count sent to TR |
| Read/Write (FS = 0) | 2DS & 2DD = 0 | 1 |
| Read/Write (FS = 0) | 2DS\|2DD = 1 | Parameters[Element Count] |
| Frame (FS = 1) | 2DS & 2DD = 0 | Parameters[Element Count] |
| Frame (FS = 1) | 2DS\|2DD = 1 | Parameters[Element Count] |

**Table 5-5**

| TR Line Count | | |
|---|---|---|
| Synchronization | Mode Line | Count sent to TR |
| Read/Write (FS = 0) | 2DS & 2DD = 0 | 0 |
| Read/Write (FS = 0) | 2DS\|2DD = 1 | 0 |
| Frame (FS = 1) | 2DS & 2DD = 0 | 0 |
| Frame (FS = 1) | 2DS\|2DD = 1 | Parameters[Line Count] |
| NOTE: Fundamentally, there is no difference between a read/write sync'd 2-D transfer and a frame sync'd non-2D transfer. | | |

The PRI bits define the priority with which the I/O subsystem performs the transaction specified by the TR parameters. The XDMA controller is responsible for passing the PRI bits stored in the parameter RAM for the event to the TR bus. Note that as defined, the PRI field is 3-bit wide, but the user's guide denotes only 1 (001), and 2 (010) may be used.

The I/O subsystem processes all transfer requests made via the TR node. Because the I/O subsystem is a limited resource, a maximum number of transactions may be posted to it at any time. To prevent oversubscribing to the I/O subsystem, the XDMA controller implements a number of small counters which will track the number of outstanding requests on each priority level of the I/O subsystem.

The number of counters maps to the number of priority levels of the I/O subsystem. For the DSP, three counters would be required, corresponding to priority levels 0, 1, and 2 (urgent, high, and low). The L2 controller uses the urgent (level 0) priority level, while XDMA events will rely on the high and low (1 and 2) priority levels. Hence, only two counters are required in the XDMA controller. Note that the counters are invisible to the user, and will not be memory mapped. Each counter resets to a fixed value as defined below.

**Table 5-6**

| Reset Values for Allocation Counters | |
|---|---|
| Counter for PRI level... | Resets to... |
| 001 | 10 (0xA) |
| 010 | 10 (0xA) |

For each TR packet submitted, the XDMA controller interprets the PRI field and decrements the appropriate counter by 1. Once a counter is decremented to 0, no TR packets may be submitted on that priority level. The counters are incremented by detecting a condition on the QACK (queue acknowledge) bus. The QACK bus is described earlier herein. A static decode of the QACK bus will provide the appropriate increment signal. A functional block diagram of a counter is depicted in Figure 5-6.

The XDMA controller does not know the priority of an event until the parameters are read, and thus the counter cannot be evaluated until this point. Once a stall is detected, the XDMA controller shall stall. No attempt shall be made to evaluate other pending events, which might be able to submit transfers on a separate priority level. The XDMA controller simply waits until the transfer can be submitted, which is ultimately gated by a return code on the QACK bus for the stalled priority level.

The SRC/DST DIR bits of each parameter entry indicate the type of address updates which the XDMA performs for various events. The SRC/DST DIR bits should also be copied to the TR bus in the appropriate fields such that the I/O subsystem can perform the correct address generation. The SRC/DST DIR bits also affect the element index parameter sent to the TR node. This function is dependent on both the SRC/DST DIR bits, and the 2DS/2DD (2D SRC/DST) bits of the XDMA parameters. The required operation is defined below.

If either SRC DIR or DST DIR is set to 11, the element index sent with the TR packet should be copied from element index field stored in the RAM parameters. If neither is set to 11, then 2DS and 2DD transfer designators are evaluated to determine if the TR element index should be set to 0 (2DS & 2DD = 0) or the stored line index value (2DS|2DD = 1). The I/O subsystem will correctly interpret the element index as a line index value. Figure 5-7 depicts a functional representation of the element index generation operation.

The Line Index is sent to the TR bus in the Element Index field for all 2D transfers (SRC or DST). Line Index and Element Index are interpreted as 16-bit signed values by the I/O subsystem.

The ESZ field specifies the element size for the transfer parameters. The XDMA controller is responsible for copying these bits to the TR bus for the event. The following table lists the element sizes supported by the I/O subsystem.

**Table 5-7**

| Element Size | |
|---|---|
| ESZ | Element Size |
| 00 | 32-bit (word) |
| 01 | 16-bit (halfword) |
| 10 | 8-bit (byte) |
| 11 | Reserved |

The TCINT bit specifies that an interrupt is to be sent to the CPU upon completion of the transfer. This function is mapped to the return completion code word feature of the TC, as described in earlier herein. If TCINT is set, the XDMA controller responds by setting the RC bit of the TR packet for the transfer. Note that this shall occur only if the transfer parameters have been exhausted, which is defined in Table 5-3. The XDMA controller implements the detection logic for this condition, and sets RC accordingly.

The report word field in Options works in conjunction with the TCINT (mapped to RC in TR parameters) bit to post interrupts to the CPU. The report word for each event is only 4-bits wide, while the report word field in the TR packet contains 5-bits. The XDMA controller passes the 4-bit report word in the stored parameters for the event in the lower four bits of the TR packet, and hardcodes a "1" to the MS bit of the TR report word. Note that the report word is only passed on the TR (and returned by the TC) when the conditions outlined in Table 5-3 are met, and TCINT = 1 in the event's parameters.

**Table 5**

| XMDA Report Words | |
|---|---|
| TR [Report Word (4)] | TR [Report Word (3:0)] |
| 1 | Parameters (Report Word) |

XDMA interrupts are detected by the XDMA controller itself. Functionally, this is not required, however; the requirement for detection already exists in the XDMA controller and the XDMA controller includes a node on the CFG_BUS, which would be required for the capture register (XINT_SRC). The XDMA controller monitors the QCOMP bus from the I/O subsystem. Recall that this bus is driven from the I/O subsystem indicating that various transfers have completed. The XDMA controller allows codes 16-31 to be specified as completion codes (XDMA hardcodes the MS bit of the report word to 1). These 16 codes are decoded to set bits in the XINT_SRC register. Bits are only set if the appropriate QCOMP code is detected and QCOMP(valid) is set. The following table outlines the QCOMP codes ⇔ XINT_SRC bit mappings.

**Table 5-8**

| QCOMP ⇔ XINT_SRC Bit Setting | |
|---|---|
| QCOMP | Sets XINT_SRC bit... |
| 10000 | 0 |
| 10001 | 1 |
| 10010 | 2 |
| 10011 | 3 |
| 10100 | 4 |
| 10101 | 5 |
| 10110 | 6 |
| 10111 | 7 |
| 11000 | 8 |
| 11001 | 9 |
| 11010 | 10 |
| 11011 | 11 |
| 11100 | 12 |
| 11101 | 13 |
| 11110 | 14 |
| 11111 | 15 |

If any bit in XINT_SRC is set, a single module output, and the corresponding bit in XINT_SRC_EN is set, XDMA_INT shall be set to 1. This signal is passed to the interrupt selector block (see Table 7-1) where it may cause a CPU interrupt if enabled (in the CPU).

The intended operation for the XINT_SRC_EN register is exactly the same as for the EVT_EN register. If a valid QCOMP code is detected as described above, it should always be captured in XINT_SRC. The interrupt however will only be generated on XDMA_INT if the corresponding CEN bit in XINT_SRC_EN is set to 1. This feature allows the programmer the ability to disable interrupts temporarily while still capturing the fact that the event occurred.

The CPU ISR will read the XINT_SRC register and determine what, if any events have completed and perform any operations as necessary. Note that between the time XDMA_INT is set and the CPU responds, one or more bits in XINT_SRC may be set. The ISR is expected to service this accordingly, and clear the XINT_SRC register if future interrupts are to be recognized on XDMA_INT. XINT_SRC bits are cleared by the CPU by writing 1's to them; writing 0's should not change the state of XINT_SRC bits.

A special boundary condition exists with the clearing of XINT_SRC bits. As the CPU interrupts are edge sensitive, if an event gets captured in XINT_SRC on the same cycle that it is being written, the potential exists for an event to be missed. In this case, the XDMA controller must post an interrupt on XDMA_INT. Figure 5-9 depicts a simple way to produce the desired XMDA_INT function.

With the above structure, if XINT_SRC is written on the same cycle that an event comes into XINT_SRC, XDMA_INT will be forced low but then go high in the next cycle. The effect of this is to delay signaling of XDMA_INT to the CPU by one cycle, which is acceptable.

Similar to the interrupt detection logic described earlier herein, the XDMA controller will also use the QCOMP bus to generate four events back to the XDMA controller itself. The purpose for these events is to allow the user the ability to chain several XDMA events through one event occurrence at the sourcing peripheral. The following table outlines the required operation.

**Table 5-9**

| QCOMP Û XDMA Event Mapping | |
|---|---|
| QCOMP | Sets XDMA EVT_REG bit... |
| 11000 | 8 |
| 11001 | 9 |
| 11010 | A |
| 11011 | B |

In order to separate the XDMA event chaining enabled by the QCOMP bus and the XDMA interrupt (to CPU) enabled by XINT_SRC, the XDMA controller includes a separate set of enable bits for the events outlined above. The QCOMP bus only generates the XDMA events above if the corresponding XCE bit is set (1) in XC0MP_EN. The following table outlines the required operation.

**Table 5-10**

| XCOMP_EN Event Enables | |
|---|---|
| XCOMP_EN Bit | Enables QCOMP event generation for... |
| 8 | EVT_REG bit 8 |
| 9 | EVT_REG bit 9 |
| 10 | EVT_REG bit 10 |
| 11 | EVT_REG bit 11 |
| NOTE: Since events 8-11 are the only XDMAs that support chaining, only these bits must be implemented in XINT_COMP_EN. Unused bits need not be implemented. Reading should return zeroes; writing to them will have no effect. | |

The XCOMP_EN function works identically to the EVT_EN and XINT_SRC_EN registers. If an event is disabled (XCOMP_EN = 0), the event is still captured in EVT_REG by a valid decode of the QCOMP bus. This is done to allow software to selectively enable and disable events, as well as present a consistent model for all the event enable functions. In the initial implementation, the XCOMP_EN is implemented as a pseudo register, mapping to the bits defined by EVT_EN reg. Reads and writes of XCOMP_EN will return data from the EVT_EN register bits 8-11 as appropriate. The ramification of this is that the user will also see EVT_EN bits 8-11 set and cleared by accesses to XCOMP_EN. As internal completion codes are the only source for these events, this is not perceived as a problem. Future revisions of the XDMA controller may move these bits to a physically separate register to allow for chaining of all events.

Several key issues must be addressed in the XDMA controller. First, the XDMA controller must include at least 1, and possibly multiple, adders. These are required such that the XDMA controller may update the source and destination addresses, as well as the line and element counts as appropriate. The updates may occur via multiple parallel adders, or a shared adder. The total parameter update cycle, neglecting linking, should require not more than 4 CPU clock cycles (this budget is based on no data, but rather just to place an upper bound on the implementation, and to avoid severely affecting performance).

The following address updates occur in the XDMA controller. Note that all updates occur after the event parameters are sent to the TR bus. The updates are therefore for the purpose of setting the XDMA parameters for the next event. Updates are prioritized below the Link requirements- that is, if the conditions outlined in Table 5-3 are met the parameter updates may be skipped and the link parameters copied directly. Alternatively, they may be performed as normal and then overwritten by the link update.

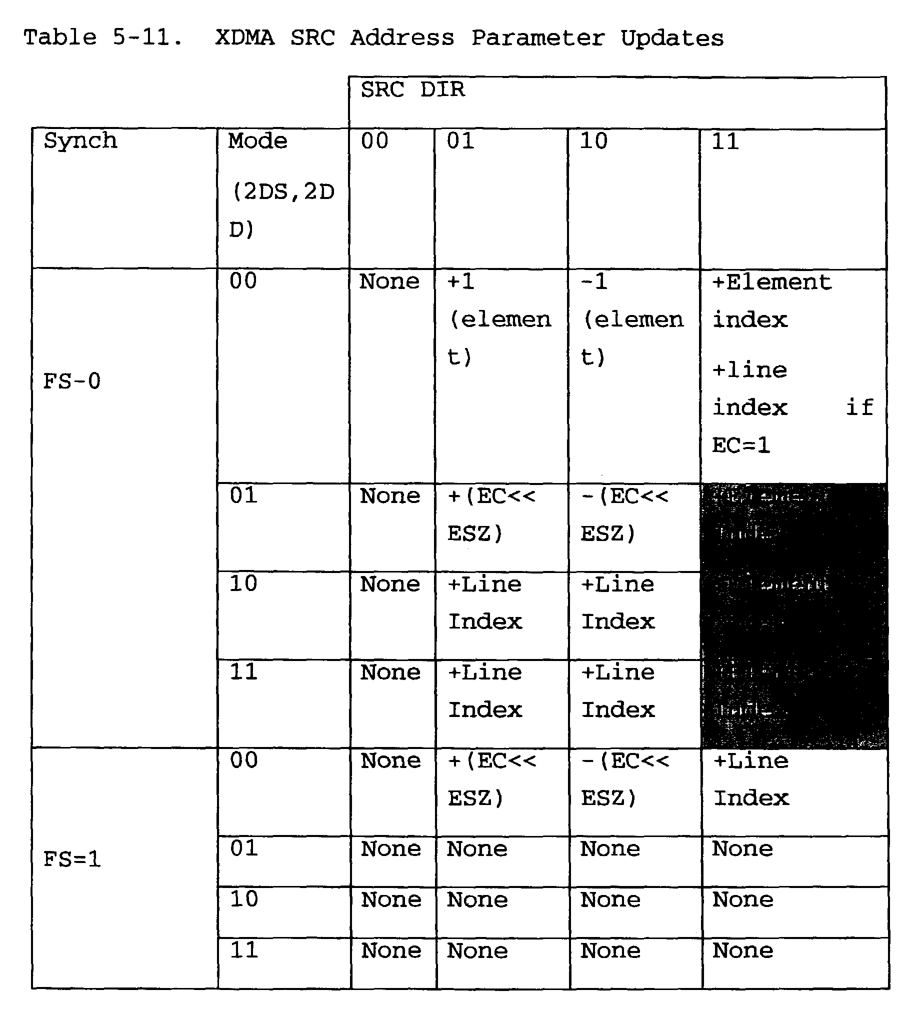

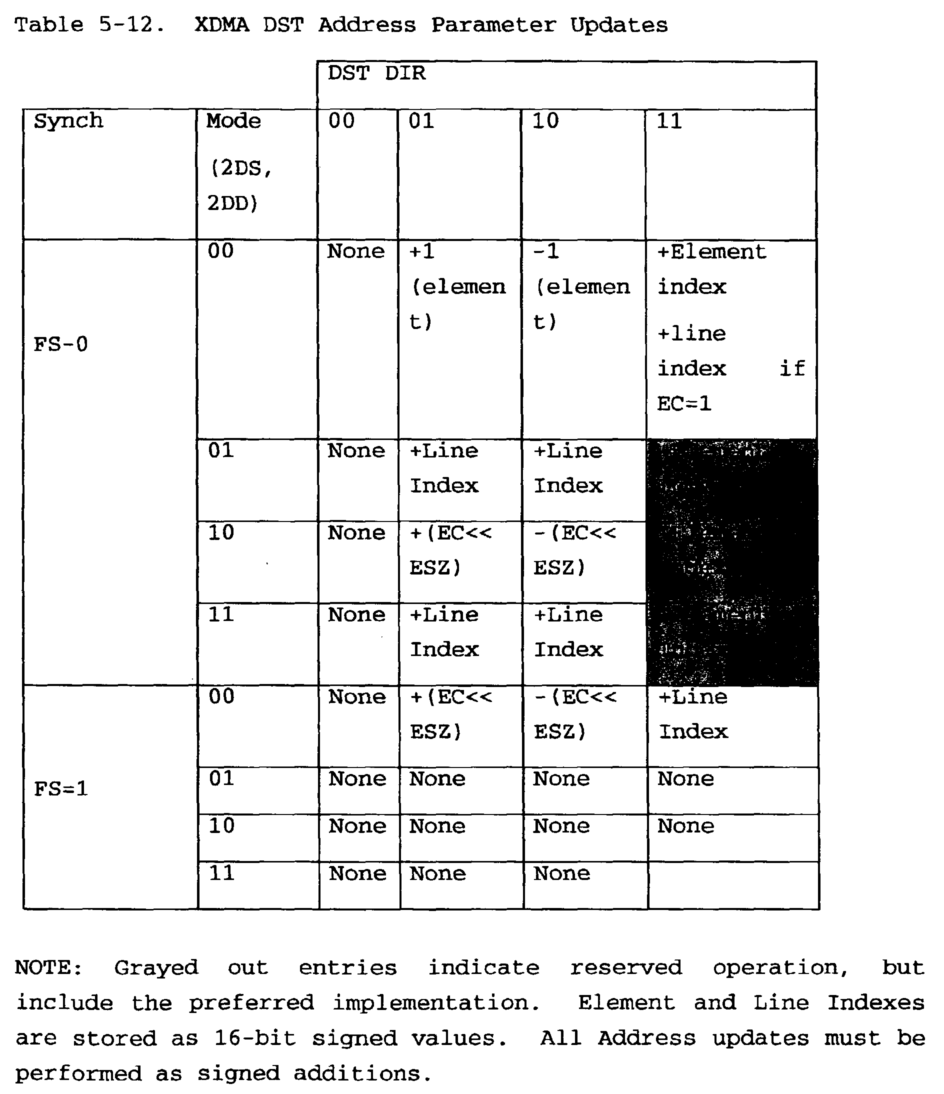

In addition to the address updates, the XDMA must also update the line and element counts.

**Table 5-13**

| XDMA Element/Line Count Updates | | | |
|---|---|---|---|
| Synch | Mode | Element Count Update | Line Count Update |
| Read/Write | Non-2D | -1 (reload if 1)* | -1 (if element count = 1)* |
| Read/Write | 2D (2DS\|2DD) | None | -1 |
| Frame | Non-2D | None | -1 |
| Frame | 2D (2DS\|2DD) | None | None |
| NOTE: There is a special condition for reloading the element count for read/write synchronized non-2D transfers. This condition is described earlier herein. | | | |

Figures 5-10 through 5-95 illustrate various operational modes of the XDMA controller. Each figure illustrates an exemplary parameter format and resulting transfer.

The DSP preferably includes 16 interrupt sources. Prior DMA interrupts are replaced with a single XDMA interrupt (XDMA_INT), which was described earlier herein.

The interrupt selector block maps 16 events to 12 CPU interrupts. The mapping is controlled via a set of control registers in the interrupt selector block. This block is decoded as one of the 16 CFG_BUS spaces, and may require a wrapper interface. Figure 7-1 depicts the interrupt selector's multiplexer registers (mux) control registers. Reserved bits should read as 0; writing to them will have no effect.

To select a particular interrupt, the appropriate INSEL field of the interrupt selector multiplexer registers is set with one of the following codes.

**Table 7-1**

| Interrupt Multiplexer Codes | | | |
|---|---|---|---|
| Interrupt Selection Code | Interrupt Acronym | Interrupt Description | Comes from module... |
| 0000 | DSPINT0 | Host port host to DSP interrupt | HPI HIU |
| 0001 | TINT0 | Timer 0 interrupt | Timer 0 interrupt |
| 0010 | TINT1 | Timer 1 interrupt | Timer 1 interrupt |
| 0011 | SD_INT | EMIF SDRAM Timer Interrupt | EMIF HIU |
| 0100 | EXT_INT4 | External interrupt 4 | HPI HIU |
| 0101 | EXT_INT5 | External interrupt 5 | EMIF HIU |
| 0110 | EXT_INT6 | External interrupt 6 | EMIF HIU |
| 0111 | EXT_INT7 | External interrupt 7 | EMIF HIU |
| 1000 | Reserved | XDMA_INT | XDMA controller |
| 1001 | Reserved | Not Used | N/A |
| 1010 | Reserved | Not Used | N/A |
| 1011 | Reserved | Not Used | N/A |
| 1100 | XINT0 | MCSP 0 Transmit Interrupt | MCSP 0 Transmit Interrupt |
| 1101 | RINT0 | MCSP 0 Receive Interrupt | MCSP 0 Receive Interrupt |
| 1110 | XINT1 | MCSP 1 Transmit Interrupt | MCSP 1 Transmit Interrupt |
| 1111 | RINT1 | MCSP 1 Receive Interrupt | MCSP 1 Receive Interrupt |

The interrupt multiplexer control registers reset to the values shown in Table 7-2 below. The CPU may overwrite these values after system reset.

**Table 7-2**

| INTSEL Reset Values | | |
|---|---|---|
| INTSEL | Reset Value | Selects ... as interrupt source |
| 4 | 0100 | EXT_INT4 |
| 5 | 0101 | EXT_INT5 |
| 6 | 0110 | EXT_INT6 |
| 7 | 0111 | EXT_INT7 |
| 8 | 1000 | XDMA_INT |
| 9 | 1001 | Not Used |
| 10 | 0011 | EMIF SDRAM timer interrupt |
| 11 | 1010 | Not Used |
| 12 | 1011 | Not Used |
| 13 | 0000 | DSPINT |
| 14 | 0001 | Timer 0 interrupt |
| 15 | 0010 | Timer 1 interrupt |

In addition to the multiplexer registers, the interrupt selector also includes a register to select the polarity of four external interrupts, which are driven from external pins. Normally, external interrupts 4-7 are signaled via a low-to-high transition on their respective pins. By setting bits in the external interrupt polarity register (EXINTP) the transition detect can be inverted (selecting high-to-low transitions on EXT_INT4-7 as the signaling condition). The EXINTP register was shown in Figure 7-2 and is part of Figure 7-1.

Because the polarity inverters are inside the megamodule, the edge detection logic is also included. External interrupts are synchronized to the internal clock domain through a synchronizer block in the EMIF and HPI HIUs.

The DSP PLL block allows an external oscillator to drive the PLL reference frequency. The PLL will lock to either that frequency directly (1X mode), or derive a clock reference at 4 times the input frequency (4X mode). The mode selected is determined by a variety of factors, including external component availability, PCB noise, EMI requirements, and other system issues. In the 1X mode, the maximum input clock frequency is 200MHz; in the 4X mode it is 50MHz.

The PLL frequency range inputs are considered static, and should not be changed without a chip reset. The duration of the reset provides enough time for the PLL to lock, if necessary. The PLL block also includes inputs which select the x1 vs. x4 operating mode. The following table defines the PLL block operation.

**Table 8-1**

| CLKMODE Settings | |
|---|---|
| CLKMODE(1:0) | Function |
| 00 | MULT X1 f(CLKOUT1) = f(CLKIN) |
| 01 | Reserved |
| 10 | Reserved |
| 11 | MULT X4 F(CLKOUT1) = f(CLKIN) X 4 |

In addition to the frequency selection, the PLL block requires several other inputs. The PLL supply must be kept free of EMI noise, so as to reduce jitter in the output clock it drives to the rest of the chip. To provide this function, a separate, isolated VDD pin is provided for the PLL. The GND input is internally tied to the other GND pins of the device. Also, a special filter pin is required by the PLL, to which external loop filter components (R-C filter) are connected. A block diagram of the PLL block is depicted in Figure 8-1.

The megamodule PLL block provides the clock for the CPU, L1 and L2 caches, XDMA, TC plus HIUs, and other miscellaneous blocks within the megamodule (interrupt selector, glue logic, etc). Additionally, several of the on-chip peripheral interfaces must be provided a clock derived from the internal CPU clock. These modules include:

**Table 8-2**

| CLKOUT2 Domain | | |
|---|---|---|
| Module | Interfaces Affected | Will be clocked at... |
| Hpi0, hiu2 | hiu2, HPI CFG_BUS port | CPU/2 (aka CLKOUT2) |
| Mcsp0 (2 McBSPs), hiu1 | mcsp0 (2 McBSPs) hiu1; mcsp0 CFG_BUS port | CPU/2 |
| Timer0, timer1 | Timer0, timer1, CFG_BUS port | CPU/2 |

The CPU clock/2 (CLKOUT2) must be provided at the megamodule boundary to clock the above interfaces. Note that in all cases except for the timers, synchronization stages exist between the internal CPU clock (aka CLKOUT1) and CLKOUT2, provided in the HIU interfaces for the associated module. In the case of the timers however, only a CFG_BUS interface is provided, which may or may not have synchronizers provided.

In addition to providing CLKOUT2 to the megamodule boundary for peripheral interfacing, the megamodule must also provide CPU clock (CLKOUT1) itself.

Beyond the CLKOUT1 and CKOUT2 domains, several other clock domains exist in the DSP system. The EMIF, HPI, and MCSP (2 McBSPs) interfaces all operate independently of one other, and possibly in different clock domains. The EMIF modules operates solely in the ECLKIN domain, with synchronization back to the CLKOUT1 domain provided in its associated HIU block. The HPI operates asynchronously at the device pins, with synchronization back to CLKOUT2 provided by the module itself. The CLKOUT2 domain is also used for the HPI's HIU interface, which then resynchronizes back to the CLKOUT1 domain. Similarly, the McBSP modules contain synchronization logic between the pins and the HIU interface. The pins operate asynchronously to the megamodule. Each McBSP synchronizes back to the CLKOUT2 domain within the module itself. The HIU interface for the MCSP operates at the CLKOUT2 rate, which then synchronizes back to the CLKOUT1 domain. The timer modules include similar synchronization blocks, which synchronize the external (pins) domain to the CLKOUT2 domain, which may or may not have to be synchronized back to the CLKOUT1 domain.

Emulation introduces an additional clock domain into the device, TCLK, or the JTAG test clock. The TCLK domain is present in the emulation block (emu), ATPG test block, and in the DSP CPU core.

The DSP includes support for testing via ATPG. This logic resides in the ASIC backplane outside of the DSP megamodule. The ATPG module in general operates at the TCLK rate; however, if delay fault testing (at speed) is to be included in the DSP, it may also include the CLKOUT1 domain.

Regardless of delay fault testing, the ATPG test block will provide the means of placing the device into ATPG mode for testing, via assertion of scan_en. In this mode (scan_en = 1), the D input of all scannable flops shall be MUX'd over to the scan_in input, and the CLKOUT1 output of the PLL block (plltop) will be driven from the TCLK input of the device rather than the PLL output. In order to guarantee propoer operation, it may be necessary for the ATPG test logic to assert and hold scan_en active (high) for multiple cycles before attempting to scan the device. By enforcing this, each module is kept from having to run in multiple clock domains.

The DSP relies on a scan in/out/enable architecture as opposed to a scan clock scheme. In short, this means that each module that is scannable will include a scan input, output, and scan enable signal; however, it will not have to run in the TCLK domain. This architecture has advantages in terms of complexity, floorplanning, and power management, as it eliminates an additional clock from running around the device. In order to support this method of scan, registers in the DSP shall have the functional structure depicted in Figure 8-2.

In Figure 8-3, each clock shown operates at a maximum frequency specified below.

**Table 8-3**

| C6211 Clock Domains/Frequency Requirements | | |
|---|---|---|
| Clock Name | Maximum Operational Frequency | Modules Affected |
| CLKIN | 200MHz | clkgen0 |
| CLKOUT1 | 200MHz | int_selector0, powerdown0, c6201b010, emu,0, mem0, tc0, hiu1, hiu2, hiu3, hpi_trif0, xdma0 |
| CLKOUT2 | 100MHz | timer0, timer1, mcsp0, hpi0, hpi_trif0, hiu 1, hiu2 |
| TCLK | 10/200MHz (??, DFT req't) | atpg0, emu0, c6201b010 |
| TINP0 | 50MHz | timer0 |
| TINP1 | 50MHz | timer1 |
| ECLKIN | 125MHz | emif0 |
| CLKS0 | 50MHz | mcsp0 |
| CLKR0 | 50MHz | mcsp0 |
| CLKX0 | 50MHz | mcsp0 |
| CLKS1 | 50MHz | mcsp0 |
| CLKR1 | 50MHz | mcsp0 |
| CLKX1 | 50MHz | mcsp0 |

Because multiple clock domains exist, multiple interfaces may require synchronization stages (flops) to move between 2 or more clock domains. The peripherals largely include such synchronizers already, or they are instantiated in the peripherals' associated HIU structure. The following table defines the clock phase relationships that are important in the DSP.

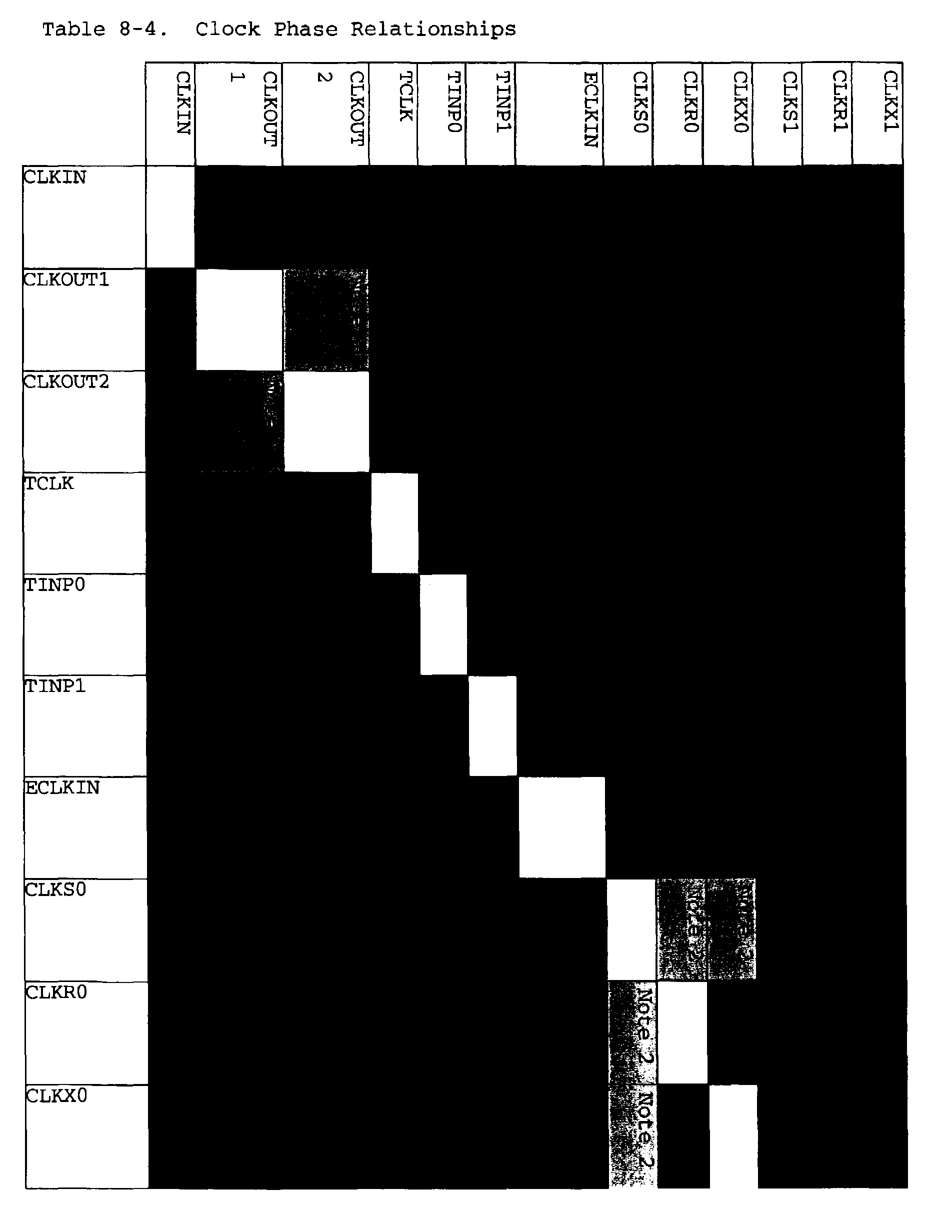

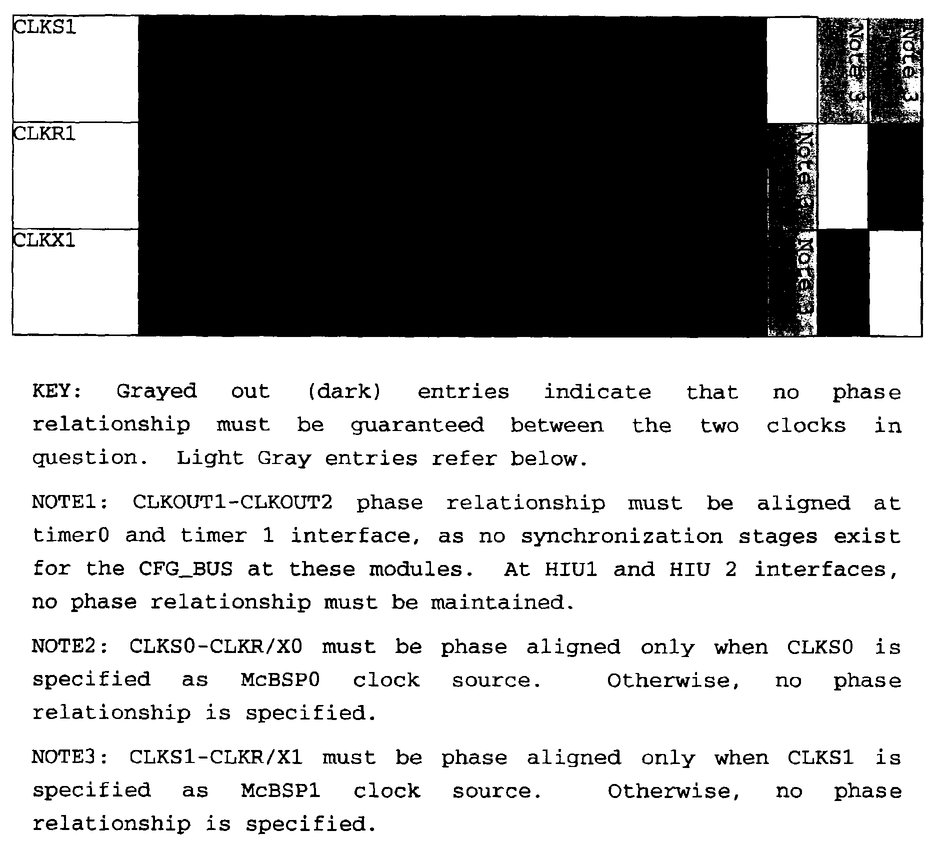

In order to understand the power down modes, it is first necessary to understand the clocking strategy adopted for the DSP. The model includes two clock domains in the megamodule. These are:
•• CPU
•• L1's and L2 TC + HIUs + TR + XDMA + peripherals

The peripheral clock domains are slightly complicated in that each HIU may operate in it's own domain, thus half of the associated HIU may operate in this domain. This breakdown ¿ allows for the CPU to be shutdown while useful operations may still be performed using the TC and/or XDMA and peripherals.

The DSP has three modes of power down. The shutdown modes will stop clocking of the CPU, then L1s/L2 and TC/HIUs, and the peripherals, in progression. Power down states are entered via a CPU write to the CSR register. The CAS Register power down file is depicted in Figure 10-1. Bits 14:10 of CSR are collectively referred to as the PWRD field.

Power down state 1 is exited via either signaling of a masked or unmasked interrupt, as controlled by bits 13 and 14 of CSR. Power down states 2 and 3 are only aborted by a system reset.

**Table 10-1**

| Power Down Mode Operations | | | |
|---|---|---|---|
| Power Down Mode | PWRD | Modules Affected | Wake Up Requirements |
| None | 00000 | None | N/A |
| PD1 | 01001 | CPU | Enabled interrupt |
| PD1 | 10001 | CPU | Any interrupt |
| PD2 | 11010 | All | Reset |
| PD3 | 11100 | All (+ PLL) | Reset |

The power down circuitry also asserts, /PD, to inform external logic that the device is in a power down state. This signal is asserted for power down modes 2 and 3. A block diagram of the power down logic is depicted in Figure 10-2.

Power down modes 2 and 3 disable clocking of the EMIF from an internal source. If the EMIF is clocked externally, it will continue to clock. No TC requests will be made of the EMIF; however, refresh cycles may continue to be performed.

The DSP is reset by assertion of an active low /RESET input. While in reset, the device is initialized. All tri-state outputs are placed in the high impedance state; all other outputs are driven to their inactive level. The L2 operating state, interrupt select logic, and XDMA controller are set to their default states. During /RESET, several device configuration options must be set. These include:
•• 1X vs. 4X PLL operating mode
•• Boot load vs. code execution from address 0x00000000
•• EMIF bus width for supporting ROM based boot
•• Device endian
The following sections describe these options.

The /RESET input is sampled by both the input clock (CLKIN) and the DSP output clock (CLKOUT2). /RESET must remain low for a minimum period. This time is significantly long (microseconds), if the PLL has to be relocked. The EMIF module requires a reset input active for at least 200·s to met SDRAM timing requirements. To most easily meet this requirement, a 200·s minimum also be required for the /RESET input low time.

During /RESET, several device configuration inputs are latched into the device which set its operating mode. The following sections outline the required configuration inputs.

All configuration inputs required for the PLL must be set up during reset (with /RESET low). Because the conditions for a reset during active operation versus a cold start from power up are different, the method of latching a general pin during reset to set the PLL mode is complicated. For example, during active operation a reset can ensure a negative going edge on /RESET, whereas during initial power-up this cannot be guaranteed. The proposed solution is to provide dedicated PLL configuration inputs, which determine the PLL operation mode(s). These inputs are static during operation. If changed, the device must be held in reset for an amount of time long enough to ensure that the PLL has locked and is functioning correctly.

Bootload, and endian configuration inputs are sampled on the rising edge of /RESET. Normally, this is implemented by sampling the device configuration inputs on the megamodule clock edge before reset is sampled high. The following configuration inputs are provided at the megamodule boundary.

**Table 11-1**

| Device Configuration Inputs | | |
|---|---|---|
| Device Configuration Input | Function | Sampled from pin... |
| CLKX4 | PLL input clock multiplier select | CLKMODE (static) |
| BOOT_LOAD | Boot load enable | HD[4:3] |
| CE1_WIDTH | EMIF /CE1 bus width | HD[4:3] |
| LENDIAN | Endian mode select | HD[8] |

The on-chip PLL frequency multiplier is configured during device reset. The multiplier may operate in one of two modes; as a by 4 or by 1 multiplier, controlled via the CLKX4 input. The CLKX4 input maps to the PLL CLKMODE inputs as shown below. Note that CLKX4 is a static input, and need not be sampled by the rising /RESET edge.

**Table 11-2**

| PLL Multiplier Select | | |
|---|---|---|
| CLKX4 | CLKMODE[1:0] | Operating Mode |
| 0 | 00 | 1X multiplier |
| 1 | 11 | 4X multiplier |

The DSP may be booted in one of two ways. For both modes however, L2 is the throttling mechanism to ensure proper operation. The device reset will latch the boot mode function on HD[4:3] at the rising edge of /RESET. Regardless of the boot mode, the CPU will come out of reset and attempt a program fetch from address, 0x00000000, the base of L2 (which is reset to all SRAM, mode 000). This access will always miss L1I, and be passed onto L2. L2 will immediately stall the L1I request via the normal L1I-L2 interface, and then, depending on the boot mode, service the request.

If HD[4:3] = 00, bootloading is performed. In this case, it is assumed that the HPI has placed code at address 0x00000000 (base of L2 SRAM, to which the CPU PC is reset to). In this mode, the L2 waits for asserting of DSP_INT from the HPI HIU module to proceed with servicing the L1I request. Once DSP_INT is asserted, L2 provides the first L1I line (2 fetch packets at the requested address of 0x00000000) to L1I, which will unstall the CPU through the normal L1I mechanism.

Any other values for HD[4:3] latched at reset denote that bootloading is to be performed. In this case, the CPU again will attempt to jump to 0x00000000, a request which will miss L1I and be passed onto L2. L2 will again stall this request, and upon evaluating the bootmode inputs, determine that bootloading must be performed. To service this request, the L2 controller issues a transfer request to the I/O subsystem, to move 1K byte of data from the base of the EMIF /CE1 (0x90000000) space to 0x00000000. Once this transfer is complete, the L2 controller services the L1I request by providing the first L1I line to L1I according to the normal L1I-L2 interface protocol. This will unstall the CPU according to the normal L1I -CPU interface. The boot code may specify additional transfers to move the remainder of the application and/or boot code, setup the EMIF control registers, and enable cache modes in L2 as required. Note that in both boot modes it is assumed that the DSP resets to an unhalted state, and must be held via assertion of one of the CPU boundary rdyN strobes, specifically, the one which L1I uses. In this manner, the boot mode servicing for the device will use the identical mechanism as a normal L1I miss, and the only complexity of reset is added in L2, which must monitor both the boot mode input(s) and the DSP_INT signal. DSP_INT may simply be monitored, it is not necessary to intercept DPS_INT to prevent it from being posted to the CPU. The CPU will reset with all interrupts disabled, so the 'false" DSP_INT at boot will be ignored.

In order to support the aforementioned boot loading mechanism, the EMIF supports a means of setting the bus width of /CE1 without a control register access, as no code is yet loaded to perform such an access. The bus width is latched from the HPI HD[4:3] pins, and is set following reset regardless of the bootload mode. The user may overwrite the bus size set up for /CE1 following reset. The following table defines the operation.

**Table 11-3**

| EMIF Bus Width Select | |
|---|---|
| HD[4:3] | Bus Width of /CE1 |
| 00 | 32-bit |
| 01 | 8-bit |
| 10 | 16-bit |
| 11 | 32-bit |

The megamodule LENDIAN signal sets the endian mode for the device. LENDIAN is sampled from the HPI HD[8] input at the rising edge of reset, and latched into the device. Endian mode may therefore only be changed during a device reset. If LENDIAN is set to 1, the device operates in little endian mode. If set to 0, big endian mode is selected.

The EMIF provides support for SDRAM, SBSRAM, and asynchronous memory. It supports x8, x16, and x32 devices in up to four CE spaces. It handles reads and writes with both Big and Little Endian format. The EMIF supports three different addressing modes: linear increment, linear decrement, and fixed. The presently preferred maximum clock frequency of the module is 125 MHz. Additional features of the EMIF are accessed through a new register and through reserved fields in existing registers.

Many SDRAM parameters are programmable to offer improved performance and flexibility. SDRAM's used with the DSP likely will be PC100/PC125 compliant, but the EMIF accommodates lower performance SDRAM's as well. The EMIF exploits the internally banked architecture of the SDRAM, hiding ras and cas overhead when possible.

SBSRAM runs exclusively at the EMIF clock frequency (125 MHz). Nothing special is being done to support emulation. When breakpoints occur, the EMIF continues to respond to the TC/XDMA via the HIU interface. SDRAM refreshing continues.

All transfers to/from external memory that are at least one word in length must be word-aligned (source, destination, and size). Write transfers of less than one word require use of byte enables. Three-byte transfers are not supported. Two byte transfers require halfword alignment (HIU halfword 1 to/from EMIF halfword 1 or HIU halfword 0 to/from EMIF halfword 0). Single byte transfers must be byte-aligned (HIU byte 3 to/from EMIF byte 3 or HIU byte 2 to/from EMIF byte 2 or HIU byte 1 to/from EMIF byte 1 or HIU byte 0 to/from EMIF byte 0),

The linear decrement address mode requires transfers of greater than one word. The decrement occurs at word boundaries, not on bytes or halfwords. The fixed address mode also requires transfers that exceed one word. The address is "fixed" at word boundaries - fixed writes to a byte-wide SDRAM go to byte address N, N+1, N+2, N+3, N, N+1, and so on. Fixed writes to a 16- bit-wide SDRAM go to byte address N, N+2, N, N+2, and so on. Fixed writes to a 32-bit-wide SDRAM configuration go to byte address N, N, N, and so on.

The EMIF does not perform two-dimensional (block) addressing. The TC/XDMA must sequence transfers externally from the EMIF to provide 2D capability. The EMIF does not support SDRAM page crossings within a single transfer. If the TC/XDMA detects that a transfer will cross a page, it divides the transfer into two pieces and makes a separate request to the EMIF for each. The EMIF assumes that its reset exceeds 200 us. It does not have a counter to ensure that the 200 us power-up requirement is met for the SDRAM. Power down mode is not supported for the SDRAM or any other device. Figure 12-1 illustrates the EMIF inputs and outputs.

**Table 12-1A**

| EMIF Pinout | | |
|---|---|---|
| System Pins | I/O | Description |
| ECLKIN | I | Maximum 125 MHz input clock |
| RESET | I | Active high hardware reset |
| LENDIAN | I | LENDIAN = 1 implies Little Endian |
| CE1_WIDTH[1:0] | I | Defines width of data bus for CE1 space |
| FAST_BOOT | I | FAST_BOOT = 1 implies CE1 holds a 32-bit SBSRAM |
| SCAN_IN | I | Scan chain input |
| SCAN_ENABLE | I | Scan chain enable |
| SCAN_OUT | O | Scan chain output |
| /CLK2EN | O | External CLKOUT2 enable |

ECLKIN is also referred to as EMIF_HIU_CLOCK herein. LENDIAN and CE1_WIDTH become fixed during reset. FAST_BOOT and scans are provided for testing. /CLK2EN should be initialized once and then left alone.

**Table 12-1B**

| EMIF Pinout | | |
|---|---|---|
| EMIF-HIU Interface | I/O | Description |
| HIW_EMIF_ADDR[31:0] | I | Starting address of transfer |
| HIU_EMIF_WD_SIZE[7:0] | I | Number of words to transfer |
| HIU_EMIF_WRITE | I | HIU_EMIF_WRITE = 1 implies write command |
| HIU_EMIF_READ | I | HIU_EMIF_READ = 1 implies read command |
| HIU_EMIF_CMD_VALID | I | Initiates a transfer by indicating that request info is valid |
| HIU_EMIF_FIX_ADDR | I | Transfer should go to/from a fixed word address |
| HIU_EMIF_DEC_ADDR | I | Transfer address should decrement after each word |
| HIU_EMIF_WS[3:0] | I | Byte strobes used for write of less than one word |
| HIU_EMIF_WR_DATA[31:0] | I | Write data bus (TC/XDMA stores to external memory) |
| EMIF_HIU_CMD_ACK | O | EMIF acknowledges that transfer has been accepted |
| EMIF_HIU_WR_DATA_ACK | O | EMIF accepts a word for write |
| EMIF_HIU_RD_DATA_VALID | O | Indicates that read bus has valid data |
| EMIF_HIU_RD_DATA[31:0] | O | Read data bus (TC/XDMA loads from external memory) |

The EMIF-HIU Interface is for data transfer through the EMIF.

**Table 12-1C**

| EMIF Pinout | | |
|---|---|---|
| CFG_BUS | I/O | Description |
| CFG_BUS_MOD_SEL[0] | I | Module select for EMIF |
| CFG_BUS_ADD[5:2] | I | Address for selecting the appropriate register |
| CFG_BUS_RNW | I | CFG_BUS_RNW = 1 implies read |
| CFG_BUS_WR_DATA[31:0] | I | Write data bus |
| CFG_BUS_RD_DATA[31:0] | O | Read data bus |
| CFG_BUS_MOD_ACK[0] | O | EMIF acknowledges the register access |

The CFG_BUS is for EMIF register reads and writes.

**Table 12-1D**

| EMIF Pinout | | |
|---|---|---|
| Miscellaneous | I/O | Description |
| SDINT | O | Interrupt to CPU core |

SDINT is pulsed high for 8 ECLKIN periods every time the counter reaches zero in the EMIF SDRAM Refresh Control Register.

**Table 12-1E**

| EMIF Pinout | | |
|---|---|---|
| Shared Off Chip Pins | I/O | Description |
| ED_RD[31:0] | I | EMIF read data bus |
| ED_WR[31:0] | O | EMIF write data bus |
| /ED_OE | O | Output enable for bi-directional data bus I/O pads |
| EA[31:2] | O | EMIF address bus |
| /CE[3:0] | O | Chip enables for 4 external memory regions |
| /BE[3:0] | O | Byte enables to control sub-word writes |

Address pin 0 on an external device always connects to EA[2]. The EMIF shifts the address internally as needed to interface to 8-bit-wide, 16-bit-wide, and 32-bit-wide devices.

**Table 12-1F**

| EMIF Pinout | | |
|---|---|---|
| Asynchronous Interface | I/O | Description |
| ARDY | I | Inserts wait-states for slow devices |
| /AOE | O | Async output enable |
| /AWE | O | Async write enable |
| /ARE | O | Async read enable |

**Table 12-1G**

| EMIF Pinout | | |
|---|---|---|
| SBSRAM Interface | I/O | Description |
| /SSADS | O | SBSRAM address strobe |
| /SSOE | O | SBSRAM output enable |
| /SSWE | O | SBSRAM write enable |

**Table 12-1H**

| EMIF Pinout | | |
|---|---|---|
| SDRAM Interface | I/O | Description |
| /SDRAS | O | SDRAM ras |
| /SDCAS | O | SDRAM cas |
| /SDWE | O | SDRAM write enable |

To save pins, some of the EMIF outputs are multiplexed together. These are /ARE+/SSADS+/SDCAS, /AOE+/SSOE+ /SDRAS, and /AWE+/SSWE+/SDWE.

**Table 12-2**

| EMIF Memory-Mapped Registers | |
|---|---|
| Byte Address | Name |
| 0x01800000 | EMIF Global Control |
| 0x01800004 | EMIF CE1 Space Control |
| 0x01800008 | EMIF CE0 Space Control |
| 0x0180000C | Reserved |
| 0x01800010 | EMIF CE2 Space Control |
| 0x01800014 | EMIF CE3 Space Control |
| 0x01800018 | EMIF SDRAM Control |
| 0x0180001C | EMIF SDRAM Refresh Control |
| 0x01800020 | EMIF SDRAM Extension |

The EMIF global control register is illustrated in Figure 12-2 and configures parameters common to all the CE spaces.

**Table 12-3**

| Fields Removed from the EMIF Global Control Register | |
|---|---|
| Field | Reason For Absence In DSP |
| SDCINV | SDCINV is no longer supported on the C6201. |
| CLK2INV | CLK2INV is no longer supported on the C6201. |
| SDCEN | ECLKIN (the SDRAM clock) is driven externally. |
| SSCEN | No dedicated SBSRAM clock (SBSRAM clock matches the EMIF internal clock). |
| CLK1EN | CLKOUT1 is not driven out of the C6211. |
| SSCRT | No dedicated SBSRAM clock (SBSRAM clock matches the EMIF internal clock). |
| RBTR8 | All arbitration is performed outside of the EMIF. |
| MAP | The C6211 has only one memory map. |

The CLK2EN field is inverted and driven out of the EMIF module to control CLKOUT2 at the DSP core.

The four CE space control registers are illustrated in Figure 12-3 and correspond to the four CE memory spaces supported by the EMIF.

The functionality of the SC registers is described in the TMS320C6201 Peripherals Reference Guide. However, the TA field is not described in the guide. TA is short for turn-around and refers to the time it takes to switch from one device to another. Output drivers take a finite amount of time to shut off, and the TA field contains the number of clock cycles that must elapse following an asynchronous interface read before something else is allowed to drive the ED bus with data. The /AOE signal remains active until the completion of the Read Hold period, so the TA field is needed to minimize bus contention after device de-selection. Note that the TA delay is not incurred when the same device is continuously accessed. The Read Hold and Write Hold fields have been increased by 1 bit.

The MTYPE field has also been extended by 1 bit, and its new definition is shown in Table 12-4.

**Table 12-4**

| EMIF CE Space MTYPE Description | |
|---|---|
| MTYPE Value | Description |
| 0000b | 8-bit-wide Asynchronous Interface (Previously "ROM") |
| 0001b | 16-bit-wide Asynchronous Interface (Previously "ROM") |
| 0010b | 32-bit-wide Asynchronous Interface |
| 0011b | 32-bit-wide SDRAM |
| 0100b | 32-bit-wide SBSRAM |
| 1000b | 8-bit-wide SDRAM |
| 1001b | 16-bit-wide SDRAM |
| 1010b | 8-bit-wide SBSRAM |
| 1011b | 16-bit-wide SBSRAM |
| others | Reserved |

The EMIF supports bus widths of x8, x16, and x32, including reads and writes of both Big and Little Endian devices. As a result there needs to be no distinction between "ROM" and "Asynchronous Interface". If the MTYPE indicates SDRAM or SBSRAM (of any width), the remaining fields of the register have no effect.

The SDRAM control register is illustrated in Figure 12-4 and sets SDRAM parameters for all CE spaces that contain an SDRAM memory type.

The register functionality is described in the TMS320C6201 Peripherals Reference Guide. One additional consideration is that the EMIF automatically clears the INIT field to zero after it performs SDRAM initialization. When RESET goes inactive, none of the CE spaces will be configured as SDRAM, so the INIT field will quickly change from 1 to 0. The CPU should initialize all of the CE Space Control Registers and the SDRAM Extension Register before it sets the INIT bit back to 1. The SDWTH field has been modified to define the number of banks in the SDRAM, the size of the row address, and the size of the column address, as shown in Table 12-5, below.

**Table 12-5**

| EMIF SDRAM Control SDWTH Description | | |
|---|---|---|
| SDWTH Bits | Value | Description |
| [4] | 0 | 2 Banks |
| | 1 | 4 Banks |
| [3/2] | 00 | 11 Row Address Pins |
| | 01 | 12 Row Address Pins |
| | 10 | 13 Row Address Pins |
| | 11 | Reserved |
| [1:0] | 00 | 9 Column Address Pins |
| | 01 | 8 Column Address Pins |
| | 10 | 10 Column Address Pins |
| | 11 | Reserved |

After hardware reset the default SDRAM type is assumed to be a 2 bank, 11 row address pin, 9 column address pin device (a typical 2M x 8 part fits this description). SDWTH does not determine the width of the data bus for a given CE space. Rather, it determines the size of the SDRAM's that are placed on the bus. The width of the data bus for a given CE space is determined by the MTYPE field in the CE control registers.

The SDRAM Refresh Period register depicted in Figure 12-5 controls the refresh period in terms of EMIF clock cycles (not CLKOUT2 cycles).

The register functionality is described in the TMS320C6201 Peripherals Reference Guide. The initial value for the COUNTER field and PERIOD field has been increased. 0x5DC is equal to 1500 clock cycles. With a 10 ns EMIF cycle time, there is a 15 us time between refresh operations. SDRAM's typically require 15.625 us per refresh.

The Extra Refresh field controls the number of refreshes that take place when the counter reaches zero ("00" for 1, "01" for 2, "10" for 3, and "11" for 4). As an example, since all banks must be deactivated to perform a refresh, it might be desirable to perform two refreshes half as often. All refresh requests are considered high priority. When it is time to refresh, the refresh is performed immediately (though transfers in progress are allowed to complete). All banks must be deactivated before a refresh command is issued. When the refresh command is complete, the banks are not restored to their state before refresh.

The SDRAM Extension Register depicted in Figure 12-6 does not exist on the C6201. Its purpose is to allow the DSP to interface with a wider variety of SDRAM's.

It is possible that the programmed value of some timing parameters will guarantee that other parameters will be met. It is also possible that a subset of the timing parameters (for example, TCL) would be sufficient to derive some of the other parameters, meaning that there is redundancy in the SDRAM Extension Register.

**Table 12-6**

| EMIF SDRAM Extension Register Description | |
|---|---|
| SDRAM Extension Field | Description |
| TCL | TCL = 0, cas latency = 2 TCL = 1, cas latency = 3 |
| TRAS | # of cycles ACTV to DEAC/DCAB (TRAS = Tras - 1) |
| TRRD | TRRD = 0, ras to ras = 2 (different banks) TRRD = 1, ras to ras = 3 (different banks) |
| TWR | # of cycles last data in (SDRAM write) to DEAC/DCAB (TWR = Twr - 1) |
| THZP | # of cycles DEAC/DCAB to outputs in High-Z (THZP = Thzp - 1) |
| RD2RD | RD2RD = 0, READ to READ = 1 RD2RD = 1, READ to READ = 2 |
| RD2DEAC | # of cycles READ to DEAC/DCAB (0 implies 1) |
| RD2WR | # of cycles READ to WRITE (0 implies 1) |
| RD2DQM | # of cycles DQM is high preceding a WRITE interrupting a READ (0 => 1) |
| WR2WR | WR2WR = 0, WRITE to WRITE = 1 WR2WR = 1, WRITE to WRITE = 2 |
| WR2DEAC | # of cycles WRITE to DEAC (0 implies 1) |
| WR2RD | WR2RD = 0, WRITE to READ = 1 WR2RD = 1, WRITE to READ = 2 |

**Table 12-7**

| CFG_BUS Interface | | |
|---|---|---|
| Signal | EMIF Direction | Function |
| EMIF_HIU_CLOCK | O | Port clock |
| CFG_BUS_MOD_SEL[0] | I | Selects EMIF for register access |
| CFG_BUS_ADD[5:2] | I | Register Word Address |
| CFG_BUS_RNW | I | CFG_BUS_RNW = 0 for writes |
| CFG_BUS_WRITE_DATA[31:0] | I | Data for writes |
| CFG_BUS_READ_DATA[31:0] | O | Data being read |
| CFG_BUS_MOD_ACK[0] | O | EMIF acknowledge of register read/write |

The CFG_BUS provides the CPU core with access to the control registers of the EMIF. It is not intended for data transfer - the EMIF-HIU interface handles data transfers. The CFG_BUS and the EMIF-HIU interface operate independently and concurrently. CFG_BUS reads and writes are initiated by a transition of the CFG_BUS_MOD_SEL signal. At hardware reset the MOD_SEL signal will initialize to 0. Subsequent transitions either high or low indicate that a transfer is requested.

Figures 12-7 and 12-8 depict timings for CFG_BUS reads with a negative and positive CFG_BUS_MOD_SEL, respectively.

Due to synchronization delays in the requesting module (the HIU), the CFG_BUS_ADD and CFG_BUS_RNW signals will be stable some number of clocks before the CFG_BUS_MOD_SEL signal transitions. The CFG_BUS_MOD_ACK should transition on the cycle that the CFG_BUS_READ_DATA becomes valid.

Figures 12-9 and 12-10 depict timings for CFE_BUS writes with a negative and positive CFG_BUS_MOD_SEL, respectively.

Due to synchronization delays in the requesting module (the HIU), the CFG_BUS_WR_DATA, CFG_BUS_ADD and CFG_BUS_RNW signals will be stable some number of clocks before the CFG_BUS_MOD_SEL signal transitions.

The CFG_BUS_MOD_ACK should transition on the cycle that the CFG_BUS_WR_DATA will be registered in the EMIF.

The EMIF_AIU interfaces are noted in Figure 12-1 and Table 12-8, below.

**Table 12-8**

| EMIF-HIU Interface | | | |
|---|---|---|---|
| Signal | EMIF Direction | HIU Direction | Function |
| EMIF_HIU_CLOCK | O | I | Port Clock |
| HIU_EMIF_ADDR[31:0] | I | O | Command address (2 LSBs 00) |
| HIU_EMIF_WD_SIZE[7:0] | I | O | Command word count |
| HIU_EMIF_READ | I | O | Read command |
| HIU_EMIF_WRITE | I | O | Write command |
| HIU_EMIF_CMD_VALID | I | O | Command valid |
| HIU_EMIF_FIX_ADDR | I | O | Fix address |
| EMIF_HIU_DEC_ADDR | I | O | Decrement address |
| EMIF_HIU_CMD_ACK | O | I | Command accept |
| EMIF_HIU_WR_DATA_ACK | O | I | Write data accept |
| EMIF_HIU_RD_DATA_VALID | O | I | Read data valid |
| EMIF_HIU_RD_DATA[31:0] | O | I | Read data bus |
| HIU_EMIF_WS[3:0] | I | O | Write mask (byte enables) |
| HIU_EMIF_WR_DATA[31:0] | I | O | Write data bus |

The TC manages the prioritization and routing data throughout the DSP. The EMIF interfaces with the TC through an HIU (HUB Interface Unit) module at the EMIF clock rate. All synchronization of data between the TC and the EMIF is performed entirely within the HIU.

Note that the EMIF-HIU interface is for data transfer only. EMIF control registers are accessed through the CFG_BUS. The EMIF-HIU interface and the CFG_BUS operate independently and concurrently.

Figure 12-11 depicts an exemplary EMIF-HIU transaction. This Figure shows the protocol for an HPI-HIU transaction. The HIU asserts the HIU_EMIF_CMD_VALID signal to initiate the transaction, implying that all relevant signals are valid, including HIU_EMIF_RD/HIU_EMIF_WR, HIU_EMIF_ADDR, HIU_EMIF_SIZE, HIU_EMIF_WS,HIU_EMIF_WR_DATA (for writes), HIU_EMIF_FIX_ADDR, and HIU_EMIF_DEC_ADDR. The EMIF asserts the EMIF_HIU_CMD_ACK signal to indicate that it has accepted the command. The earliest that the ACK can be asserted is the cycle following the CMD_VALID positive transition (ACK could occur in cycle 3 in Figure 12-11). The same cycle (cycle 2) is not possible because the HIU_EMIF_CMD_VALID input is registered in the EMIF. The inputs from the HIU become invalid on the cycle following the ACK cycle.

The EMIF examines HIU_EMIF_ADDR[30:28] to determine which CE space is being addressed (000=> CEO, 001 => CE1, 010 => CE2, 011 => CE3). HIU_EMIF_ADDR[29:28] are sufficient to distinguish the CE spaces, but all 3 bits should be checked (assuming no timing difficulty) to make it easier to increase the number of CE spaces in a future device.

Once the HIU issues a request, it will not alter or remove the request.

For a read transaction, the EMIF asserts the EMIF_HIU-RD_DATA_VALID signal on each cycle that it provides data to the HIU on the EMIF_HIU_RD_DATA bus. Data may be valid on consecutive cycles, or there may be gaps in between. The EMIF design should minimize gaps when possible. In all cases the EMIF must fully process a given transaction before it provides data for a subsequent transaction. It is noted that the EMIF cannot assert RD_DATA_VALID on the same cycle as AU_HIU_CMD_ACK, if the data returned is for that command. Because the EMIF includes both an input and output data register, this is by definition not possible.

For a write transaction, the EMIF asserts the EMIF_HIU_WR_DATA_ACK signal to indicate that it is accepting write data on the HIU_EMIF-WR_DATA between. The ACQs may occur on consecutive cycles, or there may be gaps in between. The EMIF design should minimize gaps when possible. The EMIF_HIU_WR_DATA_ACK can go high on the same cycle that the EMIF accepts the write command from HIU.

Write transactions have the restriction that all data from a transfer must be ACK'ed before a subsequent write command can be accepted. This restriction is due to a constraint in the HIU. Figure 12-12 depicts an exemplary EMIF_HIU write transaction.

The HIU_EMIF_WS signals are important only when the HIU_EMIF-WD_SIZE is equal to 1. At that time they are used to determine which bytes are written to external memory. Valid strobe values include "1111", "1100", "0011", "1000", "0100", "0010" and "0001".

A 1 on the RESET pin starts the EMIF initialization, setting all of the memory-mapped registers to their default values. It is assumed that RESET will remain high for longer than 200 us. If this condition proves untrue, a counter will be required to ensure that SDRAM initialization requirements are met.

LENDIAN, CE1_WIDTH[1:0], and FAST_BOOT are latched off of DSP pins during reset. The EMIF does not need to register these inputs because they are registered elsewhere in the megamodule, and they do not change while reset is inactive. CE1_WIDTH[1:0] sets the width of CE1 space (11 => 32-bit-wide, 10 => 16-bit-wide, 01 => 8-bit-wide, 00 => HPI will initialize later - defaults to 32-bit-wide). FAST_BOOT is provided for testing purposes. If FAST_BOOT is high, CE1 is configured as SBSRAM during device reset. If FAST_BOOT is low, CE1 is configured as an Asynchronous Interface. If the default EMIF register values are incorrect, they should be modified through HPI access or normal code execution. The performance of devices placed on the EMIF data bus will be significantly sub-optimal if register values are not modified.

The DSP EMIF supports reads and writes for devices that are 8-bit-wide, 16-bit-wide, and 32-bit-wide. Both Big and Little Endian formats are supported, as noted in Figure 12-13. A device can be SDRAM, SBSRAM, or Asynchronous memory. Device types cannot be intermixed within the same CE space, but it is possible to use multiple parts of the same type to emulate one part that is larger. For example two 2M x 8 SDRAM's can be combined to form a single 2M x 16 SDRAM. When multiple parts are used in a CE space, they are permitted to increase the width but not the depth of a device. A depth increase requires an additional chip enable or external glue logic for address decoding.

To improve I/O timing, all EMIF signals that go to or from I/O pads must travel through one register stage external to the module. These registers simplify the EMIF design. The lone exception to the register rule is ARDY. ARDY does not have a register between the pad and the EMIF, allowing the Peripherals Guide description to remain accurate.

The EMIF-HIU data bus is fixed at 32 bits wide, so there must be logic to pack bytes, halfwords, and words from the ED[31:0] bus into word quantities. Figure 12-14 illustrates the datapath required to solve this problem. The datapath allows a wide range of data rates- the EMIF can interface to a 32-bit-wide SDRAM/SBSRAM or to a 120 ns 8-bit-wide EPROM. The enable signal on the second register stage is required to accommodate devices that take multiple clock cycles per addressed location.

The register and mux at the output is provided solely to support address decrement in SDRAM's that are not PC100-compliant. Some SDRAM's require a 2 cycle delay to interrupt a read command with another read command. This delay forces data shuffling to support address decrement at word boundaries. The RD2RD field in the SDRAM Extension Register indicates whether data shuffling is necessary.

Figures 12-15 and 12-16 illustrate decrementing reads and write data paths, respectively.

The logic to convert from the 32-bit-wide EMIF-HIU data bus into bytes, halfwords, and words is fairly straightforward. The write datapath is shown in Figure 12-16. If the device on the ED[31:0] bus is 32-bit-wide, the EMIF should be able to acknowledge data from the HIU on every cycle. If the device is 8-bit-wide or 16-bit-wide, then the HIU will obviously need to hold data longer.

As in the read datapath, the register and mux at the output depicted in Figure 12-17 is provided solely to support address decrement in SDRAM's that are not PC100-compliant. Some SDRAM's require a 2 cycle delay to interrupt a write command with another write command. This delay forces data shuffling to support address decrement at word boundaries. The WR2WR field in the SDRAM Extension Register indicates whether data shuffling is necessary.

The EMIF allows a lot of flexibility in SDRAM selection. The row size, column size, and number of banks are programmable. Moreover, many of the SDRAM parameters are also programmable. The design targets PC100/PC125 SDRAM's since they will be widely available, but non-PC100-compliant SDRAM's are also supported.

One of the primary goals of the EMIF design is to maximize the bandwidth of the external memory bus ED[31:0]. If 32-bit-wide SDRAM is connected to the DSP, there should be zero idle cycles on ED[31:0] (and HIU-EMIF data bus as well) within a block transfer to/from SDRAM. Idle cycles might occur at the start of a transfer, but the number must be kept as small as possible. Idle cycles will also be required if the CE space has a 16- bit-wide or 8-bit-wide SDRAM configuration. The timing parameters in the SDRAM Control Register and the SDRAM Extension Register complicate the EMIF design, but they provide greatly enhanced performance and flexibility. The SDWTH field in the SDRAM Control Register allows independent settings for number of banks, row address size, and column address size. The number of banks is not necessary for the design, but it implies how many MSB's are appended to the front of the row address. The row and column address sizes indicate the amount of shifting that is required to drive the EA pins correctly. For example, a typical 2-bank x 512K x 16 SDRAM has settings of 2 banks, 11 row address bits and 8 column address bits.

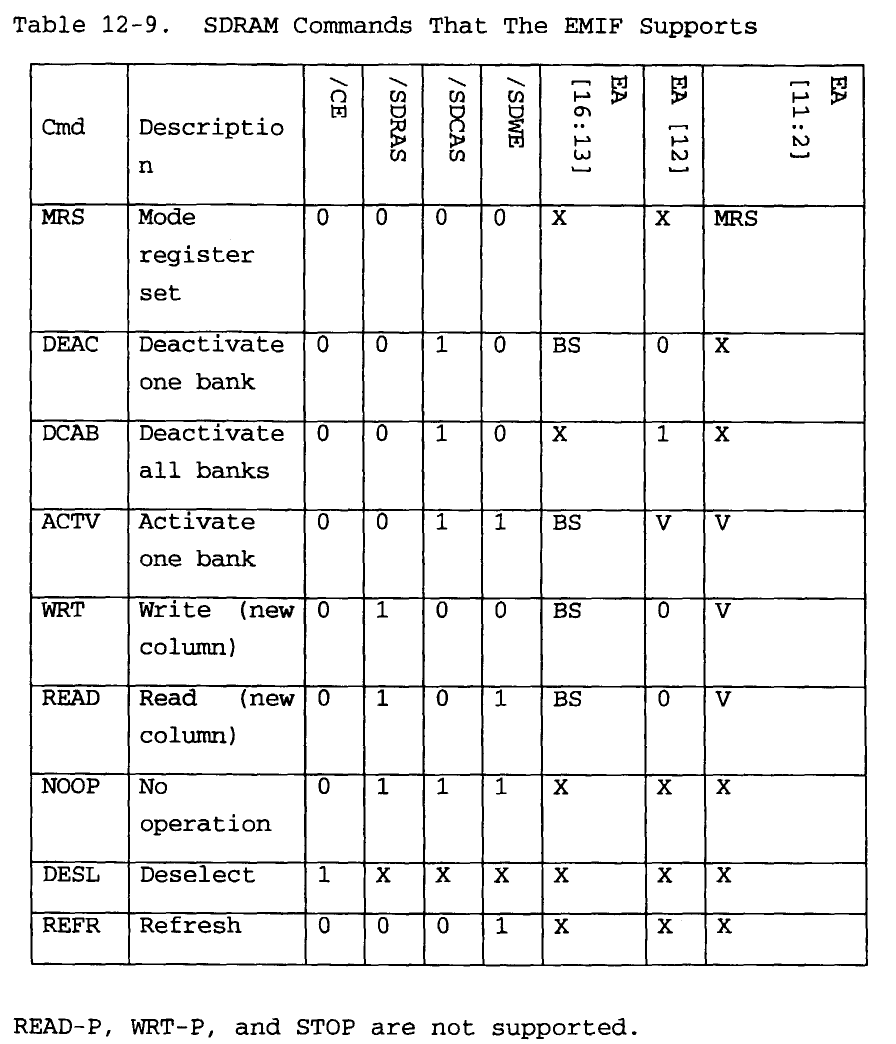

In Table 12-9, "X" is undefined, and the value for the pin should match the value that the pin held on the previous cycle, reducing transitions to save power. The symbol "V" means valid. The "MRS" field is defined later herein. The values of the EA pins are dependent upon the SDWTH of the SDRAM. EA[16:14] could potentially be unused - the "BS" field (bank select) begins immediately to the left of the row address pins. Also, all of the bits between the most significant column address and EA[12] should be driven with the value of EA[12] during DEAC, DCAB, WRT, and READ. To DCAB an 8-bit-column device, EA[12:10] should be 111. To DEAC, WRT, or READ the same device, EA[12:10] should be 000.

The EMIF uses the serial (linear) burst mode of the SDRAM. Table 12-10 shows the way that the addresses increment within an SDRAM. From the TC/XDMA's perspective, the address always increases linearly within a page for sequential data. What this fact implies is that an initial EA[3:2] address of 11 will require a new address to be applied externally immediately. Otherwise, the address will wrap instead of advancing. For example, without a new address input, 0x23 would increment like (0x23, 0x20, 0x21, 0x22) instead of like (0x23, 0x24, 0x25, 0x26). The RD2RD and WR2WR parameters in the SDRAM Extension Register dictate how quickly an interrupting READ or WRITE command can be applied. Based on the value of those registers, an idle data cycle may be unavoidable in some cases.

**Table 12-10**

| Burst Address Sequence | | | |
|---|---|---|---|
| External EA[3:2], First Cycle | Internal EA[3:2], Second Cycle | Internal EA[3:2], Third Cycle | Internal EA[3:2], Fourth Cycle |
| 00 | 01 | 10 | 11 |
| 01 | 10 | 11 | 00 |
| 10 | 11 | 00 | 01 |
| 11 | 00 | 01 | 10 |

The EMIF supports three different addressing modes. The address can increment linearly, decrement linearly, or remain fixed. Linear increment is straightforward - increasing bytes reside in increasing byte addresses. In the context of the SDRAM, linear decrement is slightly painful. Linear decrement causes the address to decrement at word boundaries. Some SDRAM's allow a RD2RD and WR2WR of one clock cycle, but others require two. The two cycle SDRAM's force the addition of additional muxes, registers, and control logic (detailed in Figure 12-15 and Figure 12-17). The fixed addressing mode makes successive accesses go to/from the same byte address.

The TC/XDMA does not allow a transfer to span across an SDRAM page boundary. Transfers that would otherwise cross a boundary are broken into two pieces and fed to the EMIF one at a time. Since page boundaries cannot be crossed, the EMIF does not need to support single transfers that span across multiple CE spaces.

The EMIF programs the SDRAM mode register to 0x032 (cas latency 3) or 0x022 (cas latency 2). This setting configures an SDRAM to have linear bursts and a read/write burst length of 4.

The burst length of an SDRAM determines how many clock cycles worth of data are transferred as a result of one cas command. An initial address is provided with the cas, and the SDRAM performs auto-increment internally for subsequent accesses. The PC100 spec supports burst length choices of 1, 2, or 4 (some SDRAM's also support 8 and full-page). A burst length of 1 is not a good selection because it requires gaps in data to access a bank that is not being used by the current transaction, as noted in Figure 12-18. A burst length of 2, by comparison, avoids the gaps in the same situation, as noted in Figure 12-19. A burst length of 4 (Figure 12-20) also enables gapless multi-bank access, and it dissipates less power than does burst length 2 operation (cas and address toggle less frequently, reducing power consumption on both the chip and the SDRAM).

As noted in Figure 12-21, the choice of 4 as a burst size does not introduce any transfer size limitations. Transfers requiring more than 4 cycles occur as multiple READ/WRITE commands issued with timing that ensures gapless data access. Transfers that are smaller than 4 cycles are interrupted to reduce latency for subsequent transfers. Please refer to Figure 12-19. If a second transfer is not pending, the EMIF allows the transfer to complete.

Figure 12-22 shows the commands used at the start of an SDRAM read. Some parameters from the SDRAM Control Register and the SDRAM Extension Register are included as well. The SDRAM address and write enable signals have been omitted to simplify the figure.

Figure 12-23 shows the commands used at the end of an SDRAM read. Parameters from the SDRAM Control Register and the SDRAM Extension Register are also shown. In this example the bank is deactivated at the completion of the read, and a new transaction is pending. The SDRAM address and write enable signals have been omitted to simplify the figure. The cas latency is 3 and the burst length is 4.

Figure 12-24 shows the commands used at the start of an SDRAM write. Some parameters from the SDRAM Control Register and the SDRAM Extension Register are included as well. The SDRAM address has been omitted to simplify the figure.

Figure 12-25 shows the commands used at the end of an SDRAM write. Parameters from the SDRAM Control Register and the SDRAM Extension Register are also shown. In this example the bank is deactivated at the completion of the write, and a new transaction is pending. The SDRAM address has been omitted to simplify the figure.

Note that transitions of /CE and /SWE are minimized to reduce power in all of the examples in this section.

To reduce latency and increase effective bandwidth, the EMIF supports hidden ras operation. When accessing a page within one bank, the EMIF can prepare another page in a different bank for a transfer. Because the preparation of the second bank happens at the same time as the access for the first transfer, the ras and cas overhead for the second transfer can be hidden. The data for the two transfers arrives without gaps in between, as depicted in Figure 12-26.

The area adds up quickly to support hidden ras. Basically, the EMIF needs to keep a record of which pages are open (pages are always left open after accesses. They are only closed to perform REFR commands or to access a new page within an active bank). Keeping track of a single page requires 19 register bits - 3 bits for CE space, 2 bits for bank, 13 bits for row address, and 1 valid bit. Comparator logic is also needed.

The EMIF supports 4 page registers. The pages can be spread out across all CE spaces, or they can be concentrated within a single CE space. Every time an SDRAM access is performed there is a check to see if the transfer involves an open page. If the page is open then latency will be minimized. If the page is not stored in a page register, its information will be placed in one, and the normal ras and cas delays will be incurred.

A random replacement strategy is used for the page registers. The EMIF will have a free-running 2-bit counter. When it is time to replace a page register, the EMIF selects the register that is pointed to by the counter.

The page registers are not completely flexible. Suppose that only one of the page registers is valid, and suppose it contains a page in bank 0 in CE0. If the next memory access goes to a different page in bank 0 of CE0, the existing open page must be closed (deactivated) and re-opened (activated) with the address of the new page. Only one page within a bank of an SDRAM can be open at once, so it does not make sense to use two page registers to store values of pages in the same bank of the same SDRAM. At reset the valid bits are disabled.

To take advantage of the burst capability of the SBSRAM, addresses are provided as infrequently as possible to minimize power consumption. Burst reads and writes require an address every 4 clock cycles, though address wrap around (see Table 12-10 earlier herein) may lead to an additional address entry. Note that decrement mode requires a new address to be input every cycle, assuming a 32-bit-wide SBSRAM.

Figure 12-27 depicts an EMIF_SBSRAM interface. The /ADS pin is typically called ADSC# on SBSRAM's (the ADSP# pin on the SBSRAM's should be tied to VCC). Connecting /ADV to GND forces the SBSRAM address to continuously increment while the part is active. Strobing the /SSADS pin (/ADS) allows a new burst address to be entered, overriding the burst increment. Burst transfers are completed by bringing /CE (/CS) high with /SSADS (/ADS) low.

Figures 12-28 through 12-31 illustrate a 6 word read from a 32-bit-wide SBSRAM CE space. Each figure shows a different value for the two least significant bits of the starting address.

In Figure 12-28, the SBSRAM burst is terminated in cycle 10 with the deassertion of /CE and either /SSOE or /SSWE. Deselection is performed when an SBSRAM access is completed if there is not a pending request that also goes to SBSRAM.

In Figure 12-29, address wrap around changes the timing of the second /SSADS assertion.

In Figure 12-30, address wrap around changes the timing of the second/SSADS assertion.

In Figure 12-31, address wrap around forces an additional /SSADS assertion. Figure 12-32 shows the decrement read operation, assuming a 32-bit-wide SBSRAM interface. The EA pins must wiggle on each clock cycle.

Figures 12-33 through 12-36 illustrate a 6 word write from a 32-bit-wide SBSRAM CE space. Each figure shows a different value for the two least significant bits of the starting address.

In Figure 12-34, address wrap around changes the timing of the second /SSADS assertion.

In Figure 12-35, address wrap around changes the timing of the second/SSADS assertion.

In Figure 12-36, address wrap around forces an additional /SSADS assertion. Figure 12-37 shows the decrement write operation, assuming a 32-bit-wide SBSRAM interface. The EA pins must wiggle on each clock cycle.

The Asynchronous Interface communicates with many device types, including EPROM, SRAM, Flash, FPGA's, ASIC's, and others. However, the following changes have been to the CE Space Control Registers:
- Timing fields defined in terms of ECLKIN cycles, not CLKOUT1 cycles
- MTYPE extended from 3 bits to 4 bits with more types defined
- Read Hold and Write Hold fields extended from 2 bits to 3 bits

The behavior of the ARDY signal is as follows:

The ARDY signal is a combinational input to the EMIF - there is not a register between the I/O pad and the EMIF. Within the EMIF ARDY is used exclusively in combinational logic (with the one exception being the EMIF Global Control Register). ARDY is examined in the last cycle of the strobe period. If ARDY is low, then the state does not change - the EMIF remains in the last cycle of the strobe period. If ARDY is high, the EMIF leaves the strobe period.

It is possible to support 2 cycle transactions with an asynchronous interface that requires ARDY. As depicted in Figure 12-38. Assume that setup, strobe, and hold are programmed to 1, 1, and 0, respectively. Also, assume that EA is stable before /CE (alternatively, EA is not needed). In cycle 5, the setup period, the external /CE pins are decoded on the board to determine if ARDY is needed. The external logic pulls ARDY low. In cycle 6, the strobe period, the EMIF will examine the ARDY signal to determine if it should remain in strobe or move to hold. Because ARDY is low, the EMIF remains in the strobe state during cycle 7.

The external logic has roughly 1 to 1.5 ECLKIN periods to drive ARDY to the correct value based on a combinational decode of EA and CE. The deassertion of ARDY will require attention to ECLKIN.

For transactions that exceed 2 cycles, the external logic can safely assert and deassert ARDY synchrononously.

The EMIF is clocked by ECLKIN. Figure 12-39 shows a high level view of ECLKIN and the DSP clocking structure. Note that ECLKIN can operate asynchronous to the CPU, or CLKOUT2 can be tied to ECLKIN to run the EMIF at half the CPU frequency.

Figure 12-40 shows the I/O path associated with ECLKIN.

Figure 12-41 shows a read from a clocked external device.

Figure 12-42 shows a write to a clocked external device.

The HPI allows an external host processor, typically a microcontroller, to perform read and write accesses from/to the DSP address space. The HPI interfaces to both the TC through a standard HIU (HUB interface unit) for bulk data movement, and the TR bus for making read and write requests.

During device reset, the device endian mode and EMIF bus width are sampled on the host data port. This occurs on the rising edge of the device /RESET pin. Normally, this is done by sampling the appropriate pins on the CLKOUT2 cycle preceding /RESET high- this is left as a detail for the designer. The following pins are sampled to determine the device's operational modes. The HPI must provide these signals as module outputs to the other modules and megamodule for configuration. These signals are assumed static after /RESET is deasserted.

**Table 13-1**

| Device Configuration | | | |
|---|---|---|---|
| HD[M:N] | Controls | Value | Module Outputs |
| 8 | Device endianness | 0 big endian | LENDIAN (to EMIF and megamodule) |
| | | 1 little endian | |
| 4:3 | Boot mode and EMIF bus size for /CE1 | 00 8-bit /CE1; HPI boot | CE1_WIDTH(1:0) (to EMIF) |
| | | 01 8-bit /CE1; bootload | |
| | | 10 16-bit /CE1; bootload | |
| | | 11 32-bit /CE1; bootload | |

The HPI interface to the DSP core requires modification to interface to the TC and TR mechanisms. The HPI goal is a sustained bandwidth of 33MB/s.

The HPI module connects to two DSP megamodule boundary interfaces. Read and write data shall be passed through one of the TC's AU-HIU interfaces, to which the HPI datapath must be connected. The HPI must also be capable of making requests of the TC, which occurs through the second interface, the TR bus. Figures 13-1 and 13-2 illustrate the flow of requests and data movement to/from the HPI.

Figure 13-1 shows an HPI write sequence, and the flow of commands/data that must occur in the DSP system.

The transaction begins with the posting of a request by the HPI via the TR bus (1). The TR packet flows through the queue manager (QM) RAM and is prioritized with other pending requests. Finally, it is loaded into the SRC/DST pipeline registers. A pre-write command (2) is issued to the destination port to reserve space for the landing data. Once space is reserved in the destination port, the SRC pipe issues a read command (3) to the source port (the HPI in this case). This command is passed through the HIU to the HPI, which immediately responds with data. The HIU passes this data back to the TC DST pipeline (4). The TC can then route this data to the final destination port (5) via a write command. Note that the pre-write commands (2) are not visible to the HPI.

Figure 13-2 shows an HPI read sequence, and the flow of commands/data that must occur in the DSP system.

The transaction begins with the posting of a request by the HPI via the TR bus (1). The TR packet flows through the queue manager (QM) RAM and is prioritized with other pending requests. Finally, it is loaded into the SRC/DST pipeline registers. A pre-write command (2) is issued to the destination port (the HPI) to reserve space for the landing data. Once space is reserved in the destination port HIU, the SRC pipe issues a read command (3) to the source port. This command is passed to the L2 controller, which responds with data. The HIU passes this data back to the TC DST pipeline (4). The TC can then route this data to the final destination port (5) via a write command to the HPI HIU, which passes it to the HPI. Note that the pre-write commands (2) are not visible to the HPI.

As the previous examples show, a fairly long path exists between a request from the HPI and the actual data movement. To compensate for this, the HPI interface is preferably modified to include 1 to 2 FIFOs for data buffering. Both HPI read (TC write) and HPI write (TC read) datapaths must be buffered. A separate FIFO may be implemented for each datapath; alternatively a bi-directional FIFO may be used.

Each FIFO in the HPI datapath, as depicted in Figure 13-3 shall be sized at 8x32-bits. This size is chosen to represent a balance between the required bandwidth and latency associated with the TR/TC mechanisms to service the port. The 32-bit width is chosen as an optimization point for the HIU interface, which is 32-bits wide. A 16-bit width may make design of the control logic simpler. Throughout this section, references to two variables, M and N shall be made to describe the FIFO operation. N represents the size of each FIFO, or 8 words. M is the half full condition of each FIFO, and is 4 words.

In addition to the FIFOs, the HPI control logic also includes 2 counters to track the FIFO state and the state of outstanding requests to the TC. The counters and their operation is defined below.

The write data FIFO (HPI/pins to TC) state is tracked by WR_FIFO_ELCT. The read data FIFO (TC to HPI/pins) state is tracked by RD_FIFO_ELCT. Both counters should reset to zero at system reset. As will be shown, the RD_FIFO_ELCT may also be reset during a flush operation. Each counter increments by 1 for each word written to the FIFO, and decrements by 1 for each word read from the FIFO. In this manner, the counters track the number of words in each FIFO at all times. Note that since the HPI data bus is only 16-bits wide, the WR_FIFO_ELCT will increment every other HPID write. Similarly, RD_FIFO_ELCT will decrement every other HPID read. Per the original HPI specification, all accesses will occur in 16-bit pairs on the HPI.

In addition to the element counters, the HPI control logic must also track the number of words for which requests to transfer have already been made. These counters, WR_FIFO_SUBMITTED and RD_FIFO_SUBMITTED will work in conjunction with the TR submission logic described later herein. Specifically, these counters work as follows. WR_FIFO_SUBMITTED:
- For each TR packet submitted to service (read) the WR_FIFO, WR_FIFO_SUBMITTED shall increment by M (4, the number of words being requested).
- For each read performed of the WR_FIFO (from TC side), WR_FIFO_SUBMITTED shall decrement by 1.
- WR_FIFO_SUBMITTED shall be reset to 0 via system reset. RD_FIFO_SUBMITTED:
- For each TR packet submitted to service (write) the RD_FIFO, RD_FIFO_SUBMITTED shall increment by M (4, the number of words being requested).
- For each word written to the FIFO via the TC, RD_FIFO_SUBMITTED shall decrement by 1.
- RD_FIFO_SUBMITTED shall be rest to 0 via system reset.

The submit counters serve to note how much data is in flight in the system. They are used in order to pipe down the HPI interface at the end of an access. In the case of a write access, there may be anywhere from 1 to N words left in the WR_FIFO at the end of an access. In order to pipe down the FIFO, the TR submission logic must submit a final TR request for the TC to read (WR_FIFO_ELCT - WR_FIFO_SUBMITTED) words from the FIFO. Once this transfer completes, the WR_FIFO will be empty, and ready to process the next command. Similarly, when a read command is completed by the HPI, there may still be data in the RD_FIFO, plus some data may still be en route to the HPI. In the case of a read, the data may be discarded, however, the HPI control logic must know the amount of data that is in flight and to accept from the HIU to properly shut down. The RD_FIFO_SUBMITTED counter provides this information.

An HPI cycle will normally begin with a write to the HPIA register, to set the starting address for the burst. As depicted in Figure 13-4, a write to HPIA will also be copied to a second register, which will be used to generate TR requests. This shadow address register need not be accessible to either the host or the core. The address written to HPIA and shadowed in the TR submission register represents the destination address for the data written to HPID (write), or the source address for data to be read from HPID (read). Note that the direction of the transfer is not known by the HPI or TR submission logic until the HPID data accesses begin. The HPIA write simply copies the address to the HPIA register and the TR submission shadow register.

The address function and TR submission mechanism is slightly more complex than it might first appear. The fundamental challenge posed is tracking the current address in HPIA, while submitting the proper TR parameters to actually move the data. As shown above, this will require 1-2 small adders to provide the correct operation. The speed requirement for these adders is not significantly high (30ns). As a note, a single adder is acceptable as the read and write datapaths cannot be operated concurrently. The required operation is defined as follows:

### HPI Writes:

TR submission with DST address = HPIA - WR_FIFO_ELCT. An exception is noted in the case when HCNTRL[1:0] = 11, in which case HPIA may be used directly.

### HPI Reads:

TR submission with SRC address = HPIA + 0x10 (M, 4 words). Exceptions are noted in the case when HCNTRL[1:0] = 11, and during the first read of a burst (HCNTRL[1:0] = 01). In these two cases, HPIA may be used directly.

The host posts requests of the HPI and DSP through a series of accesses. A read request is posted by a write to the HPIA (HPI address) register, followed by 1 or more reads of the HPID (HPI data) register. Similarly, a write occurs via a write to the HPIA register followed by one or more writes to HPID. The host writes to HPIA normally to set up the starting address for an access. Subsequent accesses to the HPID register may select that the address in HPIA be post-incremented, or left static, via the HPI HCNTRL[1:0] inputs. The TC mechanism is natively better at performing burst accesses than single word transfers. As a result, the TR mechanism is similarly optimized for burst type accesses. The HPI performs burst accesses whenever possible.

The following section outlines write bursts from the HPI. Writes from the pins (HPI) result in reads of the HPI data FIFO by the TC. A write access is begun by the host by writing to the HPIA register to set the starting address of the burst. HPI writes are performed via write access to the HPID register. This can take one of two forms. If HCNTRL[1:0] is set to 01, the address in HPIA is incremented following the write. If HCNTRL[1:0] is set to 11, HPIA is unmodified, and a fixed addressing mode is selected. Note that in the latter case the HPI control logic must first flush any previously issued writes.

Normally, HCNTRL[1:0] will be set to 01, selecting a burst type access. As writes are performed, data is copied into the HPI WR_FIFO, and WR_FIFO_ELCT is incremented accordingly. Note that two 16-bit host writes to HPID must occur to write a single 32-bit word to WR_FIFO. For every M (4) words written to HPID (noted by WR_FIFO_ELCT[1.0] 11=> 00 transition), a TR request shall be sent to the core via the TR interface. The following parameters should be sent.

**Table 13-2**

| TR Parameters for Writes w/HCNTRL[1:0] = 01 | | | |
|---|---|---|---|
| TR Field | Value | Meaning | Description |
| WORD0(67:65) | 001 | Level 1 (high) | Priority Level |
| WORD0(64) | 0 | Not Used | N/A |
| WORD0(63:61) | 001 | HPI sourced | Requester Identification |
| WORD0(52:48) | 00000 | No completion report | Report Word |
| WORD0(60:59) | 00 | 32-bit (words) | Element Size |
| WORD0(57:56) | 01 | Linear | Source Addressing Mode |
| WORD0(54:53) | 01 | Linear | Destination Addressing Mode |
| WORD0(58) | 0 | Non-2D transfer | 2-D Source |
| WORD0(55) | 0 | Non-2D transfer | 2-D Destination |
| WORD0(47:32) | 0x0000 | Linear transfer | Element Index |
| WORD0(31:0) | 0x60000000 | HPI WR_FIFO | Source Address |
| WORD1(67:64) | 0 | Not Used | N/A |
| WORD1(63:48) | 0x0000 | Non-multi frame | Frame Count |
| WORD1(47:32) | M (0x0004) | 4 words, half WR_FIFO | Element Count |
| WORD1(31:0) | See Figure 13-4 | HPI supplied address | Destination Address |

As the TR is submitted, WR_FIFO_SUBMITTED is incremented by M (4), to note that a request to read M (4) words has been submitted. The submitted TR will, sometime later, result in a read of the HPI WR_FIFO by the TC. The HPI control logic will accept this read and provide data per the AU-HIU interface. As the reads of the WR_FIFO are performed, WR_FIFO_SUBMITTED is decremented, as is WR_FIFO_ELCT. In this manner, WR_FIFO_SUBMITTED tracks the number of outstanding read requests (of WR_FIFO) which have not yet been performed, and WR_FIFO_ELCT tracks the total number of words in the FIFO.

Once the write cycle ends, either by timeout, HPIC access, HPIA write access (implying an address discontinuity), or bus direction change, the write FIFO must be emptied. In order to accomplish this, a final TR request must be sent to the core for the number of words in the FIFO for which requests have not already been issued. Mathematically, this is equal to WR_FIFO_ELCT - WR_FIFO_SUBMITTED. This is sent as word count for the final TR request for the cycle, using the rest of the parameters listed in Table 13-2. No future accesses to HPID, or HPIC or HPIA writes will be accepted by the HPI until the write FIFO is flushed. The HPI will throttle such accesses using /HRDY.

A special case exists for writes to HPID with HCNTRL[1:0] = 11. This mode specifies a single word is to be written to the DSP memory. In this case, HPIA is not modified. To support this mode in a reasonable manner, the HPI control logic submit a TR packet for a single word (EC = 1, ELSZ = 00, 32-bit) at the address specified in HPIA. Using the aforementioned TR address generation mechanism, this should require very little alteration to the HPI state machine.

**TR Parameters for Writes w/HCNTRL[1:0] = 11**

| TR Field | Value | Meaning | Description |
|---|---|---|---|
| WORD0(67:65) | 001 | Level 1 (high) | Priority Level |
| WORD0(64) | 0 | Not Used | N/A |
| WORD0(63:61) | 001 | HPI sourced | Requester Identification |
| WORD0(52:48) | 00000 | No completion report | Report Word |
| WORD0(60:59) | 00 | 32-bit (words) | Element Size |
| WORD0(57:56) | 01 | Linear | Source Addressing Mode |
| WORD0(54:53) | 01 | Linear | Destination Addressing Mode |
| WORD0(58) | 0 | Non-2D transfer | 2-D Source |
| WORD0(55) | 0 | Non-2D transfer | 2-D Destination |
| WORD0(47:32) | 0x0000 | Linear transfer | Element Index |
| WORD0(31:0) | 0x60000000 | HPI WR_FIFO | Source Address |
| WORD1(67:64) | 0 | Not Used | N/A |
| WORD1(63:48) | 0x0000 | Non-multi frame | Frame Count |
| WORD1(47:32) | 1 | Single Word Transfer | Element Count |
| WORD1(31:0) | See Figure 13-4 | HPI supplied address | Destination Address |

HPI reads are actually significantly different from HPI writes inside the HPI controller. The fundamental difference is that in order to support high throughput HPI reads, the HPI controller must speculatively perform reads of the DSP memory system before the host actually requests them. An HPI read access normally begins with a write to HPIA, to set up the starting address for the burst. The value written to HPIA is copied to the shadow register which is used to form TR requests, just as with writes (this is another reason why read and write accesses cannot be pipelined together). Reads are performed in one of two modes, similar to writes. If HCNTRL[1:0] is set to 01, HPIA is incremented at the end of the read. If HCNTRL[1:0] is set to 11, HPIA is not modified, and a fixed addressing mode is used. The 01 case is the more common burst type of access, and is considered first.

HPI reads are signaled via a read access of the HPID register. The first read of HPID will force the HPI controller to stall the host by asserting /HRDY, because the RD_FIFO is empty. In parallel with this, the TR submission logic will issue a TR request with the following parameters, to begin filling the RD_FIFO.

**Table 13-4**

| TR Parameters for Reads w/HCNTRL[1:0] = 01 (First Read) | | | |
|---|---|---|---|
| TR Field | Value | Meaning | Description |
| WORD0(67:65) | 001 | Level 1 (high) | Priority Level |
| WORD0(64) | 0 | Not Used | N/A |
| WORD0(63:61) | 001 | HPI sourced | Requester Identification |
| WORD0(52:48) | 00000 | No completion report | Report Word |
| WORD0(60:59) | 00 | 32-bit (words) | Element Size |
| WORD0(57:56) | 01 | Linear | Source Addressing Mode |
| WORD0(54:53) | 01 | Linear | Destination Addressing Mode |
| WORD0(58) | 0 | Non-2D transfer | 2-D Source |
| WORD0(55) | 0 | Non-2D transfer | 2-D Destination |
| WORD0(47:32) | 0x0000 | Linear transfer | Element Index |
| WORD0(31:0) | See Figure 13-4 | HPI supplied address | Source Address |
| WORD1(67:64) | 0 | Not Used | N/A |
| WORD1(63:48) | 0x0000 | Non-multi frame | Frame Count |
| WORD1(47:32) | N (0x0008) | 8 words, full RD_FIFO | Element Count |
| WORD1(31:0) | Ox60000000 | HPI RD_FIFO | Destination Address |

The first TR packet will ultimately result in a write of N (8) data words to the RD_FIFO. For each data word written to RD_FIFO, RD_FIFO_ELCT is incremented by 1. Once the FIFO has at least 1 word in it, the /HRDY logic may deassert /HRDY and allow the first host read to proceed. For each word read from RD_FIFO, RD_FIFO_ELCT decrements by 1 (note that this requires two 16-bit reads by the host). As the host reads data from the RD_FIFO, new data must be requested via TR. The request condition is denoted by the transition of RD_FIFO_ELCT[1:0] from 00 to 11, and should force submission of a TR packet with the following parameters.

**Table 13-5**

| TR Parameters for Reads w/HCNTRL[1:0] = 01 (Subsequent Read) | | | |
|---|---|---|---|
| TR Field | Value | Meaning | Description |
| WORD0(67:65) | 001 | Level 1 (high) | Priority Level |
| WORD0(64) | 0 | Not Used | N/A |
| WORD0(63:61) | 001 | HPI sourced | Requester Identification |
| WORD0(52:48) | 00000 | No completion report | Report Word |
| WORD0(60:59) | 00 | 32-bit (words) | Element Size |
| WORD0(57:56) | 01 | Linear | Source Addressing Mode |
| WORD0(54:53) | 01 | Linear | Destination Addressing Mode |
| WORD0(58) | 0 | Non-2D transfer | 2-D Source |
| WORD0(55) | 0 | Non-2D transfer | 2-D Destination |
| WORD0(47:32) | 0x0000 | Linear transfer | Element Index |
| WORD0(31:0) | See Figure 13-4 | HPI supplied address | Source Address |
| WORD1(67:64) | 0 | Not Used | N/A |
| WORD1(63:48) | 0x0000 | Non-multi frame | Frame Count |
| WORD1(47:32) | M (0x0004) | 4 words, half RD_FIFO | Element Count |
| WORD1(31:0) | 0x60000000 | HPI RD_FIFO | Destination Address |

Note that subsequent TR requests for read data are made for only M (4) words at a time. Only the first read request is made for the entire N (8) words of the FIFO. In this mariner the FIFO is kept non-empty so burst read accesses can continue.

Once a read command terminates, either by timeout, HPIC access, HPIA write access (implying an address discontinuity), or bus direction change, the read FIFO must be emptied. This process could be performed very easily by simply resetting the FIFO read and write pointers, and the RD_FIFO_ELCT to 0. However, in addition to this, any read data which is still in flight must be accepted by the HPI port on the TC side, or else the HIU buffer pointers become corrupted. Consequently, the following pipe-down procedure is suggested at the end of a read cycle. The RD_FIFO_SUBMITTED counter is first monitored, and allowed to decrement to 0. This will occur once the final writes have been accepted by the port for the last TR packet that was sent. Because of the way in which TR packets are generated for reads, it is guaranteed by design that there is room in the RD_FIFO for this landing (though useless) data. Once RD_FIFO_SUBMITTED is zero, the RD_FIFO read and write pointers, and RD_FIFO_ELCT counter may be reset to 0. This will ensure that the FIFO is set up for the next read cycle. During this sequence of shutdown cycles, no future accesses to HPID, or HPIC or HPIA writes will be accepted by the HPI. Such access attempts will be throttled through assertion of /HRDY.

An HPI read with HCNTRL[1:0] = 11 selects the fixed addressing mode, using the address in HPIA. When reads of HPID are performed using this mode, the HPI control logic should simply submit a single word TR as shown below.

**Table 13-6**

| TR Parameters for Reads w/HCNTRL[1:0] = 11 | | | |
|---|---|---|---|
| TR Field | Value | Meaning | Description |
| WORD0(67:65) | 001 | Level 1 (high) | Priority Level |
| WORD0(64) | 0 | Not Used | N/A |
| WORD0(63:61) | 001 | HPI sourced | Requester Identification |
| WORD0(52:48) | 00000 | No completion report | Report Word |
| WORD0(60:59) | 00 | 32-bit (words) | Element Size |
| WORD0(57:56) | 01 | Linear | Source Addressing Mode |
| WORD0(54:53) | 01 | Linear | Destination Addressing Mode |
| WORD0(58) | 0 | Non-2D transfer | 2-D Source |
| WORD0(55) | 0 | Non-2D transfer | 2-D Destination |
| WORD0(47:32) | 0x0000 | Linear transfer | Element Index |
| WORD0(31:0) | Shadow Register | HPI supplied address | Source Address |
| WORD1(67:64) | 0 | Not Used | N/A |
| WORD1(63:48) | 0x0000 | Non-multi frame | Frame Count |
| WORD1(47:32) | 1 | Single Word Transfer | Element Count |
| WORD1(31:0) | 0x60000000 | HPI RD_FIFO | Destination Address |

The HPI module supports a special transfer mode in which a single word read may be performed at the address specified by HPIA by simply writing to a bit in HPIC. This bit, denoted as FETCH in HPIC, is mapped to bits 4 and 20 of HPIC. When set to one, a single word read is performed of the address in HPIA. In order to support this type of operation, the HPI module may simply handle the case as it does a single word read, where HCNTRL[1:0] = 11. The TR parameters and FIFO flushing routines for the two cases are identical.

The HPI controller includes a watchdog timer to monitor the end of read and write cycles. The reason for this requirement is that by including FIFOs to increase throughput, single word accesses are in a sense precluded from being efficient. This could be changed by providing a /BLAST (burst last) signal on the HPI interface such that cycle completion could be easily detected. The watchdog timer will also serve to flush out the RD_FIFO of the HPI; however, this mechanism will be less utilized.

The watch dog timer function is as follows. The HPI shall include a 6-bit watchdog timer. The timer shall be reset to 0 on any cycle that accesses HPID. If a read or write command is in progress, the counter will increment by 1 for each cycle that an access to HPID is not detected. If the counter reaches 63, the cycle is assumed to be complete and the read and write FIFOs are flushed. The counter is also reset by this condition.

Detecting the end of a read or write command is crucial to the HPI operation. This condition signals the HPI control logic to clean out the read and/or write FIFOs to prepare them for the next command. In order to ensure that this occurs properly without losing any data, the end of a command must be properly detected. The following outlines the required operation. A read/write cycle terminates if:
- Write access to HPIA is detected.
- Any access (read or write) of HPIC is detected.
- Access to HPID changes direction (write changes to read, or read changes to write)
- Access to HPID is detected with HCNTRL[1:0] = 11.
- A timeout is detected.

Once the end of a cycle is detected, the HPI control logic will clear out the RD_FIFO and/or WR_FIFO. Once this is complete, the HPI can accept a new command from the host.

Ideally, the HPI interface could support pipelining of read and write commands. For example, once a write cycle terminates, a new write cycle could be started immediately. This would provide improved throughput, however, at the complexity of logic design. Additionally, there would be almost no way to provide the same functionality for read cycles, because in flight read data must first be flushed from the FFO and new read data speculatively fetched. For these reasons, the HPI interface shall not perform any sort of pipelining of read and write cycles. Once the end of a cycle is detected, the HPI control logic will completely flush the read and write datapaths as noted earlier herein before beginning a new cycle.

The HPI control logic will use the /HRDY (host ready) indicator to throttle the host as appropriate to ensure proper operation. /HRDY shall be asserted active (low) in the following cases: /HRDY asserted:
- A write to HPID is attempted when WR_FIFO is full.
- A read of HPID is attempted when RD_FIFO is empty.
- A write access to HPIA is attempted during FIFO flushing operations (this is included as a protection mechanism, as the address stored in HPIA may still be required to generate a final TR request of a WR_FIFO flush operation).
- Any access is attempted to HPIC during FIFO flushing operations.

Note that the /HRDY generation logic must work in close conjunction with the command termination logic. Of particular importance is the case where HPID access is detected with HCNTRL[1:0] = 11. In the case of a write, /HRDY must be asserted to stall the host while any previous writes are performed (from the WR_FIFO to the DSP). In the case of a read, the RD_FIFO must be flushed and the new read requested via a new TR request. Additionally note that if data is still in flight from previously issued reads (RD_FIFO_SUBMITTED != 0) this data must be allowed to land and be discarded before the new request can be made. The host must be stalled until the new read data returns. Accesses with HCNTRL[1:0] = 11 are general single word accesses, and thus have the luxury of being inefficient.

Transfer requests are posted to the core via the TR bus. At the megamodule boundary, a 136-bit bus is provided such that peripherals outside the core may submit TR packets. Internal to the megamodule, this bus is chained together with other TR requesters, which include the L2 controller and XDMA mechanism.

Because it is desired that the peripherals be kept in a single clock domain, the TR submission mechanism is synchronized at the megamodule boundary. Two synchronizers are required- one which the HPI drives active to signal a request to the TR and an acknowledge which is driven back from the core, signaling acceptance of the TR request. The megamodule will include the formatting logic to transform the 136-bit boundary bus to the 68-bit, multi-cycle TR bus (functionally this will require a small state machine and a 68-bit MUX). The boundary TR bus that the HPI must interface to contains the following signals.

**Table 13-7**

| Peripheral TR Submission Bus | | | |
|---|---|---|---|
| Signal | HPI/ASIC BP Direction | Megamodule Direction | Function |
| PER_TR_WORD0(67:0) | O | I | TR Packet Word 0 |
| PER_TR_WORD1(67:0) | O | I | TR Packet Word 1 |
| PER_TR_REQ | O | I | Request Valid |
| TR_PER_ACK | I | O | Request Accepted |

The request (PER_TR_REQ) and acknowledge (TR_PER_ACK) signals are passed through synchronizers in the HPI HIU. Each of these signals will be synchronized to the appropriate clock domain, such that the HPI will operate from a single clock (HPI_HIU_CLOCK). Because the synchronizers are generally designed to pass edges from one clock domain to the other, the protocol for submitting requests to the TR bus will be edge based. The HPI switches PER_TR_REQ after setting up PER_TR_WORD0 and PER_TR_WORD1 busses with the appropriate transfer information. This edge will be passed through the aforementioned synchronizer to the core, which will include formatting the packet onto a TR node. Once the TR has been submitted successfully by the core, TR_PER_ACK will switch (synchronous to HPI_HIU_CLOCK), informing the HPI that it may change the values on the PER_TR_WORD0|1 busses to set up for another TR packet. This is identical to the CFG_BUS operation described earlier herein. An example of a TR submission and acknowledge cycle is shown in Figure 13-5.

In Figure 13-5, two TR requests are made. Once the TR_WORDs are set up correctly, the HPI switches PER_TR_REQ (au_to_mega_xdma_int_sync1). Some time later, TR_PER_ACK (mega_to_au_tr_ack_sync) is switched, informing the HPI that the request has been submitted. This also informs the HPI that it can submit another request. Note that PER_TR_REQ may be switched synchronously with the TR_WORDs if desired, because the requests must be passed through a synchronizer. The HPI should not, however, switch the TR_WORDs after PER_TR_REQ switches because the timing through the synchronizer cannot be guaranteed. The TR_WORDs must be held until the TR_PER_ACK signal switches. The HPI module, in addition to submitting TR packets, must be accessible to the megamodule through two interfaces. The following sections outline these two interfaces.

**Table 13-8**

| CFG_BUS Interface | | |
|---|---|---|
| Signal | HPI Direction | Function |
| HPI_HIU_CLOCK (tied to CLKOUT2 at top level) | O | Port clock |
| CFG_BUS_MOD_SEL[2] | I | Selects HPI for register access |
| CFG_BUS_ADD[15:0] (decode as required) | I | Register Word Address |
| CFG_BUS_RNW | I | CFG_BUS_RNW = 0 for writes |
| CFG_BUS_WRITE_DATA[31:0] | I | Data for writes |
| CFG_BUS_READ_DATA[31:0] | O | Data being read |
| CFG_BUS_MOD_ACK[0] | O | HPI acknowledge of register read/write |

The CFG_BUS provides the CPU core with access to the control registers of the HPI. It is not intended for data transfer - the HPI-HIU interface handles data transfers. The CFG_BUS and the HPI-HIU interface operate independently and concurrently. CFG_BUS reads and writes are initiated by a transition of the CFG_BUS_MOD_SEL signal. At hardware reset the MOD_SEL signal will initialize to 0. Subsequent transitions either high or low indicate that a transfer is requested.

Figures 13-6 and 13-7 illustrate CFG_BUS reads with CFG_BUS_MOD_SE negative and positive, respectively.

Due to synchronization delays in the requesting module (the HIU), the CFG_BUS_ADD and CFG_BUS_RNW signals will be stable some number of clocks before the CFG_BUS_MOD_SEL signal transitions. The CFG_BUS_MOD_ACK should transition on the cycle that the CFG_BUS_READ_DATA becomes valid. The HPI design goal is to have the ACK transition within two cycles following the MOD_SEL transition.

Figures 13-8 and 13-7 illustrate CFG_BUS writes with CFFG_BUS_MOD_sel negative and positive, respectively.

Due to synchronization delays in the requesting module (the HIU), the CFG_BUS_WR_DATA, CFG_BUS_ADD and CFG_BUS_RNW signals will be stable some number of clocks before the CFG_BUS_MOD_SEL signal transitions. The CFG_BUS_MOD_ACK should transition on the cycle that the CFG_BUS_WR_DATA will be registered in the HPI. The HPI design goal is to have the ACK transition within two cycles following the MOD_SEL transition.

Note that CFG_BUS is very similar to the PBUS, with the exception that the module selects and acknowledges are transition sensitive rather than level sensitive. This was done to ease synchronization logic in the HIU. If a PBUS interface is desired, the HPI module may include a block to convert CFG_BUS into PBUS.

The HIU for the HPI shall decode CFG_BUS_MOD_SEL[2] and drive CFG_BUS_MOD_ACK[2] appropriately, which will decode addresses in the 0x0188XXXX range to provide to the HPI module. The only CPU accessible register in the HPI is HPIC, and it is accessible at an address of 0x01880000. As all other addresses in this space are undefined, a partial decode by the HPI module is allowed.

In addition to the CFG_BUS interface, the HPI module must also interface to an HIU, which will provide the bulk data movement to and from the HPI. Note that the HPI control register, HPIC, is not accessible via the HIU interface. Read and write access via the HIU interface is only for the purposed of filling the HPI read FIFO, and emptying the HPI write FIFO.

The HPI HIU will internally (to the megamodule) decode the appropriate HPI addresses. It should be noted that this address range (0x60000000- 0x6FFFFFFF) is not visible to the user. The address range is only required such that the TC can determine which port to send read and write commands to. The decoded accesses will be presented to the HPI over the HIU interface. A complete address is provided to the HPI, however, it may be ignored. Read accesses always access the HPI write FIFO, while writes always access the HPI read FIFO.

The HIU interface operates synchronously to CLKOUT2, just as the CFG_BUS interface does. For a complete description of the HIU interface, please refer the discussions earlier herein regarding Figure 4-5.

Two MCSP units are instantiated outside the megamodule in the DSP. These provide serial interfaces for the device, for interfacing to a wide variety of popular analog interface circuits (AICs), codecs, and possibly other intelligent serial drivers, such as another DSP or microcontroller with a serial interface.

The MCSP interface to the core requires modification to interface to the HIU and CFG_BUS mechanisms. The MCSP goal is a sustained bandwidth of 50Mb/s per MCSP.

The MCSP module must connect to two megamodule boundary interfaces. Read and write data shall be passed through one of the TC's AU-HIU interfaces, to which the MCSP datapath (DMA interface) must be connected. The MCSP must also connect to the CFG_BUS (RHEA bus interface) for peripheral control. As an added compatibility requirement, the data side of the MCSP (receive and transmit data registers) must also be accessible via the CFG_BUS interface.

Address decoding for the two MCSP interfaces is handled outside the MCSP core. The MCSP include arbitration logic to multiplex requests for the data channel between both the HIU interface and the CFG_BUS interface in the event of a simultaneous access. The CFG_BUS is higher priority; the thinking here is that CFG_BUS accesses are most often initiated by the CPU rather than the XDMA. It is additionally noted that two MCSPs must be interfaced to a single HIU module. Separate CFG_BUS spaces (module selects) however are provided for the control channel. The following addresses and CFG_BUS spaces are defined for each MCSP.

**Table 14-1**

| MCSP Address Ranges | | |
|---|---|---|
| | Control Channel (formerly RHEA) | Data Channel (formerly DMA port) |
| MCSP0 | 0x018C0000-0x018FFFFF | 0x30000000-0x33FFFFFF |
| | Responds to/uses: cfg_bus_mod_sel[3] & cfg_bus_mod_ack[3] | HIU_MCSP_ADD decode (OR via CFG_BUS interface) |
| MCSP1 | 0x01900000-0x0193FFFF | 0x34000000-0x37FFFFFF |
| | Responds to/uses: cfg_bus_mod_sel[4] & cfg_bus_mod_ack[4] | HIU_MCSP_ADD decode (OR via CFG_BUS interface) |

The HIU_AU interface to the MCSP data channel is described in detail earlier herein. The CFG_BUS interface is also described earlier herein.

The MCSP CFG_BUS interfaces are provided via the MCSP HIU within the megamodule. The HIU handles the synchronization of CFG_BUS to the external clock domain, which is controlled via MCSP_HIU_CLOCK. In the case of the MCSP modules, both modules may be operated at the sane speed (at the backend). It is intended that CLKOUT2 shall be used as the reference clock for these interfaces. CLKOUT2 shall be tied back into the megamodule as the MCSP_HIU_CLOCK for the MCSPs. This clock shall also be provided to the MCSPs for synchronization. Both the CFG_BUS and AH_HIU interface operate in the clock domain of MCSP_HIU_CLOCK.

The CFG_BUS interface replaces the MCSP RHEA bus interface, and is intended to be used for control register access and general configuration of the MCSP module(s). The data channel (receive and transmit data registers) must be accessible to both the normal data channel (formerly the DMA interface, now the AU_HIU interface) and the control interface (formerly RHEA, now CFG_BUS). The preferred method of serial port data movement is through the AU-HIU port. The CFG_BUS port however must have access to the data registers as well. It is preferred that the control registers for each serial port not be accessible via the AU-HIU interface.

To support this, it is required that the MCSP include some arbitration logic to handle the case of simultaneous access by both the CFG_BUS and the AU_HIU interface. The CFG_BUS is given priority in the event of contention. As a note, an address compare is not required- the MCSP may stall the AU-HIU interface for any CFG_BUS access to the MCSP. As CFG_BUS accesses are fairly rare, occurring only during initial configuration cycles for the most part, this is not deemed a performance impact. The following sections outline the CFG_BUS and HIU interfaces for the MCSP block.

**Table 14-2**

| CFG_BUS Interface | | |
|---|---|---|
| Signal | HPI Direction | Function |
| MCSP_HIU_CLOCK (tied to CLKOUT2 at top level) | O | Port clock |
| CFG_BUS_MOD_SEL[4,3] | I | Selects 1 of 2 serial ports for register access |
| CFG_BUS_ADD[15:0] (decode as required) | I | Register Word Address |
| CFG_BUS_RNW | I | CFG_BUS_RNW = 0 for writes |
| CFG_BUS_WRITE_DATA[31:0] | I | Data for writes |
| CFG_BUS_READ_DATA[31:0] | O | Data being read |
| CFG_BUS_MOD_ACK[4,3] | O | Serial port acknowledge of register read/write |

The CFG_BUS provides the CPU core with access to the control registers of the serial ports, and may also be used for data transfer. It is preferred however that the data channel (AU-HIU interface) be used for data transfer. The CFG_BUS and the MSCP-HIU interface operate independently and concurrently.

CFG_BUS reads and writes are initiated by a transition of the CFG_BUS_MOD_SEL signal. At hardware reset the MOD_SEL signal will initialize to 0. Subsequent transitions either high or low indicate that a transfer is requested. The transitions are similar to those described earlier herein, in reference to Figures 13-6 through 13-9.

Each serial port module has its own MOD_SEL and MOD_ACK signal. The selects and acknowledges are address decoded inside the megamodule, so the serial ports are only responsible for their own register space decoding. The entire serial port register space (data and control registers) must be accessible via the CFG_BUS interface.

In addition to the CFG_BUS interface, the MCSP modules must also interface to an HIU, which will provide the bulk data movement to and from the serial ports. Note that the MCSP control registers are not accessible via the HIU interface. Read and write access via the HIU interface is only for the purposed of servicing the serial data streams of the ports.

The MCSP HIU will internally (to the megamodule) decode the appropriate MCSP addresses. The decoded accesses will be presented to the MCSP over the HIU interface. A complete address is provided to the MCSP; however, the LS bits may be ignored. Read accesses always access the appropriate MCSP RDR (read data register), while writes always access the appropriate WDR (write data register). The MCSPs are responsible however, for separating accesses from the HIU between one another. That is, since MCSP0 is located at 0x30000000, and MCSP1 is located at 0x34000000, bit 26 of the supplied HIU_MCSP_ADDR bus must be decoded to distinguish accesses to the MCSPs. The TC will natively not support crossing between these two spaces, so once a command becomes valid (see below) and a serial port is selected it remains selected until the command completes.

The HIU interface operates synchronously to CLKOUT2, just as the CFG_BUS interface does. This was done by design, so as to eliminate as many clock domains as possible. For a complete description of the HIU interface, please refer to the discussions earlier herein regarding Figure 4-5.

In addition to the data interfaces, the MCSP modules shall each provide 4 signals to the megamodule for the purposes of event generation, specifically XDMAs and interrupts to the CPU. The following signals are provided.

**Table 14-3**

| Timer Events | | | |
|---|---|---|---|
| Megamodule Signal | Sourcing Module | Function | Routes to inside megamodule... |
| MCSP0_REVT | MCSP0 | Receive event | XDMA controller |
| MCSP0_XEVT | MCSP0 | Transmit event | XDMA controller |
| MCSP0_RINT | MSCP0 | Receive interrupt | Interrupt selector |
| MSCP0_XINT | MSCP0 | Transmit interrupt | Interrupt selector |
| MCSP1_REVT | MCSP1 | Receive event | XDMA controller |
| MCSP1_XEVT | MCSP1 | Transmit event | XDMA controller |
| MCSP1_RINT | MSCP1 | Receive interrupt | Interrupt selector |
| MSCP1_XINT | MSCP1 | Transmit interrupt | Interrupt selector |

Note that each serial port provides only four events to the megamodule. An earlier serial port module included two additional events per serial port, to support the A-BIS serial standard (a European standard). The additional events are used for reload of coefficients during a block transfer. This type of operation can be provided using the XDMA controller without the additional event signals. Therefore, only the events listed above are provided to the megamodule. Additional event signals from the serial port modules may be left unconnected.

Two timers are instantiated outside the megamodule. These are for system timing functions such as real time interrupts and periodic watchdog counts typical in a DSP application.

The bandwidth to and from the timer ports is exceptionally low. Most often, the timers are configured for a periodic interrupt for real time counting, or perhaps used solely as a source for XDMA events. The timers do not transmit and receive any useful data, so access to the timers is limited solely to configuration and control cycles. Consequently, the interface from the megamodule to the core does not require an HIU design as other peripherals do. Rather, the timer modules are interfaced via the system CFG_BUS. Recall that other peripherals such as the EMIF and HPI include a CFG_BUS interface provided by their respective HIUs. The timer modules include an identical interface at the megamodule boundary, however, no HIU is included. The megamodule interface for the timer modules include the appropriate module select and acknowledge signals, plus any of the unused select and acknowledge signals, such that additional CFG_BUS devices can be implemented outside the megamodule.

The timer modules must connect to the megamodule CFG_BUS boundary interface. Architecturally, this interface represents the last CFG_BUS node on the bus, as the read and write datapaths from CFG_BUS are not passed back into the megamodule. Figure 15-1 is a block diagram of the CFG_BUS which illustrates this.

The timers are accessed via the CPU or TC through the CFG_BUS. The following address ranges are defined.

**Table 15-1**

| Timer Address Ranges | |
|---|---|
| | Timer Interface |
| Timer 0 | 0x01940000-0x0197FFFF |
| | Responds to/uses: cfg_bus_mod_sel[5] & cfg_bus_mod_ack[5] |
| Timer 1 | 0x01980000-0x019BFFFF |
| | Responds to/uses: cfg_bus_mod_sel[6] & cfg_bus_mod_ack[6] |

The CFG_BUS interface is described earlier herein.

The timer CFG_BUS interfaces are provided via the megamodule. Because the timers are synchronous to the provided clock input on the backend, no synchronizers are specifically required for these interfaces. The megamodule provides a CFG_BUS interface which operates at CLKOUT2 for the timer interfaces. CFG_BUS signals are registered for this final node at the megamodule boundary. Synchronization logic may also be included. Figures 15-2 and 15-3 show a CFG_BUS read and write cycle, respectively, for a timer.

In addition to the data interfaces, the timer modules each provide a signal to the megamodule for the purposes of event generation, specifically XDMAs and interrupts to the CPU. The following signals are provided.

**Table 15-2**

| Timer Events | | | |
|---|---|---|---|
| Megamodule Signal | Sourcing Module | Function | Routes to inside megamodule... |
| TIMER0_TINT | Timer 0 | Timer event | XDMA controller & interrupt selector |
| TIMER1_TINT | Timer 1 | Timer event | XDMA controller & interrupt selector |

Although the present invention and its advantages have been described in detail, it should be understood that various changes, substitutions and alterations can be made herein without departing from the spirit and scope of the invention.

## Claims

1. A microprocessor comprising:
a first set of functional units capable of performing parallel data operations,
a second set of functional units capable of performing parallel data operations,
a data interconnection path connecting said first and second sets of functional units, and
a plurality of cache levels interconnected with said first and second sets of functional units.
